# EUROPÄISCHE PATENTSCHRIFT

(11) **EP 3 405 518 B1**
(45) Veröffentlichungstag und Bekanntmachung des Hinweises auf die Patenterteilung: **06.11.2019**
(21) Anmeldenummer: 17700561.8
(22) Anmeldetag: 19.01.2017
(51) Int. Cl.: C08K 5/11, C08K 5/12

(54) **WEICHMACHER-ZUSAMMENSETZUNG, DIE ALIPHATISCHE DICARBONSÄUREESTER UND DIESTER, DIE UNTER 1,2-CYCLOHEXANDICARBONSÄUREESTERN UND TEREPHTHALSÄUREESTERN AUSGEWÄHLT SIND, ENTHÄLT**
PLASTICISER COMPOSITION CONTAINING ALIPHATIC DICARBOXYLIC ACID ESTERS AND DIESTERS SELECTED FROM 1,2-CYCLOHEXANE DICARBOXYLIC ACID ESTERS AND TEREPHTHALIC ACID ESTERS
COMPOSITION DE PLASTIFIANT CONTENANT DES ESTERS D'ACIDE DICARBOXYLIQUE ALIPHATIQUES ET DES DIESTERS CHOISIS PARMI LES ESTERS D'ACIDE 1,2-CYCLOHEXANE-DICARBOXYLIQUE ET LES ESTERS D'ACIDE TÉRÉPHTALIQUE

(30) Priorität: 20.01.2016 EP 16152103
(43) Veröffentlichungstag der Anmeldung: 28.11.2018
(73) Patentinhaber: BASF SE, 67056 Ludwigshafen (DE)
(72) Erfinder: PFEIFFER, Matthias, 67459 Boehl-Iggelheim (DE); BREITSCHEIDEL, Boris, 67165 Waldsee (DE); GRIMM, Axel, 67480 Edenkoben (DE); MORGENSTERN, Herbert, 67158 Ellerstadt (DE)
(74) Vertreter: BASF IP Association
(86) Internationale Anmeldenummer: PCT/EP2017/051018
(87) Internationale Veröffentlichungsnummer: WO 2017/125458

(56) Entgegenhaltungen:
- WO-A1-2012/069278
- RU-C1- 2 057 115
- US-B1- 7 973 194

## Beschreibung

### HINTERGRUND DER ERFINDUNG

Die vorliegende Erfindung betrifft eine Weichmacher-Zusammensetzung, die einen oder mehrere aliphatische(n) Dicarbonsäureester und einen oder mehrere Diester, der/die unter 1,2-Cyclohexandicarbonsäureestern und Terephthalsäureestern ausgewählt ist/sind, enthält, sowie Formmassen, die ein thermoplastisches Polymer oder ein Elastomer und eine solche Weichmacher-Zusammensetzung enthalten, und die Verwendung dieser Weichmacher-Zusammensetzungen und Formmassen.

### STAND DER TECHNIK

Zur Erzielung gewünschter Verarbeitungs- bzw. Anwendungseigenschaften werden einer Vielzahl von Kunststoffen so genannte Weichmacher zugesetzt, um diese weicher, flexibler und/oder dehnbarer zu machen. Im Allgemeinen dient der Einsatz von Weichmachern dazu, den thermoplastischen Bereich von Kunststoffen zu niedrigeren Temperaturen hin zu verschieben, um im Bereich niedriger Verarbeitungs- und Einsatztemperaturen die gewünschten elastischen Eigenschaften zu erhalten.

Polyvinylchlorid (PVC) gehört zu den mengenmäßig meist hergestellten Kunststoffen. Aufgrund seiner vielseitigen Anwendbarkeit findet es sich heutzutage in einer Vielzahl von Produkten des täglichen Lebens. PVC wird daher eine sehr große wirtschaftliche Bedeutung zugemessen. PVC ist ursprünglich ein bis ca. 80 °C harter und spröder Kunststoff, der durch Zugabe von Thermostabilisatoren und anderen Zuschlagstoffen als Hart-PVC (PVC-U) eingesetzt wird. Erst durch die Zugabe geeigneter Weichmacher gelangt man zu Weich-PVC (PVC-P), das für viele Anwendungszwecke verwendet werden kann, für die Hart-PVC ungeeignet ist.

Weitere wichtige thermoplastische Polymere in denen üblicherweise Weichmacher Anwendung finden sind z. B. Polyvinylbutyral (PVB), Homo- und Copolymere von Styrol, Polyacrylate, Polysulfide oder thermoplastische Polyurethane (PU).

Ob sich eine Substanz zur Anwendung als Weichmacher für ein bestimmtes Polymer eignet, hängt weitgehend von den Eigenschaften des weichzumachenden Polymers ab. Erwünscht sind in der Regel Weichmacher, die eine hohe Verträglichkeit mit dem weichzumachenden Polymer aufweisen, diesem gute thermoplastische Eigenschaften verleihen und nur eine geringe Neigung zum Abdampfen und/oder Ausschwitzen (hohe Permanenz) besitzen.

Auf dem Markt ist eine Vielzahl verschiedener Verbindungen zur Weichmachung von PVC und weiteren Kunststoffen erhältlich. Aufgrund ihrer guten Verträglichkeit mit dem PVC und ihrer vorteilhaften anwendungstechnischen Eigenschaften wurden in der Vergangenheit vielfach Phthalsäurediester mit Alkoholen unterschiedlicher chemischer Struktur als Weichmacher eingesetzt, wie z. B. Diethylhexylphthalat (DEHP), Diisononylphthalat (DINP) und Diisodecylphthalat (DIDP). Kurzkettige Phthalate, wie beispielsweise Dibutylphthalat (DBP), Diisobutylphthalat (DIBP), Benzylbutylphthalat (BBP) oder Diisoheptylphthalat (DIHP), werden auch als Schnellgelierer ("fast fuser") eingesetzt, z. B. bei der Herstellung von so genannten Plastisolen. Neben den kurzkettigen Phthalaten können auch Dibenzoesäureester wie Dipropylenglycoldibenzoate zum gleichen Zwecke eingesetzt werden. Eine weitere Klasse von Weichmachern mit guten Geliereigenschaften, sind beispielsweise die Phenyl- und Cresylester von Alkylsulfonsäuren, die unter dem Markennamen Mesamoll® erhältlich sind.

Bei Plastisolen handelt es sich zunächst um eine Suspension von feinpulvrigen Kunststoffen in flüssigen Weichmachern. Dabei ist die Lösungsgeschwindigkeit des Polymers in dem Weichmacher bei Umgebungstemperatur sehr gering. Erst beim Erwärmen auf höhere Temperaturen löst sich das Polymer merklich im Weichmacher. Dabei quellen und fusionieren die einzelnen isolierten Kunststoffaggregate zu einem dreidimensionalen hochviskosen Gel. Dieser Vorgang wird als Gelieren bezeichnet und findet ab einer gewissen Mindesttemperatur statt, die als Gelier- oder Lösetemperatur bezeichnet wird. Der Schritt der Gelierung ist nicht reversibel.

Da Plastisole in flüssiger Form vorliegen, werden diese sehr häufig zum Beschichten von verschiedensten Materialien, wie z. B. Textilien, Glasvliesen etc., eingesetzt. Dabei wird die Beschichtung sehr häufig aus mehreren Lagen aufgebaut.

In der Praxis wird bei der Verarbeitung von Plastisolprodukten deshalb oftmals so vorgegangen, dass eine Schicht Plastisol aufgebracht wird und direkt im Anschluss der Kunststoff, insbesondere PVC, mit dem Weichmacher oberhalb der Lösetemperatur angeliert wird, also eine feste Schicht, bestehend aus einer Mischung aus gelierten, teilweise gelierten und nicht-gelierten Kunststoffpartikeln entsteht. Auf diese angelierte Schicht wird dann die nächste Lage aufgebracht und nach Aufbringen der letzten Schicht der Gesamtaufbau durch Erwärmen auf höhere Temperaturen komplett zum vollständig gelierten Kunststoffprodukt verarbeitet.

Neben Plastisolen können auch trockene pulverförmige Mischungen aus Weichmacher und Kunststoffen hergestellt werden. Solche Dry-Blends, insbesondere auf Basis PVC, können dann bei erhöhten Temperaturen, z. B. durch Extrusion, zu einem Granulat weiterverarbeitet oder durch herkömmliche Formgebungsverfahren, wie Spritzgießen, Extrudieren oder Kalandrieren, zum vollständig gelierten Kunststoffprodukt verarbeitet werden.

Aufgrund steigender technischer und wirtschaftlicher Anforderungen an die Verarbeitung thermoplastischer Polymere und Elastomere, sind zudem Weichmacher erwünscht, die gute Geliereigenschaften besitzen.

Insbesondere bei der Herstellung und Verarbeitung von PVC-Plastisolen, beispielsweise zur Herstellung von PVC-Beschichtungen, ist es unter anderem wünschenswert, einen Weichmacher mit niedriger Geliertemperatur als Schnellgelierer ("fast fuser") zur Verfügung zu haben. Darüber hinaus ist auch eine hohe Lagerstabilität des Plastisols gewünscht, d. h. das nicht-gelierte Plastisol soll bei Umgebungstemperatur keinen oder nur einen geringen Viskositätsanstieg mit der Zeit aufweisen. Diese Eigenschaften sollen möglichst durch Zugabe eines geeigneten Weichmachers mit Schnellgeliereigenschaften erzielt werden, wobei sich der Einsatz von weiteren viskositätsverringernden Additiven und/oder von Lösungsmitteln erübrigen soll.

Allerdings weisen Schnellgelierer in der Regel oft eine verbesserungswürdige Verträglichkeit mit den additivierten Polymeren auf. Außerdem zeigen sie meistens eine hohe Flüchtigkeit sowohl bei der Verarbeitung als auch während des Gebrauchs der Endprodukte. Zudem wirkt sich der Zusatz von Schnellgelierern in vielen Fällen nachteilig auf die mechanischen Eigenschaften der Endprodukte aus. Zum Einstellen der gewünschten Weichmacher-Eigenschaften ist daher auch bekannt, Mischungen von Weichmachern einzusetzen, z. B. wenigstens einen Weichmacher, der gute thermoplastische Eigenschaften verleiht, aber weniger gut geliert, in Kombination mit wenigstens einem Schnellgelierer.

Des Weiteren besteht der Bedarf, zumindest einige der eingangs erwähnten Phthalat-Weichmacher zu ersetzen, da diese im Verdacht stehen, gesundheitsschädlich zu sein. Dies gilt speziell für sensible Anwendungsbereiche wie Kinderspielzeug, Lebensmittelverpackungen oder medizinische Artikel.

Im Stand der Technik sind verschiedene alternative Weichmacher mit unterschiedlichen Eigenschaften für diverse Kunststoffe und speziell für PVC bekannt.

Eine aus dem Stand der Technik bekannte Weichmacherklasse, die als Alternative zu Phthalaten eingesetzt werden kann, basiert auf Cyclohexanpolycarbonsäuren, wie sie in der WO 99/32427 beschrieben sind. Im Gegensatz zu ihren unhydrierten aromatischen Analoga sind diese Verbindungen toxikologisch unbedenklich und können auch in sensiblen Anwendungsbereichen eingesetzt werden.

RU 2057115 C1 beschreibt die Verwendung eines Estergemisches enthaltend Di-Cyclohexylester der Adipinsäure (30 bis 38 Gew.%), Bernsteinsäure (22 bis 24 Gew.%) und Glutarsäure (42 bis 46 Gew.%) als Weichmacher für PVC.

WO 00/78704 beschreibt ausgewählte Dialkylcyclohexan-1,3- und 1,4-dicarbonsäureester für die Verwendung als Weichmacher in synthetischen Materialien.

Die US 7973194 B1 lehrt die Verwendung von Dibenzylcyclohexan-1,4-dicarboxylat, Benzyl-butylcyclohexan-1,4-dicarboxylat und Dibutylcylcohexan-1,4-dicarboxylat als schnellgelierende Weichmacher für PVC.

Zum Einstellen der gewünschten Weichmacher-Eigenschaften ist auch bekannt, Mischungen von Weichmachern einzusetzen, z.B. wenigstens einen Weichmacher, der gute thermoplastische Eigenschaften verleiht, aber weniger gut geliert, in Kombination mit wenigstens einem Weichmacher der gute Geliereigenschaften verleiht.

WO 2012/069278 beschreibt die Verwendung einer Kombination von Diisononylterephthalat mit einem mittleren Verzweigungsgrad der Isononylgruppen von 1,15 bis 2,5 und einem weiteren Weichmacher, der die Verarbeitungstemperatur der Weichmacherzusammensetzung herabsetzt.

Die WO 03/029339 offenbart PVC-Zusammensetzungen enthaltend Cyclohexanpolycarbonsäureester sowie Mischungen aus Cyclohexanpolycarbonsäureester mit anderen Weichmachern. Als geeignete Weichmacher werden nicht-polymere Ester-Weichmacher, wie Terephthalsäureester, Phthalsäureester, Isophthalsäureester und Adipinsäureester genannt. Des Weiteren werden PVC-Zusammensetzungen offenbart enthaltend Mischungen von Cyclohexanpolycarbonsäureestern mit verschiedenen schnellgelierenden Weichmachern. Als geeignete schnellgelierende Weichmacher werden insbesondere verschiedene Benzoate, aromatische Sulfonsäureester, Citrate sowie Phosphate genannt.

Die EP 1354867 beschreibt isomere Benzoesäureisononylester, deren Gemische mit Phthalsäurealkylestern, Adipinsäurealkylestern oder Cyclohexandicarbonsäurealkylestern sowie ein Verfahren zu deren Herstellung. Weiterhin beschreibt die EP 1354867 die Verwendung der genannten Gemische als Weichmacher in Kunststoffen, insbesondere in PVC und PVC-Plastisolen. Um eine für Plastisolanwendungen ausreichend niedrige Geliertemperatur zu erreichen, müssen große Mengen dieser Benzoesäureisononylester eingesetzt werden. Zudem zeigen diese Weichmacher eine hohe Flüchtigkeit und deren Zusatz wirkt sich negativ auf die mechanischen Eigenschaften der Endprodukte aus.

Die EP 1415978 beschreibt isomerer Benzoesäureisodecylester, deren Gemische mit Phthalsäurealkylestern, Adipinsäurealkylestern oder Cyclohexandicarbonsäurealkylestern sowie die Verwendung dieser Gemische als Weichmacher für Polymere, insbesondere als Weichmacher für PVC und PVC-Plastisole. Um eine für Plastisolanwendungen ausreichend niedrige Geliertemperatur zu erreichen, müssen auch hier große Mengen dieser Benzoesäureisodecylester eingesetzt werden. Zudem zeigen diese Weichmacher ebenfalls eine hohe Flüchtigkeit und deren Zusatz wirkt sich negativ auf die mechanischen Eigenschaften der Endprodukte aus.

Die US 2419137 beschreibt die Synthese von Dicyclohexyladipat aus den Edukten Cyclohexanol und Adipinsäure durch Schwefelsäurekatalyse mit Kupfersulfatsalzen.

Die WO 14/166955 beschreibt unter anderem die Synthese von Dicyclohexyladipat durch Schwefelsäure-katalysierte Veresterung von Adipinsäure mit der doppelten Menge Cyclohexanol bei 140 °C. Darin werden allerdings keine Daten zur Verwendung von Dicyclohexyladipat als Weichmacher in PVC offenbart und insbesondere keine schnellgelierenden Eigenschaften dieser Verbindung offenbart.

In US 5321155 wird die Synthese von Dicyclohexyladipat unter Verwendung von Benzol, Cyclohexen, Adipinsäure und eines Katalysators offenbart. Anschließende Umsetzung des Reaktionsgemisches mit Salpetersäure führt zur Darstellung reiner Adipinsäure. Ziel dieser Patentschrift ist allerdings hier einen einfacheren Weg zu finden, um, ausgehend vom Reaktionsprodukt der einfachen Hydrierung von Benzol und ohne der Isolierung der Reaktionsprodukte und ohne über den Schritt der Umsetzung zu Cyclohexanol bzw. Cyclohexanon mit Hilfe einfacher Schritte zur Darstellung reiner Adipinsäure zu gelangen. US 5,321,155 offenbart keine Verwendung von Dicyclohexyladipat in PVC.

Im Handbuch "The Technology of Plasticizers", J. Kern Sears, Joseph R. Darby, 1982, John Wiley & Sons, Inc. wird Dicyclohexyladipat kurz erwähnt und lediglich wenige Daten in einer 67 phr enthaltenden Mischung mit PVC bzgl. Flüchtigkeit und Extraktionsverhalten offenbart.

EP 432124 B1 offenbart die Verwendung von Dicyclohexyladipat in Mischungen mit Polyvinylbutyral. Darin werden insbesondere die Vorteile einer Kombination von Mischestern der Adipinsäure mit Polyvinylbutyral im Vergleich zu den reinen Diestern, wie zum Beispiel Dicyclohexyladipat, offenbart. Diese Mischungen dienen als Zwischenschicht in Sicherheitsverglasungen und haben den Vorteil einer verbesserten UV-Beständigkeit, reduzierter Delaminierungs-Tendenz an den Kanten des Glas-Kunststoffverbundes und verbesserter Stoß-Aufnahme.

Der vorliegenden Erfindung liegt die Aufgabe zugrunde, eine Weichmacher-Zusammensetzung für thermoplastische Polymere und Elastomere zur Verfügung zu stellen, die eine Weichmacher-Zusammensetzung enthält, welche der Formmasse einerseits gute thermoplastische Eigenschaften sowie andererseits gute Geliereigenschaften, d. h. eine möglichst niedrige Geliertemperatur, verleiht. Die Weichmacher-Zusammensetzung soll sich dadurch insbesondere zur Bereitstellung von Plastisolen eignen. Die Weichmacher-Zusammensetzung soll eine hohe Verträglichkeit mit dem weichzumachenden Polymer aufweisen, eine hohe Permanenz besitzen und zudem toxikologisch unbedenklich sein. Außerdem soll die Weichmacher-Zusammensetzung eine geringe Flüchtigkeit sowohl bei der Verarbeitung als auch während des Gebrauchs der Endprodukte zeigen.

### ZUSAMMENFASSUNG DER ERFINDUNG

Diese Aufgabe wird überraschenderweise gelöst durch eine Weichmacher-Zusammensetzung, enthaltend
a) eine oder mehrere Verbindung(en) der allgemeinen Formel (I), 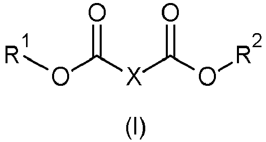 worin
   X für eine unverzweigte C₂-C₈-Alkylengruppe oder eine verzweigte C₆-C₈-Alkylengruppe oder eine unverzweigte oder verzweigte C₂-C₈-Alkenylen-gruppe, enthaltend wenigstens eine Doppelbindung, steht und
   R¹ und R² unabhängig voneinander ausgewählt sind unter C₅-C₇-Cycloalkyl, wobei die Cycloalkyl-Reste unabhängig voneinander entweder unsubstituiert sind oder mit mindestens einem C₁-C₁₀-Alkyl-Rest substituiert sind,
   und
b) eine oder mehrere eine Verbindung(en) der allgemeinen Formel (II), 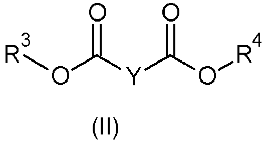 worin
   R³ und R⁴ unabhängig voneinander ausgewählt sind unter verzweigten und unverzweigten C₇-C₁₂-Alkylresten,
   Y ausgewählt ist unter den Gruppen der Formeln (Y.a) und (Y.b) 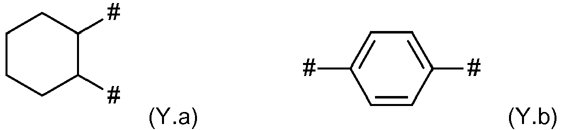 wobei # für die jeweiligen Anknüpfungspunkte zu den Estergruppen steht,
   mit der Maßgabe, dass die Weichmacher-Zusammensetzung keine Verbindung der Formel (I.a) 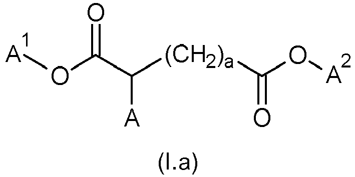 enthält, worin
   A für Methyl oder Ethyl steht,
   A¹ und A² unabhängig voneinander ausgewählt sind unter verzweigten und unverzweigten C₅-C₇-Cycloalkylresten, welche unsubstituiert sind oder mit wenigstens einem C₁-C₁₀-Alkylrest substituiert sind,
   a 1 oder 2 ist.

Ein erster bevorzugter Gegenstand ist eine Weichmacher-Zusammensetzung, enthaltend
a) eine oder mehrere Verbindung(en) der allgemeinen Formel (I), 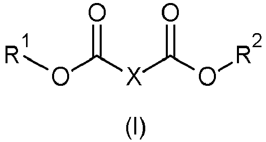 worin
   X für eine unverzweigte C₂-C₈-Alkylengruppe oder eine verzweigte C₆-C₈-Alkylengruppe oder eine unverzweigte oder verzweigte C₂-C₈-Alkenylen-gruppe, enthaltend wenigstens eine Doppelbindung, steht und
   R¹ und R² unabhängig voneinander ausgewählt sind unter C₅-C₇-Cycloalkyl, wobei die Cycloalkyl-Reste unabhängig voneinander entweder unsubstituiert sind oder mit mindestens einem C₁-C₁₀-Alkyl-Rest substituiert sind,
   und
b) eine oder mehrere Verbindung(en) der allgemeinen Formel (II.a), 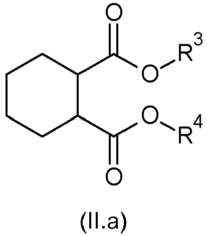 wobei
   R³ und R⁴ unabhängig voneinander ausgewählt sind unter verzweigten und unverzweigten C₄-C₁₂-Alkylresten, mit der Maßgabe, dass die Weichmacher-Zusammensetzung keine Verbindung der Formel (I.a) 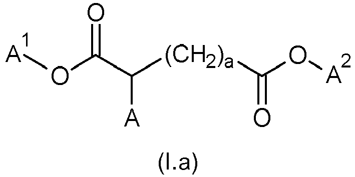 enthält, worin
   A für Methyl oder Ethyl steht,
   A¹ und A² unabhängig voneinander ausgewählt sind unter verzweigten und unverzweigten C₅-C₇-Cycloalkylresten, welche unsubstituiert sind oder mit wenigstens einem C₁-C₁₀-Alkylrest substituiert sind,
   a 1 oder 2 ist.

Ein zweiter bevorzugter Gegenstand ist eine Weichmacher-Zusammensetzung, enthaltend
a) eine oder mehrere Verbindung(en) der allgemeinen Formel (I), 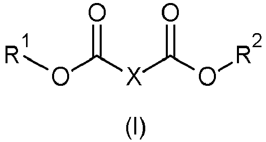 worin
   X für eine unverzweigte C₂-C₈-Alkylengruppe oder eine verzweigte C₆-C₈-Alkylengruppe oder eine unverzweigte oder verzweigte C₂-C₈-Alkenylen-gruppe, enthaltend wenigstens eine Doppelbindung, steht und
   R¹ und R² unabhängig voneinander ausgewählt sind unter C₅-C₇-Cycloalkyl, wobei die Cycloalkyl-Reste unabhängig voneinander entweder unsubstituiert sind oder mit mindestens einem C₁-C₁₀-Alkyl-Rest substituiert sind,
   und
b) eine oder mehrere Verbindung(en) der allgemeinen Formel (II.b), 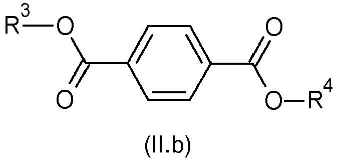 wobei
   R³ und R⁴ unabhängig voneinander ausgewählt sind unter verzweigten und unverzweigten C₄-C₁₂-Alkylresten. mit der Maßgabe, dass die Weichmacher-Zusammensetzung keine Verbindung der Formel (I.a) 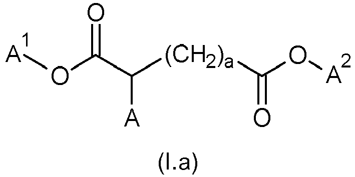 enthält, worin
   A für Methyl oder Ethyl steht,
   A¹ und A² unabhängig voneinander ausgewählt sind unter verzweigten und unverzweigten C₅-C₇-Cycloalkylresten, welche unsubstituiert sind oder mit wenigstens einem C₁-C₁₀-Alkylrest substituiert sind,
   a 1 oder 2 ist.

Ein weiterer Gegenstand der Erfindung sind Formmassen, die wenigstens ein thermoplastisches Polymer oder Elastomer und eine Weichmacher-Zusammensetzung, wie zuvor und im Folgenden definiert, enthalten.

Ein weiterer Gegenstand der Erfindung sind Plastisole, welche eine Weichmacher-Zusammensetzung, wie zuvor und im Folgenden definiert, enthalten.

Ein weiterer Gegenstand der Erfindung ist die Verwendung einer Weichmacher-Zusammensetzung, wie zuvor und im Folgenden definiert, als Weichmacher für thermoplastische Polymere, insbesondere Polyvinylchlorid (PVC), und Elastomere.

Ein weiterer Gegenstand der Erfindung ist die Verwendung einer Weichmacher-Zusammensetzung, wie zuvor und im Folgenden definiert, als Weichmacher in Plastisolen.

Ein weiterer Gegenstand der Erfindung ist die Verwendung dieser Formmassen zur Herstellung von Formkörpern und Folien.

### BESCHREIBUNG DER ERFINDUNG

Die erfindungsgemäßen Weichmacher-Zusammensetzungen weisen die folgenden Vorteile auf:
- Die erfindungsgemäßen Weichmacher-Zusammensetzungen zeichnen sich durch eine hohe Verträglichkeit mit den weichzumachenden Polymeren, insbesondere PVC, aus.
- Die erfindungsgemäßen Weichmacher-Zusammensetzungen besitzen eine hohe Permanenz. Die erfindungsgemäßen Weichmacher-Zusammensetzungen zeigen somit eine geringe Flüchtigkeit sowohl bei der Verarbeitung als auch während des Gebrauchs der Endprodukte.
- Die erfindungsgemäßen Weichmacher-Zusammensetzungen eignen sich in vorteilhafter Weise zur Erzielung einer Vielzahl unterschiedlichster und komplexer Verarbeitungs- und Anwendungseigenschaften von Kunststoffen.
- Die erfindungsgemäße Weichmacher-Zusammensetzung eignet sich in vorteilhafter Weise zur Herstellung von Plastisolen.
- Die in der erfindungsgemäßen Weichmacher-Zusammensetzung enthaltenen Verbindungen (I) eignen sich aufgrund ihrer äußerst niedrigen Lösetemperaturen nach DIN 53408 (Juli 1967) sehr gut als Schnellgelierer. Um die zum Gelieren eines thermoplastischen Polymers erforderliche Temperatur zu verringern und/oder dessen Geliergeschwindigkeit zu erhöhen, reichen bereits geringe Mengen der Verbindungen (I) in der erfindungsgemäßen Weichmacher-Zusammensetzung aus.
- Die erfindungsgemäßen Weichmacher-Zusammensetzungen eignen sich für die Verwendung zur Herstellung von Formkörpern und Folien für sensible Anwendungsbereiche, wie Medizinprodukte, Lebensmittelverpackungen, Produkte für den Innenraumbereich, beispielsweise von Wohnungen und Fahrzeugen, Spielzeuge, Kinderpflegeartikel, etc.
- Zur Herstellung der in den erfindungsgemäßen Weichmacher-Zusammensetzungen enthaltenen Verbindungen (I) können leicht zugängliche Edukte verwendet werden.
- Die Verfahren zur Herstellung der erfindungsgemäß eingesetzten Verbindungen (I) sind einfach und effizient, wodurch diese problemlos in großtechnischem Maßstab bereitgestellt werden können.

Wie zuvor erwähnt wurde überraschenderweise festgestellt, dass die in den erfindungsgemäß eingesetzten Weichmacher-Zusammensetzung enthaltenen Verbindungen der allgemeinen Formel (I) sehr niedrige Lösetemperaturen nach DIN 53408 aufweisen und sich diese dadurch speziell in Kombination mit Diestern der allgemeinen Formel (II), insbesondere mit 1,2-Cyclohexandicarbonsäureestern der allgemeinen Formel (II.a) und/oder mit Terephthalsäurediestern der allgemeinen Formel (II.b), zur Verbesserung des Gelierverhaltens von thermoplastischen Polymeren und Elastomeren eignen. Dabei sind bereits relativ geringe Mengen der Verbindungen (I) in der erfindungsgemäßen Weichmacher-Zusammensetzung ausreichend, um die zum Gelieren erforderliche Temperatur zu verringern und/oder die Geliergeschwindigkeit zu erhöhen.

In Kombination mit Verbindungen der allgemeinen Formel (I) können entweder Verbindungen der Formeln (II.a) oder (II.b) eingesetzt werden.

In Kombination mit Verbindungen der allgemeinen Formel (I) kann ebenso ein Gemisch von Verbindungen der Formeln (II.a) und (II.b) eingesetzt werden.

Im Rahmen der vorliegenden Erfindung wird unter einem Schnellgelierer bzw. "fast fuser" ein Weichmacher verstanden, der eine nach DIN 53408 bestimmte Lösetemperatur von unter 120 °C aufweist. Solche Schnellgelierer werden insbesondere zur Herstellung von Plastisolen verwendet.

Im Rahmen der vorliegenden Erfindung steht die zuvor oder im Folgenden verwendete Abkürzung phr (parts per hundred resin) für Gewichtsteile Weichmacher pro hundert Gewichtsteile Polymer.

Im Rahmen der Erfindung gibt das Präfix Cₙ-Cₘ die Anzahl der Kohlenstoffatome an, die ein damit bezeichnetes Molekül oder ein damit bezeichneter Rest aufweisen kann.

Der Ausdruck "C₅-C₇-Cycloalkyl" umfasst im Sinne der vorliegenden Erfindung gesättigte cyclische Kohlenwasserstoffe mit 5, 6 oder 7 Kohlenstoffatomen. Dazu zählen beispielsweise Cyclopentyl, Cyclohexyl, Cycloheptyl. Besonders bevorzugt ist Cyclohexyl.

Substituierte C₅-C₇-Cycloalkylgruppen können, in Abhängigkeit von ihrer Ringgröße, einen oder mehrere (z. B. 1, 2, 3, 4 oder 5) C₁-C₁₀-Alkylsubstituenten aufweisen. Dabei sind die C₁-C₁₀-Alkylsubstituenten jeweils unabhängig voneinander ausgewählt unter geradkettigen und verzweigten C₁-C₁₀-Alkylgruppen, beispielsweise Ethyl, Methyl, n-Propyl, Isopropyl, n-Butyl, Isobutyl, sec-Butyl, tert-Butyl, n-Pentyl, n-Hexyl, n-Heptyl, n-Octyl, n-Nonyl. n-Decyl und den Strukturisomere davon.

Beispiele für substituierte C₅-C₇-Cycloalkylgruppen sind 2-Methylcyclopentyl, 3-Methylcyclopentyl, 2-Methylcyclohexyl, 3-Methylcyclohexyl, 4-Methylcyclohexyl, 2-Methylcycloheptyl, 3-Methylcycloheptyl, 4-Methylcycloheptyl, 2-Ethylcyclopentyl, 3-Ethylcyclopentyl, 2-Ethylcyclohexyl, 3-Ethylcyclohexyl, 4-Ethylcyclohexyl, 2-Ethylcycloheptyl, 3-Ethylcycloheptyl, 4-Ethylcycloheptyl. Bevorzugt sind 2-Methylcyclopentyl, 2-Methylcyclohexyl und 2-Methylcycloheptyl.

Im Rahmen der vorliegenden Erfindung umfasst der Ausdruck "C₄-C₁₂-Alkyl" unverzweigte oder verzweigte Alkylgruppen mit 4 bis 12 Kohlenstoffatomen. Dazu zählen beispielsweise n-Butyl, Isobutyl, sec-Butyl, tert-Butyl, n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 1-Methylpentyl, 2-Methylpentyl, 1-Ethylbutyl, 2-Ethylbutyl, n-Heptyl, 1-Methylhexyl, 2-Methylhexyl, 1-Ethylpentyl, 2-Ethylpentyl, 1-Propylbutyl, 1-Ethyl-2-methylpropyl, n-Octyl, Isooctyl, 2-Ethylhexyl, n-Nonyl, Isononyl, 2-Propylhexyl, n-Decyl, Isodecyl, 2-Propylheptyl, n-Undecyl, Isoundecyl, n-Dodecyl, Isododecyl und die Strukturisomere davon.

Bevorzugt handelt es sich bei "C₄-C₁₂-Alkyl" um verzweigte oder unverzweigte C₇-C₁₂-Alkylgruppen. Vorzugsweise ist C₇-C₁₂-Alkyl ausgewählt unter n-Heptyl, 1-Methylhexyl, 2-Methylhexyl, 1-Ethylpentyl, 2-Ethylpentyl, 1-Propylbutyl, 1-Ethyl-2-methylpropyl, n-Octyl, Isooctyl, 2-Ethylhexyl, n-Nonyl, Isononyl, 2-Propylhexyl, n-Decyl, Isodecyl, 2-Propylheptyl, n-Undecyl, Isoundecyl, n-Dodecyl, Isododecyl und dergleichen. Bevorzugt handelt es sich bei "C₇-C₁₂-Alkyl" um verzweigte oder unverzweigte C₇-C₁₂-Alkylgruppen, insbesondere um verzweigte oder unverzweigte C₈-C₁₁-Alkylgruppen. Besonders bevorzugt steht C₈-C₁₁-Alkyl für n-Octyl, n-Nonyl, Isononyl, 2-Ethylhexyl, Isodecyl, 2-Propylheptyl, n-Undecyl oder Isoundecyl.

Im Rahmen der vorliegenden Erfindung umfasst der Ausdruck "C₁-C₁₀-Alkyl" geradkettige und verzweigte C₁-C₁₀-Alkylgruppen, beispielsweise Methyl, Ethyl, Propyl, Butyl, Pentyl, Hexyl, Heptyl, Octyl, Nonyl und Decyl.

Im Rahmen der vorliegenden Erfindung bezieht sich der Ausdruck "unverzweigte C₂-C₈-Alkylengruppe" auf unverzweigte zweiwertige Kohlenwasserstoffreste mit 2 bis 8 Kohlenstoffatomen. Dazu zählen beispielsweise 1,2-Ethylen, 1,2-Propylen, 1,3-Propylen, 1,4-Butylen, 1,5-Pentylen, 1,6-Hexylen, 1,7-Heptylen, und 1,8-Octylen.

Bevorzugt handelt es sich bei der unverzweigten C₂-C₈-Alkylengruppe um unverzweigte C₂-C₅-Alkylengruppen, beispielsweise um 1,2-Ethylen, 1,3-Propylen, 1,4-Butylen und 1,5-Pentylen.

Im Rahmen der vorliegenden Erfindung bezieht sich der Ausdruck "verzweigte C₆-C₈-Alkylengruppe" auf verzweigte zweiwertige Kohlenwasserstoffreste mit 6 bis 8 Kohlenstoffatomen. Dazu zählen beispielsweise 2-Methyl-1,5-pentylen, 3-Methyl-1,5-pentylen, 2,3-Dimethyl-1,4-butylen, 2-Methyl-1,6-hexylen, 3-Methyl-1,6-hexylene, 2-Ethyl-1,5-pentylen, 3-Ethyl-1,5-pentylen, 2,3-Dimethyl-1,5-pentylen, 2,4-Dimethyl-1,5-pentylen, 2-Methyl-1,7-heptylen, 3-Methyl-1,7-heptylen, 4-Methyl-1,7-heptylen, 2-Ethyl-1,6-hexylen, 3-Ethyl-1,6-hexylen, 2,3-Dimethyl-1,6-hexylen, 2,4-Dimethyl-1,6-hexylen und dergleichen.

Im Rahmen der vorliegenden Erfindung handelt es sich bei der "C₂-C₈-Alkenylen-gruppe" um zweiwertige Kohlenwasserstoffreste mit 2 bis 8 Kohlenstoffatomen, welche unverzweigt oder verzweigt sein können, wobei die Hauptkette wenigstens eine Doppelbindung aufweist.

Bevorzugt handelt es sich bei der "C₂-C₈-Alkenylengruppe" um verzweigte und unverzweigte C₂-C₆-Alkenylengruppen mit einer Doppelbindung. Dazu zählen beispielsweise Ethenylen, Propenylen, 1-Methyl-ethenylen, 1-Butenylen, 2-Butenylen, 1-Methylpropenylen, 2-Methylpropenylen, 1-Pentenylen, 2-Pentenylen, 1-Methyl-1-butenylen, 1-Methyl-2-butenylen, 1-Hexenylen, 2-Hexenylen, 3-Hexenylen, 1-Methyl-1-pentenylen, 1-Methyl-2-pentenylen, 1-Methyl-3-pentenylen, 1,4-Dimethyl-1-butenylen, 1,4-Dimethyl-2-butenylen und dergleichen. Besonders bevorzugt handelt es sich bei der "C₂-C₈-Alkenylengruppe" um unverzweigte C₂-C₄-Alkenylengruppen mit einer Doppelbindung.

Die Doppelbindungen in den Alkenylengruppen können unabhängig voneinander in der E- oder Z-Konfiguration oder als Mischung beider Konfigurationen vorliegen.

Bei den einfach oder mehrfach verzweigten Alkylengruppen und Alkenylengruppen kann das Kohlenstoffatom am Verzweigungspunkt oder die Kohlenstoffatome an den jeweiligen Verzweigungspunkten, unabhängig voneinander eine R- oder eine S-Konfiguration oder beide Konfigurationen zu gleichen oder unterschiedlichen Anteilen aufweisen.

### Verbindungen der Formel (I)

Vorzugsweise stehen die Reste R¹ und R² in der allgemeinen Formel (I) unabhängig voneinander für Cyclopentyl, Cyclohexyl, Cycloheptyl, 2-Methylcyclopentyl, 2-Methylcyclohexyl und 2-Methylcycloheptyl, bevorzugt für Cyclopentyl, Cyclohexyl, Cycloheptyl. Besonders bevorzugt sind die Reste R¹ und R² gleich. Ganz besonders bevorzugt stehen die Reste R¹ und R² in der allgemeinen Formel (I) beide für Cyclohexyl.

Vorzugsweise steht X in den Verbindungen der allgemeinen Formel (I) für eine unverzweigte C₂-C₅-Alkylengruppen oder eine unverzweigte C₂-C₄-Alkenylengruppen mit einer Doppelbindung.

Besonders bevorzugt steht X in den Verbindungen der allgemeinen Formel (I) für eine unverzweigte C₂-C₅-Alkylengruppe, beispielsweise 1,2-Ethylen, 1,3-Propylen, 1,4-Butylen und 1,5-Pentylen. Insbesondere steht X für 1,3-Propylen oder 1,4-Butylen.

Bevorzugte Verbindungen der allgemeinen Formel (I) sind ausgewählt unter
- Di-(cyclopentyl)-glutarat,
- Di-(cyclohexyl)-glutarat,
- Di-(cycloheptyl)-glutarat,
- Di-(2-Methylcyclopentyl)-glutarat,
- Di-(2-Methylcyclohexyl)-glutarat,
- Di-(2-Methylcycloheptyl)-glutarat,
- Di-(cyclopentyl)-adipat,
- Di-(cyclohexyl)-adipat,
- Di-(cycloheptyl)-adipat,
- Di-(2-Methylcyclopentyl)-adipat,
- Di-(2-Methylcyclohexyl)-adipat,
- Di-(2-Methylcycloheptyl)-adipat,
sowie Mischungen aus zwei oder mehr als zwei der zuvor genannten Verbindungen.

Eine besonders bevorzugte Verbindung der allgemeinen Formel (I) ist Dicyclohexyladipat.

### Verbindungen der allgemeinen Formel (II)

In den Verbindungen der allgemeinen Formel (II) ist Y ausgewählt unter den Gruppen der Formel (Y.a) und (Y.b) 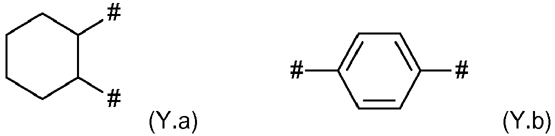 wobei # für die jeweiligen Anknüpfungspunkte zu den Estergruppen steht.

In einer bevorzugten Ausführung stehen in den Verbindungen der allgemeinen Formel (II), (II.a) und (II.b) die Reste R³ und R⁴ unabhängig voneinander für C₇-C₁₂-Alkyl, beispielsweise n-Heptyl, 1-Methylhexyl, 2-Methylhexyl, 1-Ethylpentyl, 2-Ethylpentyl, 1-Propylbutyl, 1-Ethyl-2-methylpropyl, n-Octyl, Isooctyl, 2-Ethylhexyl, n-Nonyl, Isononyl, 2-Propylhexyl, n-Decyl, Isodecyl, 2-Propylheptyl, n-Undecyl, Isoundecyl, n-Dodecyl, Isododecyl oder dergleichen. Besonders bevorzugt stehen R³ und R⁴ unabhängig voneinander für n-Octyl, n-Nonyl, Isononyl, 2-Ethylhexyl, Isodecyl, 2-Propylheptyl, n-Undecyl oder Isoundecyl.

In einer bevorzugten Ausführungsform sind in den Verbindungen der allgemeinen Formel (II) die Reste R³ und R⁴ gleich.

Bevorzugt stehen in den Verbindungen der allgemeinen Formel (II) die Reste R³ und R⁴ beide für C₇-C₁₂-Alkyl, besonders bevorzugt beide für 2-Ethylhexyl, beide für Isononyl oder beide für 2-Propylheptyl.

### Verbindungen der Formel (II.a)

In einer bevorzugten Ausführung stehen in den Verbindungen der Formel (II.a) die Reste R³ und R⁴ unabhängig voneinander für C₇-C₁₂-Alkyl, bevorzugt unabhängig voneinander für n-Octyl, n-Nonyl, Isononyl, 2-Ethylhexyl, Isodecyl, 2-Propylheptyl, n-Undecyl oder Isoundecyl, besonders bevorzugt für 2-Ethylhexyl, Isononyl oder 2-Propylheptyl, insbesondere Isononyl.

In einer weiteren bevorzugten Ausführung haben in den Verbindungen der Formel (II.a) die Reste R³ und R⁴ dieselbe Bedeutung.

Bevorzugt stehen in den Verbindungen der Formel (II.a) die Reste R³ und R⁴ beide für C₇-C₁₂-Alkyl, besonders bevorzugt beide für 2-Ethylhexyl, beide für Isononyl oder beide für 2-Propylheptyl, insbesondere für Isononyl.

Eine besonders bevorzugte Verbindung der Formel (II) ist Di-(isononyl)-1,2-cyclohexandicarboxylat.

### Verbindungen der Formel (II.b)

In einer bevorzugten Ausführung stehen in den Verbindungen der Formel (II.b) die Reste R³ und R⁴ unabhängig voneinander für C₇-C₁₂-Alkyl, besonders bevorzugt unabhängig voneinander für n-Octyl, n-Nonyl, Isononyl, 2-Ethylhexyl, Isodecyl, 2-Propylheptyl, n-Undecyl oder Isoundecyl, besonders bevorzugt für 2-Ethylhexyl, Isononyl oder 2-Propylheptyl, insbesondere 2-Ethylhexyl.

In einer bevorzugten Ausführungsform sind in den Verbindungen der Formel (II.b) die Reste R³ und R⁴ gleich.

Bevorzugt stehen in den Verbindungen der allgemeinen Formel (II.b) die Reste R³ und R⁴ beide für C₇-C₁₂-Alkyl, besonders bevorzugt beide für 2-Ethylhexyl, beide für Isononyl oder beide für 2-Propylheptyl, insbesondere für 2-Ethylhexyl.

Eine besonders bevorzugte Verbindung der Formel (II.b) ist Di-(2-ethylhexyl)-terephthalat.

### Besondere Ausführungsformen

Durch Anpassung der Anteile der Verbindungen (I) und (II) in der erfindungsgemäßen Weichmacher-Zusammensetzung können die Weichmacher-Eigenschaften auf den entsprechenden Verwendungszweck abgestimmt werden. Für den Einsatz in speziellen Anwendungsbereichen kann es gegebenenfalls hilfreich sein der erfindungsgemäßen Weichmacher-Zusammensetzungen weitere von den Verbindungen (I), (I.a) und (II) verschiedene Weichmacher hinzuzufügen. Aus diesem Grund kann die erfindungsgemäße Weichmacher-Zusammensetzung gegebenenfalls wenigstens einen weiteren von den Verbindungen (I) und (II) verschiedenen Weichmacher enthalten.

Der von den Verbindungen (I), (I.a) und (II) verschiedene zusätzliche Weichmacher ist ausgewählt unter Phthalsäuredialkylestern, Phthalsäurealkylaralkylestern, Trimellitsäuretrialkylestern, von Verbindungen (II) verschiedenen Estern von 1,2-Cyclohexandicarbonsäuren, von Verbindungen (II) verschiedene Terephthalsäuredialkylestern, 1,3- und 1,4-Cyclohexandicarbonsäurealkylester, von Verbindungen (II) verschiedenen Estern von Cyclohexandicarbonsäuren, Benzoesäurealkylestern, Dibenzoesäureestern von Glycolen, Hydroxybenzoesäureestern, Estern von gesättigten Monocarbonsäuren, von Verbindungen (I) und (I.a) verschiedene Ester gesättigter und ungesättigter Dicarbonsäuren, Amiden und Estern von aromatischen Sulfonsäuren, Alkylsulfonsäureestern, Glycerinestern, Isosorbidestern, Phosphorsäureestern, Citronensäuretriestern, Alkylpyrrolidonderivaten, 2,5-Furandicarbonsäurealkylestern, 2,5-Tetrahydrofurandicarbonsäurealkylestern, epoxidierten Pflanzenölen, epoxidierte Fettsäuremonoalkylester, Polyestern aus aliphatischen und/oder aromatischen Polycarbonsäuren mit wenigstens zweiwertigen Alkoholen.

Bevorzugte Phthalsäuredialkylester, die in vorteilhafter Weise mit den Verbindungen (I) und (II) gemischt werden können, weisen unabhängig voneinander 4 bis 13 C-Atome, bevorzugt 8 bis 13 C-Atome, in den Alkylketten auf. Ein geeigneter Phthalsäurealkylaralkylester ist beispielsweise Benzylbutylphthalat. Geeignete Trimellitsäuretrialkylester weisen bevorzugt unabhängig voneinander jeweils 4 bis 13 C-Atome, insbesondere 7 bis 11 C-Atome, in den Alkylketten auf. Geeignete Benzoesäurealkylester weisen bevorzugt unabhängig voneinander jeweils 7 bis 13 C-Atome, insbesondere 9 bis 13 C-Atome, in den Alkylketten auf. Geeignete Benzoesäurealkylester sind beispielsweise Isononylbenzoat, Isodecylbenzoat oder 2-Propylheptylbenzoat. Geeignete Dibenzoesäureester von Glycolen sind Diethylenglycoldibenzoat und Dibutylenglycoldibenzoat. Geeignete Ester von gesättigten Monocarbonsäuren sind beispielsweise Ester der Essigsäure, Buttersäure, Valeriansäure oder Milchsäure. Geeignete von den Verbindungen der Formel (I) und (I.a) verschiedene Ester von gesättigten Dicarbonsäuren sind beispielsweise Ester der Bernsteinsäure, der Azelainsäure und der Sebacinsäure. Geeignete von den Verbindungen der Formel (I) und (I.a) verschiedene Ester von ungesättigten Dicarbonsäuren sind beispielsweise Ester der Maleinsäure und der Fumarsäure mit 6 bis 13 C-Atomen in den Alkylresten. Geeignete Alkylsulfonsäureester weisen vorzugsweise einen Alkylrest mit 8 bis 22 C-Atomen auf. Dazu zählt beispielsweise der Phenyl- oder Cresylester der Pentadecylsulfonsäure. Geeignete Isosorbidester sind Isosorbiddiester, die bevorzugt mit C₈-C₁₃-Carbonsäuren verestert sind. Geeignete Phosphorsäureester sind Tri-2-ethylhexylphosphat, Trioctylphosphat, Triphenylphosphat, Isodecyldiphenylphosphat, Bis-(2-ethylhexyl)phenyl-phosphat und 2-Ethylhexyldiphenylphosphat. In den Citronensäuretriestern kann die OH-Gruppe in freier oder carboxylierter Form, bevorzugt acetyliert, vorliegen. Die Alkylreste der acetylierten Citronensäuretriester weisen bevorzugt unabhängig voneinander 4 bis 8 C-Atome, insbesondere 6 bis 8 C-Atome, auf. Geeignet sind Alkylpyrrolidonderivate mit Alkylresten von 4 bis 18 C-Atomen. Geeignete 2,5-Furandicarbonsäuredialkylester weisen unabhängig voneinander jeweils 7 bis 13 C-Atome, bevorzugt 8 bis 12 C-Atome, in den Alkylketten auf. Geeignete 2,5-Tetrahydrofurandicarbonsäuredialkylester weisen unabhängig voneinander jeweils 7 bis 13 C-Atome, bevorzugt 8 bis 12 C-Atome, in den Alkylketten auf. Ein geeignetes epoxidiertes Pflanzenöl ist beispielsweise epoxidiertes Sojaöl, z.B. erhältlich von der Firma Galata-Chemicals, Lampertheim, Germany. Epoxidierte Fettsäuremonoalkylester, beispielsweise erhältlich unter dem Handelsnamen reFlex™ der Firma PolyOne, USA, sind auch geeignet. Bei den Polyestern aus aliphatischen und aromatischen Polycarbonsäuren handelt es sich bevorzugt um Polyester der Adipinsäure mit mehrwertigen Alkoholen, insbesondere Dialkylenglycolpolyadipate mit 2 bis 6 Kohlenstoffatomen im Alkylenrest.

In allen zuvor genannten Fällen können die Alkylreste jeweils linear oder verzweigt und jeweils gleich oder verschieden sein. Auf die eingangs gemachten allgemeinen Ausführungen zu geeigneten und bevorzugten Alkylresten wird Bezug genommen.

Der Gehalt des wenigstens einen weiteren von den Verbindungen (I) und (II) verschiedenen Weichmachers in der erfindungsgemäßen Weichmacher-Zusammensetzung beträgt üblicherweise 0 bis 50 Gew.-%, bevorzugt 0 bis 40 Gew.-%, besonders bevorzugt 0 bis 30 Gew.-% und insbesondere 0 bis 25 Gew.-%, bezogen auf die Gesamtmenge des wenigstens einen weiteren Weichmachers und der Verbindungen (I) und (II) in der Weichmacher-Zusammensetzung.

Falls ein weiterer Weichmacher vorhanden ist, dann vorzugsweise in einer Konzentration von wenigstens 0,01 Gew.-%, bevorzugt wenigstens 0,1 Gew.-%, bezogen auf die Gesamtmenge des wenigstens einen weiteren Weichmachers und der Verbindungen (I) und (II) in der Weichmacher-Zusammensetzung.

In einer bevorzugten Ausführungsform enthält die erfindungsgemäße Weichmacher-Zusammensetzung keinen weiteren von den Verbindungen (I) und (II) verschiedenen Weichmacher.

Bevorzugt beträgt der Gehalt an Verbindungen der allgemeinen Formel (I) in der erfindungsgemäßen Weichmacher-Zusammensetzung 1 bis 70 Gew.-%, besonders bevorzugt 2 bis 50 Gew.-% und insbesondere 3 bis 30 Gew.-%, bezogen auf die Gesamtmenge der Verbindungen (I) und (II) in der Weichmacher-Zusammensetzung.

Bevorzugt beträgt der Gehalt der Verbindungen der allgemeinen Formel (II) in der erfindungsgemäßen Weichmacher-Zusammensetzung 30 bis 99 Gew.-%, besonders bevorzugt 50 bis 98 Gew.-% und insbesondere 70 bis 97 Gew.-%, bezogen auf die Gesamtmenge der Verbindungen (I) und (II) in der Weichmacher-Zusammensetzung.

In der erfindungsgemäßen Weichmacher-Zusammensetzung liegt das Gewichtsverhältnis zwischen Verbindungen der allgemeinen Formel (I) und Verbindungen der allgemeinen Formel (II) bevorzugt im Bereich von 1 : 100 bis 2 : 1, besonders bevorzugt im Bereich von 1 : 50 bis 1 : 1 und insbesondere im Bereich von 1 : 35 bis 1 : 2.

### Formmassen

Ein weiterer Gegenstand der vorliegenden Erfindung betrifft eine Formmasse, enthaltend wenigstens ein Polymer und eine Weichmacher-Zusammensetzung wie zuvor definiert.

In einer bevorzugten Ausführungsform handelt es sich bei dem in der Formmasse enthaltenen Polymer um ein thermoplastisches Polymer.

Als thermoplastische Polymere kommen alle thermoplastisch verarbeitbaren Polymeren in Frage. Insbesondere sind diese thermoplastischen Polymere ausgewählt unter:
- Homo- oder Copolymere, die in einpolymerisierter Form wenigstens ein Monomer enthalten, das ausgewählt ist unter C₂-C₁₀ Monoolefinen, wie beispielsweise Ethylen oder Propylen, 1,3-Butadien, 2-Chlor-1,3-Butadien, Vinylalkohol und dessen C₂-C₁₀-Alkylestern, Vinylchlorid, Vinylidenchlorid, Vinylidenfluorid, Tetrafluorethylen, Glycidylacrylat, Glycidylmethacrylat, Acrylaten und Methacrylaten mit Alkoholkomponenten von verzweigten und unverzweigten C₁-C₁₀-Alkoholen, Vinylaromaten wie beispielsweise Styrol, Acrylnitril, Methacrylnitril, α ,β-ethylenisch ungesättigten Mono- und Dicarbonsäuren, und Maleinsäureanhydrid;
- Homo- und Copolymere von Vinylacetalen;
- Polyvinylestern;
- Polycarbonaten (PC);
- Polyestern, wie Polyalkylenterephthalaten, Polyhydroxyalkanoaten (PHA), Polybutylensuccinaten (PBS), Polybutylensuccinatadipaten (PBSA);
- Polyethern;
- Polyetherketonen;
- thermoplastischen Polyurethanen (TPU);
- Polysulfiden;
- Polysulfonen;
- Polyethersulfonen;
- Cellulosealkylestern;
und Mischungen davon.

Zu nennen sind beispielsweise Polyacrylate mit gleichen oder verschiedenen Alkoholresten aus der Gruppe der C₄-C₈-Alkohole, besonders des Butanols, Hexanols, Octanols und 2-Ethylhexanols, Polymethylmethacrylat (PMMA), Methylmethacrylat-Butylacrylat-Copolymere, Acrylnitril-Butadien-Styrol-Copolymere (ABS), Ethylen-Propylen-Copolymere, Ethylen-Propylen-Dien-Copolymere (EPDM), Polystyrol (PS), Styrol-Acrylnitril-Copolymere (SAN), Acrylnitril-Styrol-Acrylat (ASA), Styrol-Butadien-Methylmethacrylat-Copolymere (SBMMA), Styrol-Maleinsäureanhydrid-Copolymere, Styrol-Methacrylsäure-Copolymere (SMA), Polyoxymethylen (POM), Polyvinylalkohol (PVAL), Polyvinylacetat (PVA), Polyvinylbutyral (PVB), Polycaprolacton (PCL), Polyhydroxybuttersäure (PHB), Polyhydroxyvaleriansäure (PHV), Polymilchsäure (PLA), Ethylcellulose (EC), Celluloseacetat (CA), Cellulosepropionat (CP) oder CelluloseAcetat/Butyrat (CAB).

Bevorzugt handelt es sich bei dem in der erfindungsgemäßen Formmasse enthaltenen wenigstens einem thermoplastischen Polymer um Polyvinylchlorid (PVC), Polyvinylbutyral (PVB), Homo- und Copolymere von Vinylacetat, Homo- und Copolymere von Styrol, Polyacrylate, thermoplastische Polyurethane (TPU) oder Polysulfide.

Je nachdem welches thermoplastische Polymer oder thermoplastische Polymergemisch in der Formmasse enthalten ist, werden unterschiedliche Mengen Weichmacher eingesetzt. In der Regel beträgt der Gesamtweichmachergehalt in der Formmasse 0,5 bis 300 phr (parts per hundred resin = Gewichtsteile pro hundert Gewichtsteile Polymer), bevorzugt 0,5 bis 130 phr, besonders bevorzugt 1 bis 100 phr.

Im Speziellen handelt es sich bei dem in der erfindungsgemäßen Formmasse enthaltenen wenigstens einem thermoplastischen Polymer um Polyvinylchlorid (PVC).

Polyvinylchlorid wird durch Homopolymerisation von Vinylchlorid erhalten. Das erfindungsgemäß verwendete Polyvinylchlorid (PVC) kann beispielsweise durch Suspensionspolymerisation, Mikrosuspensionspolymerisation, Emulsionspolymerisation oder Massenpolymerisation hergestellt werden. Die Herstellung von PVC durch Polymerisation von Vinylchlorid sowie Herstellung und Zusammensetzung von weichgemachtem PVC sind beispielsweise beschrieben in "Becker/Braun, Kunststoff-Handbuch, Band 2/1 : Polyvinylchlorid", 2. Auflage, Carl Hanser Verlag, München.

Der K-Wert, der die Molmasse des PVC charakterisiert und nach DIN EN ISO 1628-2 (November 1999) bestimmt wird, liegt für das erfindungsgemäß weichgemachte PVC meist zwischen 57 und 90, bevorzugt zwischen 61 und 85, insbesondere zwischen 64 und 80.

Im Rahmen der Erfindung liegt der Gehalt an PVC in den erfindungsgemäßen Formmassen bei 20 bis 95 Gew.-%, bevorzugt bei 40 bis 90 Gew.-% und insbesondere bei 45 bis 85 Gew.-%.

Handelt es sich bei dem thermoplastischen Polymer in den erfindungsgemäßen Formmassen um Polyvinylchlorid beträgt der Gesamtweichmachergehalt in der Formmasse 1 bis 300 phr, bevorzugt 5 bis 150 phr, besonders bevorzugt 10 bis 130 phr und insbesondere 15 bis 120 phr.

Ein weiterer Gegenstand der vorliegenden Erfindung betrifft Formmassen, enthaltend wenigstens ein Elastomer und wenigstens eine Weichmacher-Zusammensetzung wie zuvor definiert.

Bevorzugt handelt es sich bei dem in den erfindungsgemäßen Formmassen enthaltenen Elastomer um wenigstens einen natürlichen Kautschuk (NR), oder wenigstens einen auf synthetischem Wege hergestellten Kautschuk, oder Mischungen davon. Bevorzugte auf synthetischem Wege hergestellte Kautschuke sind beispielsweise Polyisopren-Kautschuk (IR), Styrol-Butadien-Kautschuk (SBR), Butadien-Kautschuk (BR), Nitril-Butadien-Kautschuk (NBR) oder Chloropren-Kautschuk (CR).

Bevorzugt sind Kautschuke oder Kautschuk-Mischungen, welche sich mit Schwefel vulkanisieren lassen.

Im Rahmen der Erfindung liegt der Gehalt an Elastomer in den erfindungsgemäßen Formmassen bei 20 bis 95 Gew.-%, bevorzugt bei 45 bis 90 Gew.-% und insbesondere bei 50 bis 85 Gew.-%.

Im Rahmen der Erfindung können die Formmassen, welche wenigstens ein Elastomer enthalten, zusätzlich zu den vorstehenden Bestandteilen andere geeignete Zusatzstoffe enthalten. Beispielsweise können verstärkende Füllstoffe, wie Ruß oder Siliciumdioxid, weitere Füllstoffe, ein Methylendonor, wie Hexamethylentetramin (HMT), ein Methylenakzeptor, wie mit Cardanol (aus Cashew-Nüssen) modifizierte Phenolharze, ein Vulkanisier- oder Vernetzungsmittel, ein Vulkanisier- oder Vernetzungsbeschleuniger, Aktivatoren, verschiedene Typen von Öl, Alterungsschutzmittel und andere verschiedene Zusatzstoffe, die beispielsweise in Reifen- und anderen Kautschukmassen eingemischt werden, enthalten sein.

Handelt es sich bei dem Polymer in den erfindungsgemäßen Formmassen um Kautschuke, beträgt der Gehalt der erfindungsgemäßen Weichmacher-Zusammensetzung, wie oben definiert, in der Formmasse 1 bis 60 phr, bevorzugt 1 bis 40 phr, besonders bevorzugt 2 bis 30 phr.

### Zusatzstoffe Formmasse

Im Rahmen der Erfindung können die Formmassen, enthaltend wenigstens ein thermoplastisches Polymer, andere geeignete Zusatzstoffe enthalten. Beispielsweise können Stabilisatoren, Gleitmittel, Füllstoffe, Pigmente, Flamminhibitoren, Lichtstabilisatoren, Treibmittel, polymere Verarbeitungshilfsmittel, Schlagzähverbesserer, optische Aufheller, Antistatika oder Biostabilisatoren enthalten sein.

Im Folgenden werden einige geeignete Zusatzstoffe näher beschrieben. Die aufgeführten Beispiele stellen jedoch keine Einschränkung der erfindungsgemäßen Formmassen dar, sondern dienen lediglich der Erläuterung. Alle Angaben zum Gehalt sind in Gew.-%-Angaben bezogen auf die gesamte Formmasse.

Als Stabilisatoren kommen alle üblichen PVC-Stabilisatoren in fester und flüssiger Form in Betracht, beispielsweise übliche Ca/Zn-, Ba/Zn-, Pb- oder Sn-Stabilisatoren sowie auch säurebindende Schichtsilikate, wie Hydrotalcit.

Die erfindungsgemäßen Formmassen können einen Gehalt an Stabilisatoren von 0,05 bis 7 %, bevorzugt 0,1 bis 5 %, besonders bevorzugt von 0,2 bis 4 % und insbesondere von 0,5 bis 3 % aufweisen.

Gleitmittel vermindern die Haftung zwischen den zu verarbeitenden Kunststoffen und Metalloberflächen und dienen dazu, Reibungskräften beim Mischen, Plastifizieren und Verformen entgegenwirken.

Als Gleitmittel können die erfindungsgemäßen Formmassen alle die für die Verarbeitung von Kunststoffen üblichen Gleitmittel enthalten. In Betracht kommen beispielsweise Kohlenwasserstoffe, wie Öle, Paraffine und PE-Wachse, Fettalkohole mit 6 bis 20 Kohlenstoffatomen, Ketone, Carbonsäuren, wie Fettsäuren und Montansäure, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Die erfindungsgemäßen Formmassen können einen Gehalt an Gleitmittel von 0,01 bis 10 %, bevorzugt 0,05 bis 5 %, besonders bevorzugt von 0,1 bis 3 % und insbesondere von 0,2 bis 2 % aufweisen.

Füllstoffe beeinflussen vor allem die Druck-, Zug-, und Biegefestigkeit sowie die Härte und Wärmeformbeständigkeit von weichgemachtem PVC in positiver Weise.

Im Rahmen der Erfindung können die Formmassen auch Füllstoffe, wie beispielsweise Ruß und andere anorganische Füllstoffe, wie natürliche Calciumcarbonate, beispielsweise Kreide, Kalkstein und Marmor, synthetische Calciumcarbonate, Dolomit, Silikate, Kieselsäure, Sand, Diatomeenerde, Aluminiumsilikate, wie Kaolin, Glimmer und Feldspat enthalten. Vorzugsweise werden als Füllstoffe Calciumcarbonate, Kreide, Dolomit, Kaolin, Silikate, Talkum oder Ruß eingesetzt.

Die erfindungsgemäßen Formmassen können einen Gehalt an Füllstoffen von 0,01 bis 80 %, bevorzugt 0,1 bis 60 %, besonders bevorzugt von 0,5 bis 50 % und insbesondere von 1 bis 40 % aufweisen.

Die erfindungsgemäßen Formmassen können auch Pigmente enthalten, um das erhaltene Produkt an unterschiedliche Einsatzmöglichkeiten anzupassen.

Im Rahmen der vorliegenden Erfindung können sowohl anorganische Pigmente als auch organische Pigmente eingesetzt werden. Als anorganische Pigmente können beispielsweise Kobalt-Pigmente, beispielsweise CoO/Al₂O₃, und Chrom-Pigmente, beispielsweise Cr₂O₃, verwendet werden. Als organische Pigmente kommen beispielsweise Monoazopigmente, kondensierte Azopigmente, Azomethinpigmente, Anthrachinonpigmente, Chinacridone, Phthalocyaninpigmente, Dioxazinpigmente und Diketopyrrolopyrrol-Pigmente in Betracht.

Die erfindungsgemäßen Formmassen können einen Gehalt an Pigmenten von 0,01 bis 10 %, bevorzugt 0,05 bis 5 %, besonders bevorzugt von 0,1 bis 3 % und insbesondere von 0,5 bis 2 % aufweisen.

Um die Entflammbarkeit zu vermindern und die Rauchentwicklung beim Verbrennen zu verringern, können die erfindungsgemäßen Formmassen auch Flamminhibitoren enthalten.

Als Flamminhibitoren können beispielsweise Antimontrioxid, Phosphatester, Chlorparaffin, Aluminiumhydroxid oder Borverbindungen verwendet werden.

Die erfindungsgemäßen Formmassen können einen Gehalt an Flamminhibitoren von 0,01 bis 10 %, bevorzugt 0,1 bis 8 %, besonders bevorzugt von 0,2 bis 5 % und insbesondere von 0,5 bis 2 % aufweisen.

Um aus den erfindungsgemäßen Formmassen hergestellte Artikel vor einer Schädigung im Oberflächenbereich durch den Einfluss von Licht zu schützen, können die Formmassen auch Lichtstabilisatoren wie zum Beispiel UV-Absorber enthalten.

Als Lichtstabilisatoren können im Rahmen der vorliegenden Erfindung beispielsweise Hydroxybenzophenone, Hydroxyphenylbenzotriazole, Cyanoacrylate oder sogenannte "hindered amine light stabilizers" (HALS), wie die Derivate von 2,2,6,6-Tetramethylpiperidin, eingesetzt werden.

Die erfindungsgemäßen Formmassen können einen Gehalt an Lichtstabilisatoren, z. B. UV-Absorber, von 0,01 bis 7 %, bevorzugt 0,1 bis 5 %, besonders bevorzugt von 0,2 bis 4 % und insbesondere von 0,5 bis 3 % aufweisen.

### Plastisole

Ein weiterer Gegenstand der Erfindung betrifft ein Plastisol, enthaltend eine Weichmacher-Zusammensetzung wie zuvor definiert.

Bei Plastisolen handelt es sich im Rahmen dieser Erfindung um eine Suspension von feinpulvrigen Kunststoffen in der erfindungsgemäßen flüssigen Weichmacher-Zusammensetzung. Geeignete Kunststoffe sind die zuvor genannten Polymere, insbesondere thermoplastische Polymere. Auf geeignete und bevorzugte Polymere wird hier in vollem Umfang auf die unter Formmassen genannten Bezug genommen.

Die Plastisole liegen üblicherweise in flüssiger Form vor. Die Plastisole gelieren unter bestimmten Voraussetzungen irreversibel.

Bevorzugte Plastisole enthalten als Polymer PVC. Eine spezielle Ausführung sind Plastisole, die PVC als alleinige Polymerkomponente enthalten.

### Herstellung der Verbindungen der allgemeinen Formel (I)

Im Folgenden wird die Herstellung der in den erfindungsgemäßen Weichmacher-Zusammensetzungen enthaltenen Verbindungen der allgemeinen Formel (I) beschrieben.

### Veresterung

Die Herstellung der Ester-Verbindungen der allgemeinen Formel (I) kann durch Veresterung entsprechender aliphatischer Dicarbonsäuren mit den entsprechenden aliphatischen Alkoholen nach üblichen dem Fachmann bekannten Verfahren erfolgen. Dazu zählt die Umsetzung wenigstens einer Alkoholkomponente, ausgewählt aus den Alkoholen R¹-OH bzw. R²-OH, mit einer Dicarbonsäure der allgemeinen Formel HO-C(=O)-X-C(=O)-OH oder einem geeigneten Derivat davon. Geeignete Derivate sind z. B. die Säurehalogenide und Säureanhydride. Ein bevorzugtes Säurehalogenid ist das Säurechlorid. Als Veresterungskatalysatoren können die dafür üblichen Katalysatoren eingesetzt werden, z. B. Mineralsäuren, wie Schwefelsäure und Phosphorsäure, organische Sulfonsäuren, wie Methansulfonsäure und p-Toluolsulfonsäure, amphotere Katalysatoren, insbesondere Titan-, Zinn(IV)- oder Zirkoniumverbindungen, wie Tetraalkoxytitane, z. B. Tetrabutoxytitan, und Zinn(IV)-oxid. Das bei der Reaktion entstehende Wasser kann durch übliche Maßnahmen, z. B. destillativ, entfernt werden. Die WO 02/38531 beschreibt ein Verfahren zur Herstellung von Estern multibasischer Carbonsäuren, bei dem man a) in einer Reaktionszone ein im Wesentlichen aus der Säurekomponente oder einem Anhydrid davon und der Alkoholkomponente bestehendes Gemisch in Gegenwart eines Veresterungskatalysators zum Sieden erhitzt, b) die Alkohol und Wasser enthaltenden Dämpfe rektifikativ in eine alkoholreiche Fraktion und eine wasserreiche Fraktion auftrennt, c) die alkoholreiche Fraktion in die Reaktionszone zurückführt und die wasserreiche Fraktion aus dem Verfahren ausleitet. Das in der WO 02/38531 beschriebene Verfahren sowie die darin offenbarten Katalysatoren eignen sich ebenfalls für die Veresterung.

Der Veresterungskatalysator wird in einer wirksamen Menge eingesetzt, die üblicherweise im Bereich von 0,05 bis 10 Gew.-%, vorzugsweise 0,1 bis 5 Gew.-%, bezogen auf die Summe von Säurekomponente (oder Anhydrid) und Alkoholkomponente, liegt.

Weitere geeignete Verfahren zur Herstellung der Verbindungen der allgemeinen Formel (I) mittels Veresterung sind beispielsweise in der US 6,310,235, US 5,324,853, DE-A 2612355 (Derwent Abstract Nr. DW 77-72638 Y) oder DE-A 1945359 (Derwent Abstract Nr. DW 73-27151 U). Auf die genannten Dokumente wird in vollem Umfang Bezug genommen.

In der Regel erfolgt die Veresterung der Dicarbonsäure HO-C(=O)-X-C(=O)-OH in Anwesenheit der oben beschriebenen Alkoholkomponenten R¹-OH bzw. R²-OH mittels einer organischen Säure oder Mineralsäure, insbesondere konzentrierter Schwefelsäure. Dabei wird die Alkoholkomponente vorteilhafterweise wenigstens in der doppelten stöchiometrischen Menge, bezogen auf die Menge an Dicarbonsäure HO-C(=O)-X-C(=O)-OH oder einem geeigneten Derivat davon in der Reaktionsmischung, eingesetzt.

Die Veresterung kann in der Regel bei Umgebungsdruck oder vermindertem oder erhöhtem Druck erfolgen. Bevorzugt wird die Veresterung bei Umgebungsdruck oder vermindertem Druck durchgeführt.

Die Veresterung kann in Abwesenheit eines zugesetzten Lösungsmittels oder in Gegenwart eines organischen Lösungsmittels durchgeführt werden.

Falls die Veresterung in Gegenwart eines Lösungsmittels durchgeführt wird, handelt es sich dabei vorzugsweise um ein unter den Reaktionsbedingungen inertes organisches Lösungsmittel. Dazu gehören beispielsweise aliphatische Kohlenwasserstoffe, halogenierte aliphatische Kohlenwasserstoffe, aromatische und substituierte aromatische Kohlenwasserstoffe oder Ether. Bevorzugt ist das Lösungsmittel ausgewählt unter Pentan, Hexan, Heptan, Ligroin, Petrolether, Cyclohexan, Dichlormethan, Trichlormethan, Tetrachlormethan, Benzol, Toluol, Xylol, Chlorbenzol, Dichlorbenzolen, Dibutylether, THF, Dioxan und Mischungen davon.

Die Veresterung wird üblicherweise in einem Temperaturbereich von 50 bis 250 °C durchgeführt. Ist der Veresterungskatalysator ausgewählt unter organischen Säuren oder Mineralsäuren, wird die Veresterung üblicherweise in einem Temperaturbereich von 50 bis 160 °C durchgeführt. Ist der Veresterungskatalysator ausgewählt unter amphoteren Katalysatoren, wird die Veresterung üblicherweise in einem Temperaturbereich von 100 bis 250 °C durchgeführt.

Die Veresterung kann in Abwesenheit oder in Gegenwart eines Inertgases erfolgen. Unter einem Inertgas wird in der Regel ein Gas verstanden, welches unter den gegebenen Reaktionsbedingungen keine Reaktionen mit den an der Reaktion beteiligten Edukten, Reagenzien, Lösungsmitteln oder den entstehenden Produkten eingeht.

### Umesterung

Die Herstellung der Ester-Verbindungen der allgemeinen Formel (I) kann durch Umesterung von Estern, die von den Estern der allgemeinen Formel (I) verschieden sind, mit den entsprechenden aliphatischen Alkoholen nach üblichen dem Fachmann bekannten Verfahren erfolgen. Dazu zählt die Umsetzung der Di-(C₁-C₂)-Alkylester der Dicarbonsäuren HO-C(=O)-X-C(=O)-OH mit wenigstens einem Alkohol R¹-OH bzw. R²-OH oder Gemischen davon in Anwesenheit eines geeigneten Umesterungskatalysators.

Als Umesterungskatalysatoren kommen die üblichen gewöhnlich für Umesterungsreaktionen verwendeten Katalysatoren in Betracht, die meist auch bei Veresterungsreaktionen eingesetzt werden. Hierzu zählen z. B. Mineralsäuren, wie Schwefelsäure und Phosphorsäure, organische Sulfonsäuren, wie Methansulfonsäure und p-Toluolsulfonsäure oder spezielle Metallkatalysatoren aus der Gruppe der Zinn(IV)-Katalysatoren, beispielsweise Dialkylzinndicarboxylate wie Dibutylzinndiacetat, Trialkylzinnalkoxide, Monoalkylzinnverbindungen wie Monobutylzinndioxid, Zinnsalze wie Zinnacetat oder Zinnoxide, aus der Gruppe der Titankatalysatoren, monomere und polymere Titanate und Titanchelate wie Tetraethylorthotitanat, Tetrapropylorthotitanat, Tetrabutylorthotitanat, Triethanolamintitanat, aus der Gruppe der Zirkonkatalysatoren, Zirkonate und Zirkonchelate wie Tetrapropylzirkonat, Tetrabutylzirkonat, Triethanolaminzirkonat, sowie Lithiumkatalysatoren wie Lithiumsalze, Lithiumalkoxide, oder Aluminium(III)-, Chrom(III)-, Eisen(III)-, Kobalt(II)-, Nickel(II) und Zink(II)-acetylacetonat.

Die Menge an eingesetztem Umesterungskatalysator liegt bei 0,05 bis 5 Gew.-%, bevorzugt bei 0,1 bis 1 Gew.-%. Das Reaktionsgemisch wird bevorzugt bis zum Siedepunkt des Reaktionsgemisches erhitzt, so dass die Reaktionstemperatur in Abhängigkeit von den Reaktanten zwischen 20 °C und 200 °C liegt.

Die Umesterung kann bei Umgebungsdruck oder vermindertem oder erhöhtem Druck erfolgen. Bevorzugt wird die Umesterung bei einem Druck von 0,001 bis 200 bar, besonders bevorzugt 0,01 bis 5 bar, durchgeführt. Der bei der Umesterung abgespaltene, niedriger siedende Alkohol wird zwecks Verschiebung des Gleichgewichts der Umesterungsreaktion bevorzugt kontinuierlich abdestilliert. Die hierzu benötigte Destillationskolonne steht in der Regel in direkter Verbindung mit dem Umesterungsreaktor, vorzugsweise ist sie direkt an diesem installiert. Im Falle der Verwendung mehrerer in Serie geschalteter Umesterungsreaktoren, kann jeder dieser Reaktoren mit einer Destillationskolonne ausgerüstet sein oder es kann, vorzugsweise aus den letzten Kesseln der Umesterungsreaktorkaskade, das abgedampfte Alkoholgemisch über eine oder mehrere Sammelleitungen einer Destillationskolonne zugeführt werden. Der bei dieser Destillation zurückgewonnene höhersiedende Alkohol wird vorzugsweise wieder in die Umesterung zurückgeführt.

Im Falle der Verwendung eines amphoteren Katalysators gelingt dessen Abtrennung im Allgemeinen durch Hydrolyse und anschließende Abtrennung des gebildeten Metalloxids, z. B. durch Filtration. Bevorzugt wird nach erfolgter Reaktion der Katalysator mittels Waschen mit Wasser hydrolysiert und das ausgefallene Metalloxid abfiltriert. Gewünschtenfalls kann das Filtrat einer weiteren Aufarbeitung zur Isolierung und/oder Reinigung des Produkts unterzogen werden. Bevorzugt wird das Produkt destillativ abgetrennt.

Die Umesterung der Di-(C₁-C₂)-Alkylester der Dicarbonsäuren HO-C(=O)-X-C(=O)-OH mit wenigstens einem Alkohol R¹-OH bzw. R²-OH oder Gemischen davon erfolgt bevorzugt in Gegenwart wenigstens eines Titan(IV)-Alkoholats. Bevorzugte Titan(IV)-Alkoholate sind Tetrapropoxytitan, Tetrabutoxytitan oder Gemische davon. Bevorzugt wird die Alkoholkomponente wenigstens in der doppelten stöchiometrischen Menge, bezogen auf die eingesetzten Di-(C₁-C₂-Alkyl)-Ester eingesetzt.

Die Umesterung kann in Abwesenheit oder in Gegenwart eines zugesetzten organischen Lösungsmittels durchgeführt werden. Bevorzugt wird die Umesterung in Gegenwart eines inerten organischen Lösungsmittels durchgeführt. Geeignete organische Lösungsmittel sind die zuvor für die Veresterung genannten. Dazu zählen speziell Toluol und THF.

Die Temperatur bei der Umesterung liegt vorzugsweise in einem Bereich von 50 bis 200 °C.

Die Umesterung kann in Abwesenheit oder in Gegenwart eines Inertgases erfolgen. Unter einem Inertgas wird in der Regel ein Gas verstanden, welches unter den gegebenen Reaktionsbedingungen keine Reaktionen mit den an der Reaktion beteiligten Edukten, Reagenzien, Lösungsmitteln oder den entstehenden Produkten eingeht. Bevorzugt wird die Umesterung ohne Hinzufügen eines Inertgases durchgeführt.

Die zur Herstellung der Verbindungen der allgemeinen Formel (I) eingesetzten aliphatischen Dicarbonsäuren und cycloaliphatischen Alkohole können entweder kommerziell erworben oder nach literaturbekannten Synthesewegen hergestellt werden.

Michael Tuttle Musser in "Cyclohexanol and Cyclohexanone" in "Ullmann's Encyclopedia of Industrial Chemistry" (2011) (DOI: 10.1002/14356007.a08_217.pub2) offenbart technische Synthesewege zur großtechnischen Gewinnung von Cyclohexanol. Cyclohexanol kann grundsätzlich über den Weg der Hydrierung von Phenol in der Gasphase gewonnen werden oder durch eine katalysierte Oxidation von Cyclohexan mit Hilfe von Übergangsmetallkatalysatoren in der flüssigen Phase durch Luftsauerstoff. Cyclohexanol kann selektiver und in höheren Ausbeuten erhalten werden indem man Borsäure in der flüssigen Phase verwendet und mit Hilfe von ebenfalls Luftsauerstoff oxidiert. Dieser letztere Prozess geht über die Zwischenstufe eines Peroxoborsäureesters des Cyclohexanols. Darüber hinaus ist ebenfalls ein Prozess, ausgehend von Benzol im großtechnischen Maßstab realisiert. Dabei wird Benzol schrittweise hydriert und Cyclohexen von den Nebenkomponenten, wie nicht umgesetztes Benzol und Cyclohexan, abgetrennt. In einem katalysierten Schritt wird anschließend Cyclohexen sehr selektiv und in großen Ausbeuten (bis zu 95 % über alle Schritte) zu Cyclohexanol umgesetzt.

Michael Tuttle Musser, in "Adipinic Acid" in "Ullmann's Encyclopedia of Industrial Chemistry" (2000) (DOI: 10.1002/14356007.a01_269) offenbart technische Synthesewege zur großtechnischen Gewinnung von Adipinsäure. Heutzutage wird fast der weltweit gesamte Bedarf an Adipinsäure über den Weg der Oxidation von entweder Cyclohexanol oder Cyclohexanon oder einer Mischung davon mit Hilfe von Salpetersäure gedeckt.

### Verbindungen der allgemeinen Formel (II)

Die Verbindungen der allgemeinen Formeln (II), (II.a) und (II.b) können entweder kommerziell erworben oder nach im Stand der Technik bekannten Verfahren hergestellt werden.

Beispielsweise können die Diester durch Veresterung oder Umesterung der Disäuren oder geeigneter Derivate davon mit den entsprechenden Alkoholen erhalten werden. Übliche Verfahren sind dem Fachmann bekannt. Die Veresterung kann nach üblichen dem Fachmann bekannten Verfahren erfolgen.

### Verbindungen der allgemeinen Formel (II.a)

In der Regel werden die 1,2-Cyclohexandicarbonsäureester meist durch Kernhydrierung der entsprechenden Phthalsäureester erhalten. Die Kernhydrierung kann nach dem in der WO 99/32427 beschriebenen Verfahren erfolgen. Ein besonders geeignetes Kernhydrierungsverfahren beschreibt beispielsweise auch die WO 2011/082991 A2.

Ebenso können 1,2-Cyclohexandicarbonsäureester in einer Reaktionssequenz aus Diels Alder-Reaktion und anschließender Hydrierung und Veresterung bzw. anschließender Veresterung und Hydrierung hergestellt werden. Geeignete Verfahren sind dem Fachmann bekannt, beispielsweise aus der WO 02/066412.

Des Weiteren können 1,2-Cyclohexandicarbonsäureester durch Veresterung von 1,2-Cyclohexandicarbonsäure oder geeigneten Derivaten davon mit den entsprechenden Alkoholen erhalten werden. Die Veresterung kann nach üblichen dem Fachmann bekannten Verfahren erfolgen.

Den Verfahren zur Herstellung der Verbindungen der allgemeinen Formel (II.a) ist gemein, dass ausgehend von Phthalsäure, 1,2-Cyclohexandicarbonsäure oder geeigneten Derivaten davon, eine Veresterung bzw. eine Umesterung durchgeführt wird, wobei die entsprechenden C₄-C₁₂-Alkanolen als Edukte eingesetzt werden. Bei diesen Alkoholen handelt es sich in der Regel nicht um reine Substanzen, sondern um Isomerengemische, deren Zusammensetzung und Reinheitsgrad von dem jeweiligen Verfahren abhängt, mit dem diese dargestellt werden.

Bevorzugte C₄-C₁₂-Alkanole, die zur Herstellung der in der erfindungsgemäßen Weichmacher-Zusammensetzung enthaltenen Verbindungen (II.a) eingesetzt werden, können geradkettig oder verzweigt sein oder aus Gemischen aus geradkettigen und verzweigten C₄-C₁₂-Alkanolen bestehen. Dazu zählen n-Heptanol, Isoheptanol, n-Octanol, Isooctanol, 2-Ethylhexanol, n-Nonanol, Isononanol, Isodecanol, 2-Propylheptanol, n-Undecanol, Isoundecanol, n-Dodecanol oder Isododecanol. Besonders bevorzugt sind C₇-C₁₂-Alkanole, insbesondere 2-Ethylhexanol, Isononanol und 2-Propylheptanol, insbesondere Isononanol.

### Verbindungen der Formel (II.b)

In der Regel werden die Terephthalsäuredialkylester durch Veresterung von Terephthalsäure oder geeigneten Derivaten davon mit den entsprechenden Alkoholen erhalten. Die Veresterung kann nach üblichen dem Fachmann bekannten Verfahren erfolgen, wie beispielsweise in WO 2009/095126 beschrieben.

Den Verfahren zur Herstellung der Verbindungen der Formel (II.b) ist gemein, dass ausgehend von Terephthalsäure oder geeigneten Derivaten davon, eine Veresterung bzw. eine Umesterung durchgeführt wird, wobei die entsprechenden C₄-C₁₂-Alkanole als Edukte eingesetzt werden. Bei diesen Alkoholen handelt es sich in der Regel nicht um reine Substanzen, sondern um Isomerengemische, deren Zusammensetzung und Reinheitsgrad von dem jeweiligen Verfahren abhängt, mit dem diese dargestellt werden. Bevorzugt werden C₇-C₁₂-Alkanole als Edukte eingesetzt.

Bevorzugte C₄-C₁₂-Alkanole, die zur Herstellung der in der erfindungsgemäßen Weichmacher-Zusammensetzung enthaltenen Verbindungen (II.b) eingesetzt werden, können geradkettig oder verzweigt sein oder aus Gemischen aus geradkettigen und verzweigten C₄-C₁₂-Alkanolen bestehen. Dazu zählen n-Butanol, Isobutanol, n-Pentanol, Isopentanol, n-Hexanol, Isohexanol, n-Heptanol, Isoheptanol, n-Octanol, Isooctanol, 2-Ethylhexanol, n-Nonanol, Isononanol, Isodecanol, 2-Propylheptanol, n-Undecanol, Isoundecanol, n-Dodecanol oder Isododecanol. Besonders bevorzugt sind C₇-C₁₂-Alkanole, insbesondere 2-Ethylhexanol, Isononanol und 2-Propylheptanol, speziell 2-Ethylhexanol.

Verbindungen der Formel (II.b) sind kommerziell erhältlich. Ein geeigneter kommerziell erhältlicher Weichmacher der Formel (II.b) ist beispielsweise Di-(2-ethylhexyl)-terephthalat (DOTP), der unter dem Markenname Eastman 168TM von der Firma Eastman Chemical B.V., Capelle aan den Ijssel, Niederlanden sowie unter dem Markennamen Palatinol® DOTP von der Firma BASF Corp., Florham Park, NJ, USA, angeboten wird.

### Alkanole

Im Rahmen der vorliegenden Anmeldung ist hinsichtlich der im folgenden genannten Alkanolen unter dem Begriff "Isoalkohol" ein Gemisch von Strukturisomeren zu verstehen, sofern nichts anderes angegeben ist.

### Heptanol

Die zur Herstellung der Verbindungen der allgemeinen Formel (II) eingesetzten Heptanole können geradkettig oder verzweigt sein oder aus Gemischen aus geradkettigen und verzweigten Heptanolen bestehen. Bevorzugt werden Gemische aus verzweigten Heptanolen, auch als Isoheptanol bezeichnet, verwendet, die durch die Rhodium- oder vorzugsweise Kobalt-katalysierte Hydroformylierung von Dimerpropen, erhältlich z. B. nach dem Dimersol®-Verfahren, und anschließende Hydrierung der erhaltenen Isoheptanale zu einem Isoheptanol-Gemisch hergestellt werden. Entsprechend seiner Herstellung besteht das so gewonnene Isoheptanol-Gemisch aus mehreren Isomeren. Im Wesentlichen geradkettige Heptanole können durch die Rhodium- oder vorzugsweise Kobalt-katalysierte Hydroformylierung von 1-Hexen und anschließende Hydrierung des erhaltenen n-Heptanals zu n-Heptanol erhalten werden. Die Hydroformylierung von 1-Hexen bzw. Dimerpropen kann nach an sich bekannten Verfahren erfolgen: Bei der Hydroformylierung mit homogen im Reaktionsmedium gelösten Rhodiumkatalysatoren können sowohl unkomplexierte Rhodiumcarbonyle, die in situ unter den Bedingungen der Hydroformylierungsreaktion im Hydroformylierungsreaktionsgemisch unter Einwirkung von Synthesegas z. B. aus Rhodiumsalzen gebildet werden, als auch komplexe Rhodiumcarbonylverbindungen, insbesondere Komplexe mit organischen Phosphinen, wie Triphenylphosphin, oder Organophosphiten, vorzugsweise chelatisierenden Biphosphiten, wie z. B. in US-A 5288918 beschrieben, als Katalysator verwendet werden. Bei der Kobalt-katalysierten Hydroformylierung dieser Olefine werden im Allgemeinen homogen im Reaktionsgemisch lösliche Kobaltcarbonyl-Verbindungen eingesetzt, die sich unter den Bedingungen der Hydroformylierungsreaktion unter Einwirkung von Synthesegas in situ aus Kobaltsalzen bilden. Wird die Kobalt-katalysierte Hydroformylierung in Gegenwart von Trialkyl- oder Triarylphosphinen ausgeführt, bilden sich als Hydroformylierungsprodukt direkt die gewünschten Heptanole, so dass keine weitere Hydrierung der Aldehydfunktion mehr benötigt wird.

Zur Kobalt-katalysierten Hydroformylierung des 1-Hexens bzw. der Hexenisomerengemische eignen sich beispielsweise die in Falbe, New Syntheses with Carbon Monoxide, Springer, Berlin, 1980 auf den Seiten 162-168, erläuterten industriell etablierten Verfahren, wie das Ruhrchemie-Verfahren, das BASF-Verfahren, das Kuhlmann-Verfahren oder das Shell-Verfahren. Während das Ruhrchemie-, BASF- und das Kuhlmann-Verfahren mit nicht ligandmodifizierten Kobaltcarbonyl-Verbindungen als Katalysatoren arbeiten und dabei Hexanal-Gemische erhalten, verwendet das Shell-Verfahren (DE-A 1593368) Phosphin- oder Phosphit-Ligand-modifizierte Kobaltcarbonyl-Verbindungen als Katalysator, die aufgrund ihrer zusätzlichen hohen Hydrieraktivität direkt zu den Hexanolgemischen führen. Vorteilhafte Ausgestaltungen zur Durchführung der Hydroformylierung mit nicht-ligandmodifizierten Kobaltcarbonylkomplexen werden in DE-A 2139630, DE-A 2244373, DE-A 2404855 und WO 01014297 detailliert beschrieben.

Zur Rhodium-katalysierten Hydroformylierung des 1-Hexens bzw. der Hexenisomerengemische kann das industriell etablierte Rhodium-Niederdruck-Hydroformylierungsverfahren mit Triphenylphosphinligand-modifizierten Rhodiumcarbonylverbindungen angewandt werden, wie es Gegenstand von US-A 4148830 ist. Vorteilhaft können zur Rhodium-katalysierten Hydroformylierung langkettiger Olefine, wie der nach den vorstehend genannten Verfahren erhaltenen Hexenisomerengemische, nicht-ligand-modifizierte Rhodiumcarbonylverbindungen als Katalysator dienen, wobei im Unterschied zum Niederdruckverfahren ein höherer Druck von 80 bis 400 bar einzustellen ist. Die Durchführung solcher Rhodium-Hochdruck-Hydroformylierungsverfahren wird in z. B. EP-A 695734, EP-B 880494 und EP-B 1047655 beschrieben.

Die nach Hydroformylierung der Hexen-Isomerengemische erhaltenen Isoheptanalgemische werden auf an sich herkömmliche Weise zu Isoheptanolgemischen katalytisch hydriert. Bevorzugt werden hierzu heterogene Katalysatoren verwendet, die als katalytisch aktive Komponente Metalle und/oder Metalloxide der VI. bis VIII. sowie der I. Nebengruppe des Periodensystems der Elemente, insbesondere Chrom, Molybdän, Mangan, Rhenium, Eisen, Kobalt, Nickel und/oder Kupfer, gegebenenfalls abgeschieden auf einem Trägermaterial wie Al₂O₃, SiO₂ und/oder TiO₂, enthalten. Solche Katalysatoren werden z. B. in DE-A 3228881, DE-A 2628987 und DE-A 2445303 beschrieben. Besonders vorteilhaft wird die Hydrierung der Isoheptanale mit einem Überschuss an Wasserstoff von 1,5 bis 20 % über der stöchiometrisch zur Hydrierung der Isoheptanale benötigten Wasserstoffmenge, bei Temperaturen von 50 bis 200 °C und bei einem Wasserstoffdruck von 25 bis 350 bar durchgeführt und zur Vermeidung von Nebenreaktionen dem Hydrierzulauf gemäß DE-A 2628987 eine geringe Menge Wasser, vorteilhaft in Form einer wässrigen Lösung eines Alkalimetallhydroxids oder -carbonats entsprechend der Lehre von WO 01087809 zugefügt.

### Octanol

2-Ethylhexanol, das für lange Jahre der in den größten Mengen produzierte Weichmacheralkohol war, kann über die Aldolkondensation von n-Butyraldehyd zu 2-Ethylhexenal und dessen anschließende Hydrierung zu 2-Ethylhexanol gewonnen werden (s. Ullmann's Encyclopedia of Industrial Chemistry; 5. Auflage, Bd. A 10, S. 137 - 140, VCH Verlagsgesellschaft GmbH, Weinheim 1987).

Im Wesentlichen geradkettige Octanole können durch die Rhodium- oder vorzugsweise Kobalt-katalysierte Hydroformylierung von 1-Hepten und anschließende Hydrierung des erhaltenen n-Octanals zu n-Octanol erhalten werden. Das dazu benötigte 1-Hepten kann aus der Fischer-Tropsch-Synthese von Kohlenwasserstoffen gewonnen werden.

Bei dem Alkohol Isooctanol handelt es sich im Unterschied zu 2-Ethylhexanol oder n-Octanol, bedingt durch seine Herstellungsweise, nicht um eine einheitliche chemische Verbindung, sondern um ein Isomerengemisch aus unterschiedlich verzweigten C₈-Alkoholen, beispielsweise aus 2,3-Dimethyl-1-hexanol, 3,5-Dimethyl-1-hexanol, 4,5-Dimethyl-1-hexanol, 3-Methyl-1-heptanol und 5-Methyl-1-heptanol, die je nach den angewandten Herstellungsbedingungen und -verfahren in unterschiedlichen Mengenverhältnissen im Isooctanol vorliegen können. Isooctanol wird üblicherweise durch die Codimerisierung von Propen mit Butenen, vorzugsweise n-Butenen, und anschließende Hydroformylierung des dabei erhaltenen Gemisches aus Heptenisomeren hergestellt. Das bei der Hydroformylierung erhaltene Octanal-Isomerengemisch kann anschließend auf an sich herkömmliche Weise zum Isooctanol hydriert werden.

Die Codimerisierung von Propen mit Butenen zu isomeren Heptenen kann vorteilhaft mit Hilfe des homogenkatalysierten Dimersol®-Verfahrens (Chauvin et al; Chem. Ind.; Mai 1974, S. 375 - 378) erfolgen, bei dem als Katalysator ein löslicher Nickel-Phosphin-Komplex in Gegenwart einer Ethylaluminiumchlor-Verbindung, beispielsweise Ethylaluminiumdichlorid, dient. Als Phosphin-Liganden für den Nickelkomplex-Katalysator können z. B. Tributylphosphin, Tri-isopropylphosphin, Tricyclohexylphosphin und/oder Tribenzylphosphin eingesetzt werden. Die Umsetzung findet bei Temperaturen von 0 bis 80 °C statt, wobei vorteilhaft ein Druck eingestellt wird, bei dem die Olefine im flüssigen Reaktionsgemisch gelöst vorliegen (Cornils; Hermann: Applied Homogeneous Catalysis with Organometallic Compounds; 2. Auflage; Bd. 1; S. 254 - 259, Wiley-VCH, Weinheim 2002).

Alternativ zum mit homogen im Reaktionsmedium gelösten Nickelkatalysatoren betriebenen Dimersol®-Verfahren kann die Codimerisierung von Propen mit Butenen auch mit auf einem Träger abgeschiedenen, heterogenen NiO-Katalysatoren durchgeführt werden, wobei ähnliche Hepten-Isomerenverteilungen erhalten werden wie beim homogen katalysierten Verfahren. Solche Katalysatoren werden beispielsweise im so genannten Octol®-Verfahren (Hydrocarbon Processing, Februar 1986, S. 31 - 33) verwendet, ein gut geeigneter spezifischer Nickel-Heterogenkatalysator zur Olefindimerisierung bzw. Codimerisierung ist z. B. in WO 9514647 offenbart.

Anstelle von Katalysatoren auf Basis von Nickel können auch Brønsted-acide heterogene Katalysatoren zur Codimerisierung von Propen mit Butenen verwendet werden, wobei in der Regel höher verzweigte Heptene als in den Nickel-katalysierten Verfahren erhalten werden. Beispiele von hierfür geeigneten Katalysatoren sind feste Phosphorsäure-Katalysatoren z. B. mit Phosphorsäure imprägnierte Kieselgur oder Diatomeenerde, wie sie vom PolyGas®-Verfahren zur Olefindi- bzw. Oligomerisierung benutzt werden (Chitnis et al; Hydrocarbon Engineering 10, Nr. 6 - Juni 2005). Zur Codimerisierung von Propen und Butenen zu Heptenen sehr gut geeignete Brønsted-acide Katalysatoren sind Zeolithe, deren sich das auf Basis des PolyGas®-Verfahrens weiterentwickelte EMOGAS®-Verfahren bedient.

Das 1-Hepten und die Hepten-Isomerengemische werden nach den vorstehend in Zusammenhang mit der Herstellung von n-Heptanal und Heptanal-Isomerengemische erläuterten bekannten Verfahren mittels Rhodium- oder Kobalt-katalysierter Hydroformylierung, vorzugsweise Kobalt-katalysierter Hydroformylierung, in n-Octanal bzw.

Octanal-Isomerengemische überführt. Diese werden anschließend z. B. mittels eines der vorstehend in Zusammenhang mit der n-Heptanol- und Isoheptanol-Herstellung genannten Katalysatoren zu den entsprechenden Octanolen hydriert.

### Nonanol

Im Wesentlichen geradkettiges Nonanol kann durch die rhodium- oder vorzugsweise kobaltkatalysierte Hydroformylierung von 1-Octen und nachfolgende Hydrierung des dabei erhaltenen n-Nonanals erhalten werden. Das Ausgangsolefin 1-Octen kann beispielsweise über eine Ethylenoligomerisierung mittels einem homogen im Reaktionsmedium - 1,4-Butandiol - Iöslichen Nickelkomplexkatalysator mit z. B. Diphenylphosphinoessigsäure oder 2-Diphenylphosphinobenzoesäure als Liganden erhalten werden. Dieses Verfahren ist auch unter der Bezeichnung Shell Higher Olefins Process oder SHOP-Verfahren bekannt (s. Weisermel, Arpe: Industrielle Organische Chemie; 5. Auflage; S. 96; Wiley-VCH, Weinheim 1998).

Bei Isononanol, welches zur Synthese der in der erfindungsgemäßen Weichmacher-Zusammensetzung enthaltenen Diisononylester der allgemeinen Formel (II) eingesetzt wird, handelt es sich nicht um eine einheitliche chemische Verbindung, sondern um ein Gemisch aus unterschiedlich verzweigten isomeren C₉-Alkoholen, die je nach der Art ihrer Herstellung, insbesondere auch der verwendeten Ausgangsstoffe, unterschiedliche Verzweigungsgrade haben können. Im Allgemeinen werden die Isononanole durch Dimerisierung von Butenen zu Isooctengemischen, anschließende Hydroformylierung der Isooctengemische und Hydrierung der dabei erhaltenen Isononanalgemische zu Isononanolgemischen hergestellt, wie in Ullmann's Encyclopedia of Industrial Chemistry, 5. Auflage, Bd. A1, S. 291 - 292, VCH Verlagsgesellschaft GmbH, Weinheim 1995, erläutert.

Als Ausgangsmaterial zur Herstellung der Isononanole können sowohl Isobuten, cis- und trans-2-Buten als auch 1-Buten oder Gemische dieser Butenisomere verwendet werden. Bei der vorwiegend mittels flüssiger, z. B. Schwefel- oder Phosphorsäure, oder fester, z. B. auf Kieselgur, SiO₂ oder Al₂O₃ als Trägermaterial aufgebrachter Phosphorsäure oder Zeolithe oder Brønsted-Säuren katalysierten Dimerisierung von reinem Isobuten, wird überwiegend das stark verzweigte 2,4,4-Trimethylpenten, auch als Diisobutylen bezeichnet, erhalten, das nach Hydroformylierung und Hydrierung des Aldehyds hochverzweigte Isononanole liefert.

Bevorzugt sind Isononanole mit einem geringeren Verzweigungsgrad. Solche gering verzweigten Isononanol-Gemische werden aus den linearen Butenen 1-Buten, cis- und/oder trans-2-Buten, die gegebenenfalls noch geringere Mengen an Isobuten enthalten können, über den vorstehend beschriebenen Weg der Butendimerisierung, Hydroformylierung des Isooctens und Hydrierung der erhaltenen Isononanal-Gemische hergestellt. Ein bevorzugter Rohstoff ist das so genannte Raffinat II, das aus dem C₄-Schnitt eines Crackers, beispielsweise eines Steamcrackers, das nach Eliminierung von Allenen, Acetylenen und Dienen, insbesondere 1,3-Butadien, durch dessen Partialhydrierung zu linearen Butenen oder dessen Abtrennung durch Extraktivdestillation, beispielsweise mittels N-Methylpyrrolidon, und nachfolgender Brønsted-Säure katalysierter Entfernung des darin enthaltenen Isobutens durch dessen Umsetzung mit Methanol oder Isobutanol nach großtechnisch etablierten Verfahren unter Bildung des Kraftstoffadditivs Methyl-tert.-Butylether (MTBE) oder des zur Gewinnung von Rein-Isobuten dienenden Isobutyl-tert.-Butylether, gewonnen wird.

Raffinat II enthält neben 1-Buten und cis- und trans-2-Buten noch n- und iso-Butan und Restmengen von bis zu 5 Gew.-% an Isobuten.

Die Dimerisierung der linearen Butene oder des im Raffinat II enthaltenen Butengemischs kann mittels der gängigen, großtechnisch praktizierten Verfahren, wie sie vorstehend in Zusammenhang mit der Erzeugung von Isoheptengemischen erläutert wurden, beispielsweise mittels heterogener, Brønsted-acider Katalysatoren, wie sie im PolyGas®- oder EMOGAS®-Verfahren eingesetzt werden, mittels des Dimersol®-Verfahrens unter Verwendung homogen im Reaktionsmedium gelöster Nickel-Komplex-Katalysatoren oder mittels heterogener, Nickel(II)oxid-haltiger Katalysatoren nach dem Octol®-Verfahren oder dem Verfahren gemäß WO 9514647 durchgeführt werden. Die dabei erhaltenen Isoocten-Gemische werden nach den vorstehend in Zusammenhang mit der Herstellung von Heptanal-Isomerengemische erläuterten bekannten Verfahren mittels Rhodium- oder Kobalt-katalysierter Hydroformylierung, vorzugsweise Kobalt-katalysierter Hydroformylierung, in Isononanal-Gemische überführt. Diese werden anschließend z. B. mittels einem der vorstehend in Zusammenhang mit der Isoheptanol-Herstellung genannten Katalysatoren zu den geeigneten Isononanolgemischen hydriert.

Die so hergestellten Isononanol-Isomerengemische können über ihren Isoindex charakterisiert werden, der aus dem Verzweigungsgrad der einzelnen isomeren Isononanolkomponenten im Isononanolgemisch multipliziert mit deren prozentualen Anteil im Isononanolgemisch errechnet werden kann. So tragen z. B. n-Nonanol mit dem Wert 0, Methyloctanole (eine Verzweigung) mit dem Wert 1 und Dimethylheptanole (zwei Verzweigungen) mit dem Wert 2 zum Isoindex eines Isononanolgemisches bei. Je höher die Linearität, desto niedriger ist der Isoindex des betreffenden Isononanolgemisches.

Dementsprechend kann der Isoindex eines Isononanolgemisches durch gaschromatographische Auftrennung des Isononanolgemisches in seine einzelnen Isomere und damit einhergehender Quantifizierung von deren prozentualen Mengenanteil im Isononanolgemisch, bestimmt nach Standardmethoden der gaschromatographischen Analyse, ermittelt werden. Zwecks Erhöhung der Flüchtigkeit und Verbesserung der gaschromatographischen Auftrennung der isomeren Nonanole werden diese zweckmäßigerweise vor der gaschromatographischen Analyse mittels Standardmethoden, beispielsweise durch Umsetzung mit N-Methyl-N-trimethylsilyltrifluoracetamid, trimethylsilyliert. Um eine möglichst gute Trennung der einzelnen Komponenten bei der gaschromatographischen Analyse zu erzielen, werden vorzugsweise Kapillarsäulen mit Polydimethylsiloxan als stationärer Phase verwendet. Solche Kapillarsäulen sind im Handel erhältlich, und es bedarf lediglich einiger weniger Routineversuche des Fachmanns, um aus dem vielfältigen Angebot des Handels ein optimal für diese Trennaufgabe geeignetes Fabrikat auszuwählen.

Die in der erfindungsgemäßen Weichmacher-Zusammensetzung verwendeten Diisononylester der allgemeinen Formel (II) sind im Allgemeinen mit Isononanolen mit einem Isoindex von 0,8 bis 2, vorzugsweise von 1,0 bis 1,8 und besonders bevorzugt von 1,1 bis 1,5 verestert, die nach den vorstehend genannten Verfahren hergestellt werden können.

Lediglich beispielhaft werden im Folgenden mögliche Zusammensetzungen von Isononanolgemischen angegeben, wie sie zur Herstellung der erfindungsgemäß eingesetzten Verbindungen der allgemeinen Formel (II) verwendet werden können, wobei anzumerken ist, dass die Anteile der im Einzelnen aufgeführten Isomeren im Isononanolgemisch abhängig von der Zusammensetzung des Ausgangsmaterials, beispielsweise Raffinat II, dessen Zusammensetzung an Butenen produktionsbedingt variieren kann und von Schwankungen in den angewandten Produktionsbedingungen, beispielsweise dem Alter der benutzten Katalysatoren und daran anzupassenden Temperatur- und Druckbedingungen, variieren können.

Beispielsweise kann ein Isononanolgemisch, das durch Kobalt-katalysierte Hydroformylierung und anschließende Hydrierung aus einem unter Verwendung von Raffinat II als Rohstoff mittels des Katalysators und Verfahrens gemäß WO 9514647 erzeugten Isooctengemisches hergestellt wurde, folgende Zusammensetzung haben:
- 1,73 bis 3,73 Gew.-%, bevorzugt 1,93 bis 3,53 Gew.-%, besonders bevorzugt 2,23 bis 3,23 Gew.-% 3-Ethyl-6-methyl-hexanol;
- 0,38 bis 1,38 Gew.-%, bevorzugt 0,48 bis 1,28 Gew.-%, besonders bevorzugt 0,58 bis 1,18 Gew.-% 2,6-Dimethylheptanol;
- 2,78 bis 4,78 Gew.-%, bevorzugt 2,98 bis 4,58 Gew.-%, besonders bevorzugt 3,28 bis 4,28 Gew.-% 3,5-Dimethylheptanol;
- 6,30 bis 16,30 Gew.-%, bevorzugt 7,30 bis 15,30 Gew.-%, besonders bevorzugt 8,30 bis 14,30 Gew.-% 3,6-Dimethylheptanol;
- 5,74 bis 11,74 Gew.-%, bevorzugt 6,24 bis 11,24 Gew.-%, besonders bevorzugt 6,74 bis 10,74 Gew.-% 4,6-Dimethylheptanol;
- 1,64 bis 3,64 Gew.-%, bevorzugt 1,84 bis 3,44 Gew.-%, besonders bevorzugt 2,14 bis 3,14 Gew.-% 3,4,5-Trimethylhexanol;
- 1,47 bis 5,47 Gew.-%, bevorzugt 1,97 bis 4,97 Gew.-%, besonders bevorzugt 2,47 bis 4,47 Gew.-% 3,4,5-Trimethylhexanol, 3-Methyl-4-ethylhexanol und 3-Ethyl-4-methylhexanol;
- 4,00 bis 10,00 Gew.-%, bevorzugt 4,50 bis 9,50 Gew.-%, besonders bevorzugt 5,00 bis 9,00 Gew.-% 3,4-Dimethylheptanol;
- 0,99 bis 2,99 Gew.-%, bevorzugt 1,19 bis 2,79 Gew.-%, besonders bevorzugt 1,49 bis 2,49 Gew.-% 4-Ethyl-5-methylhexanol und 3-Ethylheptanol;
- 2,45 bis 8,45 Gew.-%, bevorzugt 2,95 bis 7,95 Gew.-%, besonders bevorzugt 3,45 bis 7,45 Gew.-% 4,5-Dimethylheptanol und 3-Methyloctanol;
- 1,21 bis 5,21 Gew.-%, bevorzugt 1,71 bis 4,71 Gew.-%, besonders bevorzugt 2,21 bis 4,21 Gew.-% 4,5-Dimethylheptanol;
- 1,55 bis 5,55 Gew.-%, bevorzugt 2,05 bis 5,05 Gew.-%, besonders bevorzugt 2,55 bis 4,55 Gew.-% 5,6-Dimethylheptanol;
- 1,63 bis 3,63 Gew.-%, bevorzugt 1,83 bis 3,43 Gew.-%, besonders bevorzugt 2,13 bis 3,13 Gew.-% 4-Methyloctanol;
- 0,98 bis 2,98 Gew.-%, bevorzugt 1,18 bis 2,78 Gew.-%, besonders bevorzugt 1,48 bis 2,48 Gew.-% 5-Methyloctanol;
- 0,70 bis 2,70 Gew.-%, bevorzugt 0,90 bis 2,50 Gew.-%, besonders bevorzugt 1,20 bis 2,20 Gew.-% 3,6,6-Trimethylhexanol;
- 1,96 bis 3,96 Gew.-%, bevorzugt 2,16 bis 3,76 Gew.-%, besonders bevorzugt 2,46 bis 3,46 Gew.-% 7-Methyloctanol;
- 1,24 bis 3,24 Gew.-%, bevorzugt 1,44 bis 3,04 Gew.-%, besonders bevorzugt 1,74 bis 2,74 Gew.-% 6-Methyloctanol;
- 0,1 bis 3 Gew.-%, bevorzugt 0,2 bis 2 Gew.-%, besonders bevorzugt 0,3 bis 1 Gew.-% n-Nonanol;
- 25 bis 35 Gew.-%, bevorzugt 28 bis 33 Gew.-%, besonders bevorzugt 29 bis 32 Gew.-% sonstige Alkohole mit 9 und 10 Kohlenstoffatomen;
mit der Maßgabe, dass die Gesamtsumme der genannten Komponenten 100 Gew.-% ergibt.

Entsprechend den vorstehenden Ausführungen kann ein Isononanolgemisch, das durch Kobalt-katalysierte Hydroformylierung und anschließende Hydrierung unter Verwendung eines Ethylen-haltigen Butengemisches als Rohstoff mittels des PolyGas®- oder EMOGAS®-Verfahrens erzeugten Isooctengemisches hergestellt wurde, im Bereich der folgenden Zusammensetzungen, abhängig von der Rohstoffzusammensetzung und Schwankungen der angewandten Reaktionsbedingungen variieren:
- 6,0 bis 16,0 Gew.-%, bevorzugt 7,0 bis 15,0 Gew.-%, besonders bevorzugt 8,0 bis 14,0 Gew.-% n-Nonanol;
- 12,8 bis 28,8 Gew.-%, bevorzugt 14,8 bis 26,8 Gew.-%, besonders bevorzugt 15,8 bis 25,8 Gew.-% 6-Methyloctanol;
- 12,5 bis 28,8 Gew.-%, bevorzugt 14,5 bis 26,5 Gew.-%, besonders bevorzugt 15,5 bis 25,5 Gew.-% 4-Methyloctanol;
- 3,3 bis 7,3 Gew.-%, bevorzugt 3,8 bis 6,8 Gew.-%, besonders bevorzugt 4,3 bis 6,3 Gew.-% 2-Methyloctanol;
- 5,7 bis 11,7 Gew.-%, bevorzugt 6,3 bis 11,3 Gew.-%, besonders bevorzugt 6,7 bis 10,7 Gew.-% 3-Ethylheptanol;
- 1,9 bis 3,9 Gew.-%, bevorzugt 2,1 bis 3,7 Gew.-%, besonders bevorzugt 2,4 bis 3,4 Gew.-% 2-Ethylheptanol;
- 1,7 bis 3,7 Gew.-%, bevorzugt 1,9 bis 3,5 Gew.-%, besonders bevorzugt 2,2 bis 3,2 Gew.-% 2-Propylhexanol;
- 3,2 bis 9,2 Gew.-%, bevorzugt 3,7 bis 8,7 Gew.-%, besonders bevorzugt 4,2 bis 8,2 Gew.-% 3,5-Dimethylheptanol;
- 6,0 bis 16,0 Gew.-%, bevorzugt 7,0 bis 15,0 Gew.-%, besonders bevorzugt 8,0 bis 14,0 Gew.-% 2,5-Dimethylheptanol;
- 1,8 bis 3,8 Gew.-%, bevorzugt 2,0 bis 3,6 Gew.-%, besonders bevorzugt 2,3 bis 3,3 Gew.-% 2,3-Dimethylheptanol;
- 0,6 bis 2,6 Gew.-%, bevorzugt 0,8 bis 2,4 Gew.-%, besonders bevorzugt 1,1 bis 2,1 Gew.-% 3-Ethyl-4-methylhexanol;
- 2,0 bis 4,0 Gew.-%, bevorzugt 2,2 bis 3,8 Gew.-%, besonders bevorzugt 2,5 bis 3,5 Gew.-% 2-Ethyl-4-methylhexanol;
- 0,5 bis 6,5 Gew.-%, bevorzugt 1,5 bis 6 Gew.-%, besonders bevorzugt 1,5 bis 5,5 Gew.-% sonstige Alkohole mit 9 Kohlenstoffatomen;
mit der Maßgabe, dass die Gesamtsumme der genannten Komponenten 100 Gew.-% ergibt.

### Decanol

Bei Isodecanol, welches zur Synthese der in der erfindungsgemäßen Weichmacher-Zusammensetzung enthaltenen Diisodecylester der allgemeinen Formel (II) eingesetzt wird, handelt es sich nicht um eine einheitliche chemische Verbindung, sondern um ein komplexes Gemisch unterschiedlich verzweigter isomerer Decanole.

Diese werden im Allgemeinen durch die Nickel- oder Brønsted-Säure-katalysierte Trimerisierung von Propylen, beispielsweise nach dem vorstehend erläuterten PolyGas®- oder dem EMOGAS®-Verfahren, nachfolgende Hydroformylierung des dabei erhaltenen Isononen-Isomerengemisches mittels homogener Rhodium- oder Kobaltcarbonyl-Katalysatoren, vorzugsweise mittels Kobaltcarbonyl-Katalysatoren und Hydrierung des entstandenen Isodecanal-Isomerengemisches, z. B. mittels der vorstehend in Zusammenhang mit der Herstellung von C₇-C₉-Alkoholen genannten Katalysatoren und Verfahren (Ullmann's Encyclopedia of Industrial Chemistry; 5. Auflage, Bd. A1, S. 293, VCH Verlagsgesellschaft GmbH, Weinheim 1985), hergestellt. Das so produzierte Isodecanol ist im Allgemeinen stark verzweigt.

Bei 2-Propylheptanol, welches zur Synthese der in der erfindungsgemäßen Weichmacher-Zusammensetzung enthaltenen Di(2-propylheptyl)ester der allgemeinen Formel (II) eingesetzt wird, kann es sich um reines 2-Propylheptanol handeln oder um Propylheptanol-Isomerengemische, wie sie im Allgemeinen bei der industriellen Herstellung von 2-Propylheptanol gebildet werden und gemeinhin ebenfalls als 2-Propylheptanol bezeichnet werden.

Reines 2-Propylheptanol kann durch Aldolkondensation von n-Valeraldehyd und nachfolgende Hydrierung des dabei gebildeten 2-Propylheptenals, beispielsweise gemäß US-A 2921089, erhalten werden. Im Allgemeinen enthält kommerziell erhältliches 2-Propylheptanol neben der Hauptkomponente 2-Propylheptanol herstellungsbedingt eines oder mehrere der 2-Propylheptanol-Isomeren 2-Propyl-4-methylhexanol, 2-Propyl-5-methylhexanol, 2-Isopropyl-heptanol, 2-Isopropyl-4-methylhexanol, 2-Isopropyl-5-methylhexanol und/oder 2-Propyl-4,4-dimethylpentanol. Die Anwesenheit anderer Isomere des 2-Propylheptanols, beispielsweise 2-Ethyl-2,4-dimethylhexanol, 2-Ethyl-2-methyl-heptanol und/oder 2-Ethyl-2,5-dimethylhexanol im 2-Propylheptanol, ist möglich, aufgrund der geringen Bildungsraten der aldehydischen Vorläufer dieser Isomere im Zuge der Aldolkondensation sind diese, wenn überhaupt, nur in Spurenmengen im 2-Propylheptanol enthalten und spielen für die Weichmachereigenschaften des aus solchen 2-Propyheptanol-Isomerengemischen hergestellten Verbindungen praktisch keine Rolle.

Als Ausgangsmaterial zur Herstellung von 2-Propylheptanol können verschiedenerlei Kohlenwasserstoffquellen benutzt werden, beispielsweise 1-Buten, 2-Buten, Raffinat I - ein aus dem C₄-Schnitt eines Crackers nach Abtrennung von Allenen, Acetylenen und Dienen erhaltenes Alkan/Alken-Gemisch, das neben 1- und 2-Buten noch erhebliche Mengen an Isobuten enthält - oder Raffinat II, das aus Raffinat I durch Abtrennung von Isobuten erhalten wird und als Olefinkomponenten außer 1- und 2-Buten nur noch geringe Anteile an Isobuten enthält. Selbstverständlich können auch Gemische aus Raffinat I und Raffinat II als Rohstoff zur 2-Propylheptanol-Herstellung verwendet werden. Diese Olefine oder Olefingemische können nach an sich herkömmlichen Methoden mit Kobalt- oder Rhodium-Katalysatoren hydroformyliert werden, wobei aus 1-Buten ein Gemisch aus n- und iso-Valeraldehyd - die Bezeichnung iso-Valeraldehyd bezeichnet die Verbindung 2-Methylbutanal - gebildet wird, dessen n/iso-Verhältnis je nach verwendetem Katalysator und Hydroformylierungsbedingungen in relativ weiten Grenzen variieren kann. Beispielsweise wird bei Verwendung eines mit Triphenylphosphin modifizierten homogenen Rhodium-Katalysators (Rh/TPP) aus 1-Buten n- und iso-Valeraldehyd in einem n/iso-Verhältnis von im Allgemeinen 10 : 1 bis 20 : 1 gebildet, wohingegen bei Verwendung von mit Phosphit-Liganden, beispielsweise gemäß US-A 5288918 oder WO 05028407, oder von mit Phosphoamidit-Liganden, beispielsweise gemäß WO 0283695, modifizierten Rhodium-Hydroformylierungskatalysatoren fast ausschließlich n-Valeraldehyd gebildet wird. Während das Rh/TPP-Katalysatorsystem 2-Buten bei der Hydroformylierung nur sehr langsam umsetzt, so dass der größte Teil des 2-Butens aus dem Hydroformylierungsgemisch wieder zurückgewonnen werden kann, gelingt die Hydroformylierung des 2-Butens mit den erwähnten Phosphit-Ligand- oder Phosphoramidit-Ligand-modifizierten Rhodium-Katalysatoren, wobei vorwiegend n-Valeraldehyd gebildet wird. Hingegen wird im olefinischen Rohstoff enthaltenes Isobuten, wenn auch mit unterschiedlicher Geschwindigkeit, von praktisch allen Katalysatorsystemen zu 3-Methylbutanal und je nach Katalysator in geringerem Umfang zu Pivalaldehyd hydroformyliert.

Die je nach verwendeten Ausgangsmaterialien und Katalysatoren erhaltenen C₅-Aldehyde, d. h. n-Valeraldehyd gegebenenfalls im Gemisch mit iso-Valeraldehyd, 3-Methylbutanal und/oder Pivalaldehyd, können vor der Aldolkondensation gewünschtenfalls vollständig oder teilweise destillativ in die Einzelkomponenten aufgetrennt werden, so dass auch hier eine Möglichkeit besteht, die Isomerenzusammensetzung der C₁₀-Alkoholkomponente der erfindungsgemäß eingesetzten Estergemische zu beeinflussen und zu steuern. Desgleichen ist es möglich, das C₅-Aldehydgemisch, wie es bei der Hydroformylierung gebildet wird, ohne die vorherige Abtrennung einzelner Isomere der Aldolkondensation zuzuführen. Bei der Aldolkondensation, die mittels eines basischen Katalysators, wie einer wässrigen Lösung von Natrium- oder Kaliumhydroxid, beispielsweise nach den in EP-A 366089, US-A 4426524 oder US-A 5434313 beschriebenen Verfahren durchgeführt werden kann, entsteht bei Einsatz von n-Valeraldehyd als einziges Kondensationsprodukt 2-Propylheptenal, wohingegen bei Einsatz eines Gemisches isomerer C₅-Aldehyde ein Isomerengemisch aus den Produkten der Homoaldolkondensation gleicher Aldehydmoleküle und der gekreuzten Aldolkondensation unterschiedlicher Valeraldehyd-Isomere geformt wird. Selbstverständlich kann die Aldolkondensation durch die gezielte Umsetzung einzelner Isomere so gesteuert werden, dass überwiegend oder vollständig ein einzelnes Aldolkondensationsisomer gebildet wird. Die betreffenden Aldolkondensationsprodukte können anschließend, üblicherweise nach vorausgegangener, vorzugsweise destillativer Abtrennung aus der Reaktionsmischung und gewünschtenfalls destillativer Reinigung, mit herkömmlichen Hydrierkatalysatoren, beispielsweise den vorstehend zur Hydrierung von Aldehyden genannten, zu den entsprechenden Alkoholen oder Alkoholgemischen hydriert werden.

Wie bereits erwähnt, können die in der erfindungsgemäßen Weichmacher-Zusammensetzung enthaltenen Verbindungen der allgemeinen Formel (II) mit reinem 2-Propylheptanol verestert sein. Im Allgemeinen werden zur Herstellung dieser Ester jedoch Gemische des 2-Propylheptanols mit den genannten Propylheptanol-Isomeren eingesetzt, in denen der Gehalt an 2-Propylheptanol mindestens 50 Gew.-%, vorzugsweise 60 bis 98 Gew.-% und besonders bevorzugt 80 bis 95 Gew.-%, insbesondere 85 bis 95 Gew.-% beträgt.

Geeignete Mischungen von 2-Propylheptanol mit den Propylheptanol-Isomeren umfassen beispielsweise solche aus 60 bis 98 Gew.-% 2-Propylheptanol, 1 bis 15 Gew.-% 2-Propyl-4-methyl-hexanol und 0,01 bis 20 Gew.-% 2-Propyl-5-methyl-hexanol und 0,01 bis 24 Gew.-% 2-Isopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Weitere geeignete Mischungen aus 2-Propylheptanol mit den Propylheptanol-Isomeren umfassen beispielsweise solche aus 75 bis 95 Gew.-% 2-Propylheptanol, 2 bis 15 Gew.-% 2-Propyl-4-methyl-hexanol, 1 bis 20 Gew.-% 2-Propyl-5-methyl-hexanol, 0,1 bis 4 Gew.-% 2-Isopropylheptanol, 0,1 bis 2 Gew.-% 2-Isopropyl-4-methylhexanol und 0,1 bis 2 Gew.-% 2-Isopropyl-5-methyl-hexanol, wobei die Summe der Anteile der einzelnen Bestandteile 100 Gew.-% nicht überschreitet. Bevorzugt addieren sich die Anteile der einzelnen Bestandteile zu 100 Gew.-%.

Bevorzugte Mischungen von 2-Propylheptanol mit den Propylheptanol-Isomeren umfassen solche mit 85 bis 95 Gew.-% 2-Propylheptanol, 5 bis 12 Gew.-% 2-Propyl-4-methyl-hexanol und 0,1 bis 2 Gew.-% 2-Propyl-5-methylhexanol und 0,01 bis 1 Gew.-% 2-Isopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Bei Verwendung der genannten 2-Propylheptanol-Isomerengemische anstelle von reinem 2-Propylheptanol zur Herstellung der Verbindungen der allgemeinen Formel (II) entspricht die Isomerenzusammensetzung der Alkylestergruppen bzw. Alkylethergruppen praktisch der Zusammensetzung der zur Veresterung verwendeten Propylheptanol-Isomerengemische.

### Undecanol

Die Undecanole, die zur Herstellung der in der erfindungsgemäßen Weichmacher-Zusammensetzung enthaltenen Verbindungen der allgemeinen Formel (II) eingesetzt werden, können geradkettig oder verzweigt sein oder aus Gemischen geradkettiger und verzweigter Undecanole zusammengesetzt sein. Bevorzugt werden Gemische aus verzweigten Undecanolen, auch als Isoundecanol bezeichnet, als Alkoholkomponente verwendet.

Im Wesentlichen geradkettiges Undecanol kann durch die Rhodium- oder vorzugsweise Kobalt-katalysierte Hydroformylierung von 1-Decen und nachfolgende Hydrierung des dabei erhaltenen n-Undecanals erhalten werden. Das Ausgangsolefin 1-Decen wird über das zuvor bei der Herstellung von 1-Octen erwähnte SHOP-Verfahren hergestellt.

Zur Herstellung verzweigten Isoundecanols kann das im SHOP-Verfahren erhaltene 1-Decen einer Skelettisomerisierung, z. B. mittels acider zeolithischer Molekularsiebe, wie in WO 9823566 beschrieben, unterzogen werden, wobei sich Gemische aus isomeren Decenen bilden, deren Rhodium- oder vorzugsweise Kobalt-katalysierte Hydroformylierung und nachfolgende Hydrierung der erhaltenen Isoundecanal-Gemische zu dem zur Herstellung der erfindungsgemäß eingesetzten Verbindungen (II) verwendeten Isoundecanols führt. Die Hydroformylierung von 1-Decen oder Isodecen-Gemischen mittels Rhodium- oder Kobalt-Katalyse kann wie zuvor in Zusammenhang mit der Synthese von C₇- bis C₁₀-Alkoholen beschrieben erfolgen. Entsprechendes gilt für die Hydrierung von n-Undecanal oder Isoundecanal-Gemischen zu n-Undecanol bzw. Isoundecanol.

Nach destillativer Reinigung des Austrags der Hydrierung können die so erhaltenen C₇-bis C₁₁-Alkylalkohole bzw. deren Gemische, wie vorstehend beschrieben, zur Herstellung der erfindungsgemäß eingesetzten Diesterverbindungen der allgemeinen Formel (II) verwendet werden.

### Dodecanol

Im Wesentlichen geradkettiges Dodecanol kann in vorteilhafter Weise über das Alfol®- oder Epal®-Verfahren gewonnen werden. Diese Verfahren beinhalten die Oxidation und Hydrolyse geradkettiger Trialkylaluminium-Verbindungen, welche ausgehend von Triethylaluminium schrittweise über mehrere Ethylierungsreaktionen unter Verwendung von Ziegler-Natta-Katalysatoren aufgebaut werden. Aus den daraus resultierenden Gemischen weitgehend geradkettiger Alkylalkohole unterschiedlicher Kettenlänge kann nach dem destillativen Austrag der C₁₂-Alkylalkohol-Fraktion das gewünschte n-Dodecanol erhalten werden.

Alternativ kann n-Dodecanol auch durch Hydrogenierung natürlicher Fettsäuremethylester, beispielsweise aus Kokosnussöl, hergestellt werden.

Verzweigtes Isododecanol kann analog zu den bekannten Verfahren zur Codimerisierung und/oder Oligomerisierung von Olefinen, wie beispielsweise in der WO 0063151 beschrieben, mit nachfolgender Hydroformylierung und Hydrierung der Isoundecen-Gemische, wie beispielsweise in der DE-A 4339713 beschrieben, erhalten werden. Nach destillativer Reinigung des Austrags der Hydrierung können die so erhaltenen Isododecanole bzw. deren Gemische, wie vorstehend beschrieben, zur Herstellung der erfindungsgemäß eingesetzten Diesterverbindungen der allgemeinen Formel (II) verwendet werden.

### Plastisolanwendungen

Wie bereits dargelegt eignet sich die erfindungsgemäße Weichmacher-Zusammensetzung aufgrund ihrer guten Geliereigenschaften insbesondere zur Herstellung von Plastisolen.

Ein weiterer Gegenstand der Erfindung betrifft daher die Verwendung einer Weichmacher-Zusammensetzung, wie zuvor definiert, als Weichmacher in einem Plastisol.

Plastisole können aus verschiedenen Kunststoffen hergestellt werden. Bei den erfindungsgemäßen Plastisolen handelt es sich in einer bevorzugten Ausführungsform um ein PVC-Plastisol.

Der Anteil an erfindungsgemäßer Weichmacher-Zusammensetzung in den PVC-Plastisolen beträgt üblicherweise 5 bis 300 phr, bevorzugt 30 bis 200 phr.

Plastisole werden üblicherweise bei Umgebungstemperatur durch verschiedene Verfahren, wie Streichverfahren, Siebdruckverfahren, Gießverfahren, wie das Schalengieß- oder Rotationsgießverfahren, Tauchverfahren, Spritzverfahren und dergleichen in die Form des fertigen Produkts gebracht. Anschließend erfolgt durch Erwärmung die Gelierung, wobei nach Abkühlung ein homogenes, mehr oder weniger flexibles Produkt erhalten wird.

PVC-Plastisole eignen sich insbesondere zur Herstellung für PVC-Folien, für die Herstellung von nahtlosen Hohlkörpern, Handschuhen und zur Anwendung im Textilbereich, wie z. B. für Textilbeschichtungen.

Speziell eignen sich die PVC-Plastisole auf Basis der erfindungsgemäßen Weichmacher-Zusammensetzung zur Produktion von künstlichem Leder, z. B. von künstliches Leder für den Kraftfahrzeugbau; Unterbodenschutz für Kraftfahrzeuge; Nahtabdichtungen; Teppichrückseitenbeschichtungen; schwere Beschichtungen; Förderbänder; Tauchbeschichtungen und mittels Tauchverfahren hergestellte Artikel; Spielzeug, wie Puppen, Bälle oder Spielzeugtiere; anatomische Modelle für die Ausbildung; Bodenbeläge; Wandbeläge; (beschichtete) Textilien, wie Latex-Kleidung, Schutzbekleidung oder Regenkleidung, wie Regenjacken; Planen; Zelte; Bandbeschichtungen; Dachbahnen; Dichtungsmassen für Verschlüsse; Atemmasken und Handschuhe.

### Anwendungen Formmasse

Die erfindungsgemäße Formmasse wird bevorzugt für die Herstellung von Formkörpern und Folien verwendet. Dazu gehören insbesondere Gehäuse von Elektrogeräten, wie beispielsweise Küchengeräten und Computergehäuse, Werkzeuge, Apparate, Rohrleitungen, Kabel, Schläuche, wie beispielsweise Kunststoffschläuche, Wasser- und Bewässerungsschläuche, Industrie-Gummischläuche oder Chemieschläuche, Draht-Ummantelungen, Fensterprofile, Komponenten für den Fahrzeugbau, wie beispielsweise Karosseriebestandteile, Vibrationsdämpfer für Motoren, Reifen, Möbel, wie beispielsweise Stühle, Tische oder Regale, Schaumstoff für Polster und Matratzen, Planen, wie beispielsweise LKW-Planen oder Zeltplanen, Dichtungen, Verbundfolien, wie Folien für Verbundsicherheitsglas, insbesondere für Fahrzeug- und Fensterscheiben, Schallplatten, Kunstleder, Verpackungsbehälter, Klebebandfolien oder Beschichtungen.

Daneben eignet sich die erfindungsgemäße Formmasse zusätzlich für die Herstellung von Formkörpern und Folien, die direkt mit Menschen oder Nahrungsmitteln in Kontakt kommen. Dabei handelt es sich vorwiegend um Medizinprodukte, Hygieneprodukte, Lebensmittelverpackungen, Produkte für den Innenraumbereich, Spielzeug und Kinderpflegeartikel, Sport- und Freizeitprodukte, Bekleidung oder Fasern für Gewebe und dergleichen.

Bei den Medizinprodukten, die aus der erfindungsgemäßen Formmasse hergestellt werden können, handelt es sich beispielsweise um Schläuche für enterale Ernährung und Hämodialyse, Beatmungsschläuche, Infusionsschläuche, Infusionsbeutel, Blutbeutel, Katheter, Trachealtuben, Einmalspritzen, Handschuhe oder Atemmasken.

Bei den Lebensmittelverpackungen, die aus der erfindungsgemäßen Formmasse hergestellt werden können, handelt es sich beispielsweise um Frischhaltefolien, Lebensmittelschläuche, Trinkwasserschläuche, Behälter zur Aufbewahrung oder zum Einfrieren von Lebensmitteln, Deckeldichtungen, Verschlusskappen, Kronkorken oder künstliche Weinkorken.

Bei den Produkten für den Innenraumbereich, die aus der erfindungsgemäßen Formmasse hergestellt werden können, handelt es sich beispielsweise um Bodenbeläge, welche homogen oder aus mehreren Schichten, bestehend aus mindestens einer geschäumten Schicht, aufgebaut sein können, wie beispielsweise Fußbodenbeläge, Sportböden oder Luxury Vinyl Tiles (LVT), Kunstleder, Wandbeläge oder geschäumte oder nicht geschäumte Tapeten in Gebäuden oder um Verkleidungen oder Konsolenabdeckungen in Fahrzeugen.

Bei den Spielzeugen und Kinderpflegeartikeln, die aus der erfindungsgemäßen Formmasse hergestellt werden können, handelt es sich beispielsweise um Puppen, aufblasbares Spielzeug wie Bälle, Spielfiguren, Knete, Schwimmhilfen, Kinderwagen-Abdeckhauben, Wickelauflagen, Wärmflaschen, Beißringe oder Fläschchen.

Bei den Sport und Freizeitprodukten, die aus der erfindungsgemäßen Formmasse hergestellt werden können, handelt es sich beispielsweise um Gymnastikbälle, Übungsmatten, Sitzkissen, Massagebälle und -rollen, Schuhe bzw. Schuhsohlen, Bälle, Luftmatratzen oder Trinkflaschen.

Bei der Bekleidung, die aus den erfindungsgemäßen Formmassen hergestellt werden können, handelt es sich beispielsweise um Latex-Kleidung, Schutzbekleidung, Regenjacken oder Gummistiefel.

### Nicht-PVC-Anwendungen

Daneben beinhaltet die vorliegende Erfindung die Verwendung der erfindungsgemäßen Weichmacher-Zusammensetzung, wie zuvor definiert, als Hilfsmittel oder/und in Hilfsmitteln, ausgewählt unter: Kalandrierhilfsmitteln, Rheologiehilfsmitteln, oberflächenaktive Zusammensetzungen wie Fließ-, Filmbildehilfen, Entschäumern, Schaumverhütern, Benetzungsmitteln, Koaleszenzmitteln und Emulgatoren, Schmierstoffen, wie Schmierölen, Schmierfetten und Schmierpasten, Quenchern für chemische Reaktionen, Phlegmatisierungsmitteln, pharmazeutischen Produkten, Weichmachern in Klebstoffen oder Dichtstoffen, Schlagzähmodifizierern und Stellmitteln.

Die Erfindung wird anhand der im Folgenden beschriebenen Figuren und der Beispiele näher erläutert. Dabei sollen die Figuren und Beispiele nicht als einschränkend für die Erfindung verstanden werden.

In den nachfolgenden Beispielen und Figuren werden folgende Abkürzungen verwendet: phr für Gewichtsteile pro 100 Gewichtsteile Polymer.

### FIGURENBESCHREIBUNG

Figur 1

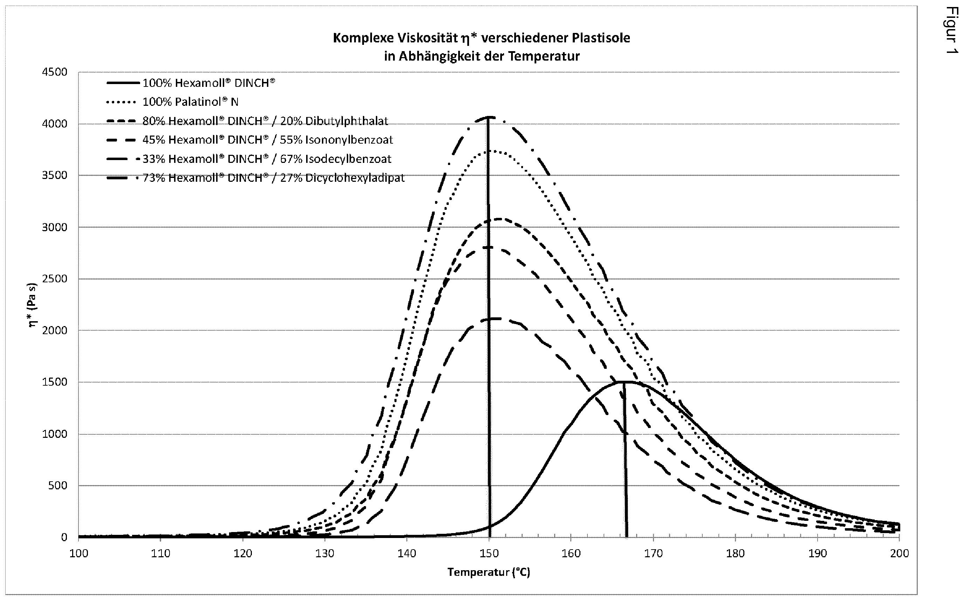

   Figur 1 zeigt das Gelierverhalten von PVC-Plastisole, die als Weichmacher spezifische Abmischungen von Hexamoll® DINCH® mit Dicyclohexyladipat und Di-n-butylphthalat, sowie den kommerziell erhältlichen Schnellgelierern Vestinol® INB oder Jayflex® MB 10 enthalten. Der Anteil des Schnellgelierers in den Weichmachermischungen ist so gewählt, dass die Geliertemperatur von Palatinol® N erreicht wird. Dargestellt ist die komplexe Viskosität η* [Pa*s] der Plastisole in Abhängigkeit der Temperatur [°C]. Zusätzlich ist als Vergleich das Gelierverhalten von PVC-Plastisolen dargestellt, die ausschließlich die kommerziell erhältlichen Weichmacher Hexamoll® DINCH® oder Palatinol® N enthalten. Der Gesamtweichmachergehalt der Plastisole beträgt 100 phr.
Figur 2

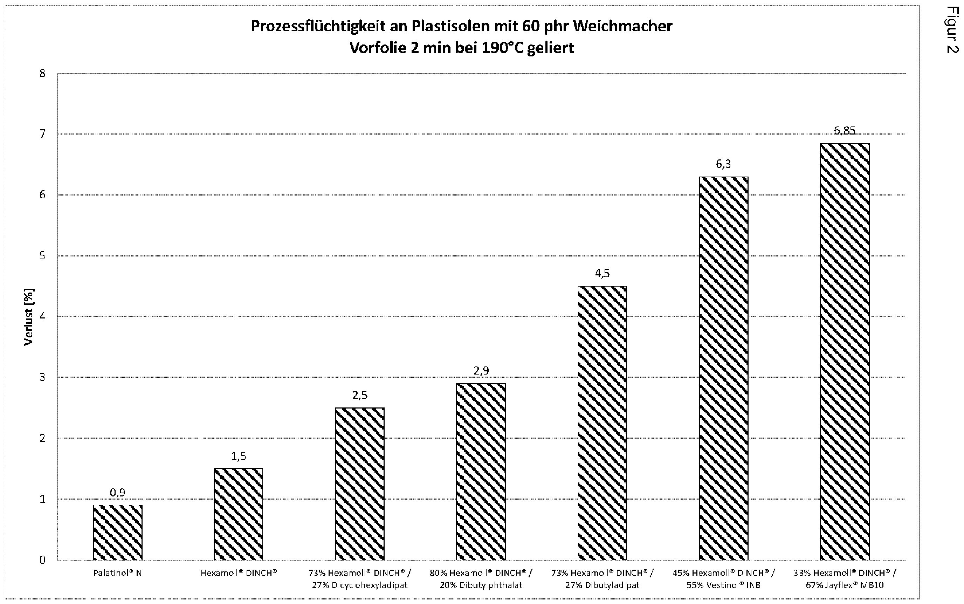

   Figur 2 zeigt die Prozessflüchtigkeit von PVC Plastisole, enthaltend 60 phr der erfindungsgemäßen Weichmacher-Zusammensetzung sowie verschiedene Abmischungen von Hexamoll® DINCH® mit Dibutylphthalat, sowie mit den kommerziell erhältlichen Schnellgelierern Vestinol® INB oder Jayflex® MB 10. Die Zusammensetzung der Abmischungen mit Hexamoll® DINCH® entspricht den in Figur 1 dargestellten Konzentrationen, sodass eine Geliertemperatur von 150 °C erreicht wird. Dargestellt ist der Gewichtsverlust der Plastisole in %. Zusätzlich ist die Prozessflüchtigkeit von PVC-Plastisolen dargestellt, die ausschließlich die kommerziell erhältlichen Weichmacher Hexamoll® DINCH® oder Palatinol® N enthalten.
Figur 3

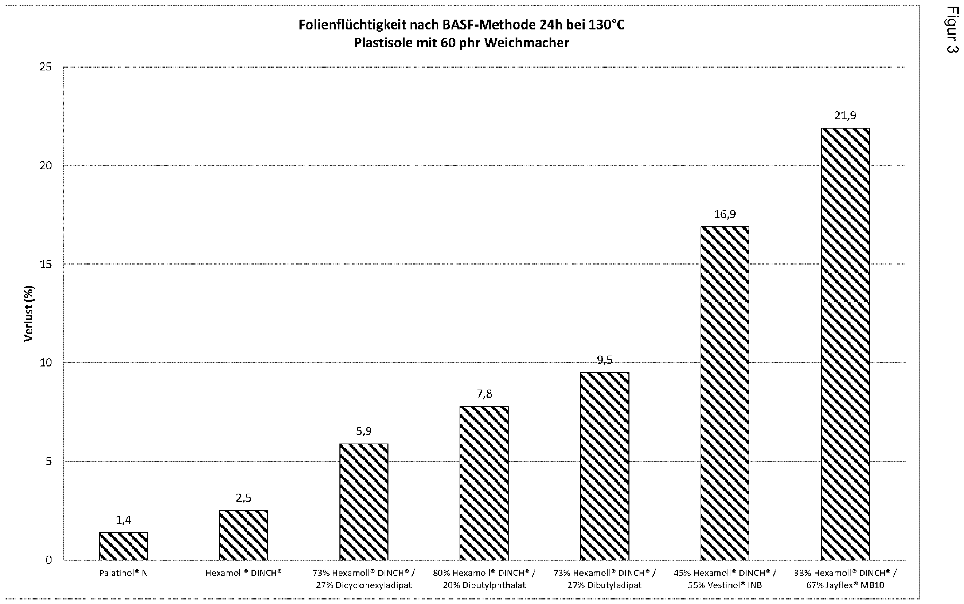

   Figur 3 zeigt die Folienflüchtigkeit von PVC-Folien, die aus Plastisole, enthaltend 60 phr der erfindungsgemäß eingesetzten Weichmacher-Zusammensetzung sowie verschiedene Abmischungen von Hexamoll® DINCH® mit Dibutylphthalat, sowie mit den kommerziell erhältlichen Schnellgelierern Vestinol® INB oder Jayflex® MB 10, hergestellt wurden. Dargestellt ist der Gewichtsverlust der PVC-Folien in %. Zusätzlich ist die Folienflüchtigkeit von PVC-Folien dargestellt, die aus Plastisole hergestellt wurden, die ausschließlich die kommerziell erhältlichen Weichmacher Hexamoll® DINCH® oder Palatinol® N enthalten.
Figur 4

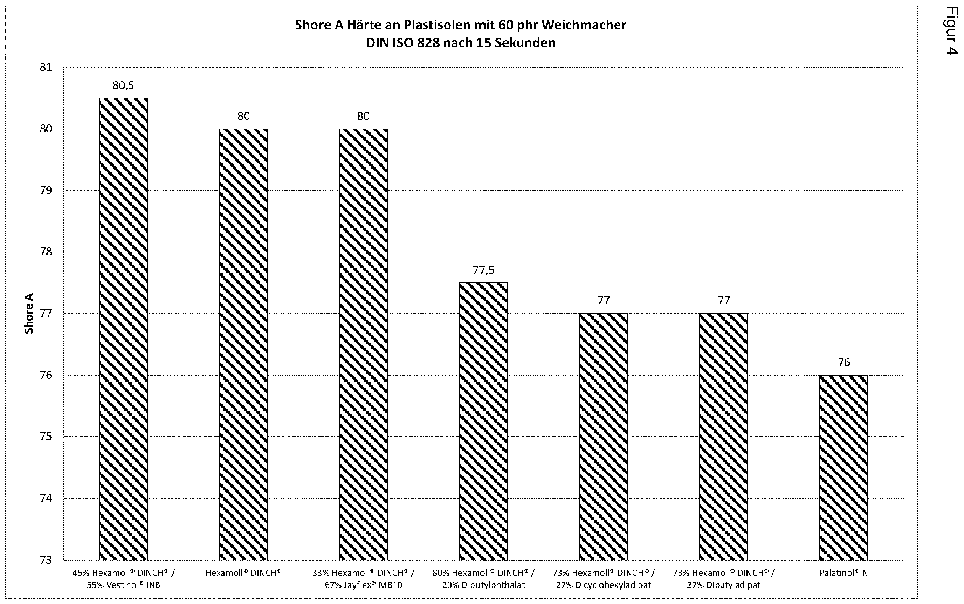

   Figur 4 zeigt die Shore A Härte von PVC-Folien, die aus PVC Plastisole, enthaltend 60 phr der erfindungsgemäß eingesetzten Weichmacher-Zusammensetzung und verschiedene Abmischungen von Hexamoll® DINCH® mit Dibutylphthalat, sowie mit den kommerziell erhältlichen Gelierhilfsmitteln Vestinol® INB oder Jayflex® MB 10, hergestellt wurden. Zusätzlich ist die Shore A-Härte von Folien dargestellt, die aus PVC Plastisole, enthaltend ausschließlich die kommerziell erhältlichen Weichmacher Hexamoll® DINCH® oder Palatinol® N, hergestellt wurden.
Figur 5

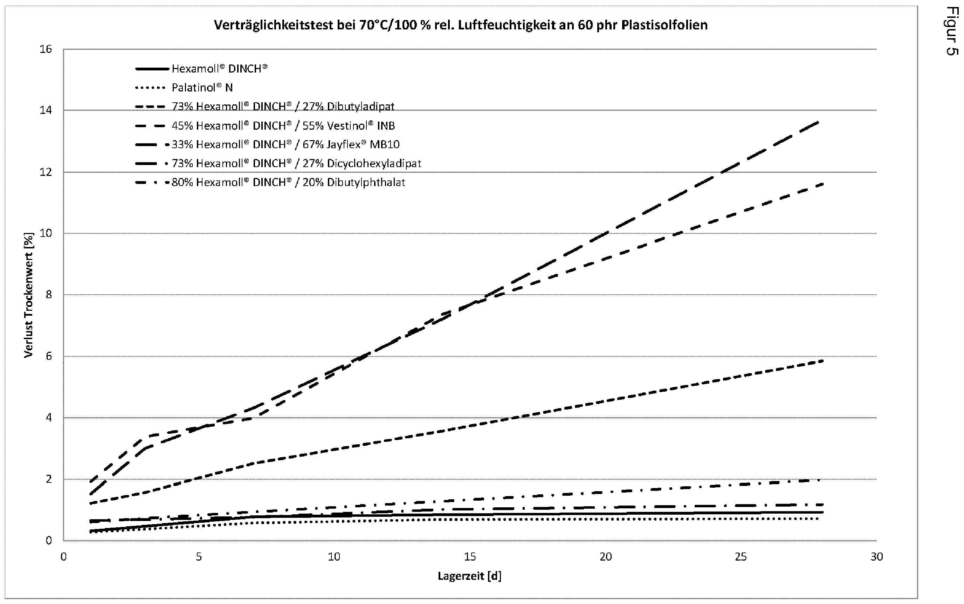

   Figur 5 zeigt die Verträglichkeit von PVC-Folien, die aus Plastisole, enthaltend 60 phr der erfindungsgemäß eingesetzten Weichmacher-Zusammensetzung und verschiedene Abmischungen von Hexamoll® DINCH® mit Dibutylphthalat, sowie mit den kommerziell erhältlichen Schnellgelierern Vestinol® INB oder Jayflex® MB 10, hergestellt wurden. Zusätzlich ist die Verträglichkeit von Folien dargestellt, die aus PVC Plastisole, enthaltend ausschließlich die kommerziell erhältlichen Weichmacher Hexamoll® DINCH® oder Palatinol® N, hergestellt wurden. Dargestellt ist der Verlust an Trockengewicht [%] in Abhängigkeit der Lagerzeit [d].
Figur 6

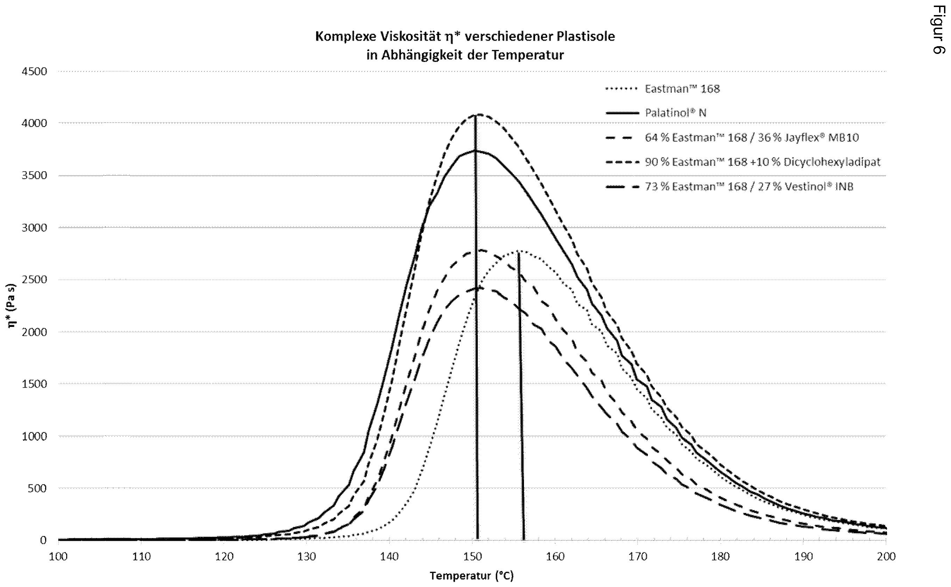

   Figur 6 zeigt das Gelierverhalten von PVC-Plastisole, die als Weichmacher spezifische Abmischungen von Eastman 168™ (Di-(2-ethylhexyl)-terephthalat) mit Dicyclohexyladipat, sowie den kommerziell erhältlichen Schnellgelierern Vestinol® INB oder Jayflex® MB 10 enthalten. Der Anteil des Schnellgelierers in den Weichmachermischungen ist so gewählt, dass die Geliertemperatur von Palatinol® N erreicht wird. Dargestellt ist die komplexe Viskosität η* [Pa*s] der Plastisole in Abhängigkeit der Temperatur [°C]. Zusätzlich ist als Vergleich das Gelierverhalten von PVC-Plastisolen dargestellt, die ausschließlich die kommerziell erhältlichen Weichmacher Eastman 168™ oder Palatinol® N enthalten. Der Gesamtweichmachergehalt der Plastisole beträgt 100 phr.
Figur 7

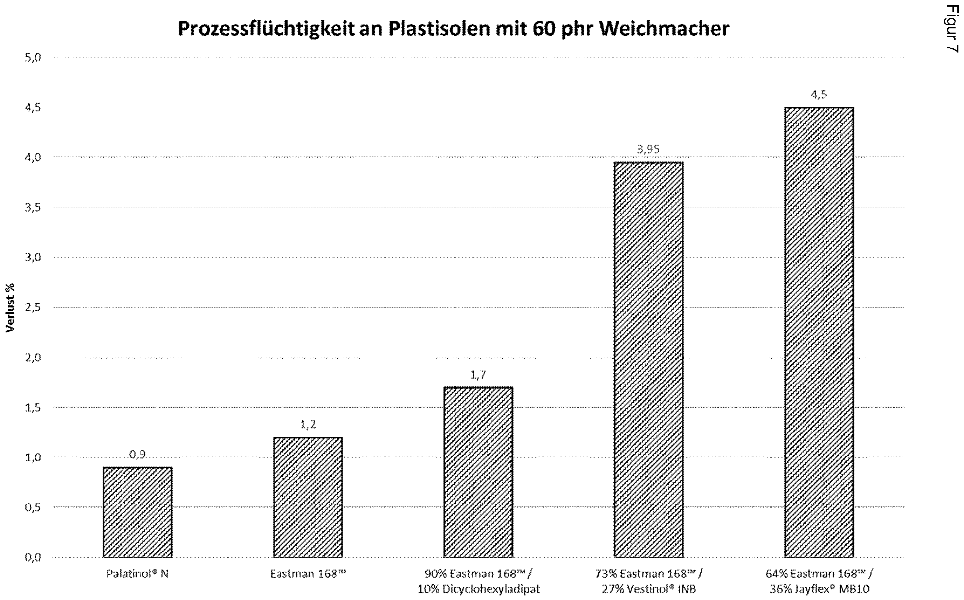

   Figur 7 zeigt die Prozessflüchtigkeit von PVC Plastisole, enthaltend 60 phr der erfindungsgemäßen Weichmacher-Zusammensetzung sowie verschiedene Abmischungen von Eastman 168™ mit den kommerziell erhältlichen Schnellgelierern Vestinol® INB oder Jayflex® MB 10. Die Zusammensetzung der Abmischungen mit Eastman 168™ entspricht den in Figur 1 dargestellten Konzentrationen, sodass eine Geliertemperatur von 150 °C erreicht wird. Dargestellt ist der Gewichtsverlust der Plastisole in %. Zusätzlich ist die Prozessflüchtigkeit von PVC-Plastisolen dargestellt, die ausschließlich die kommerziell erhältlichen Weichmacher Eastman 168™ oder Palatinol® N enthalten.
Figur 8

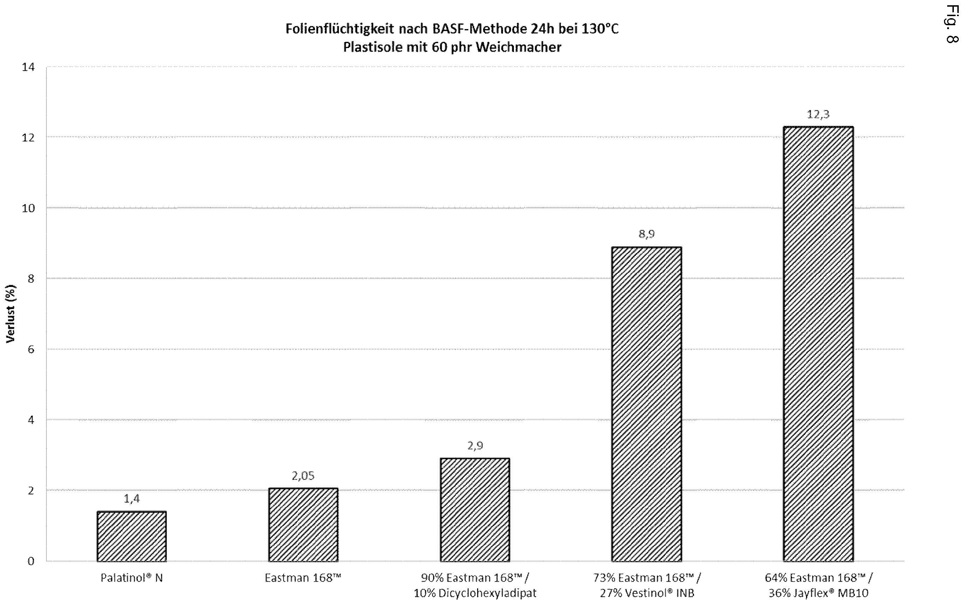

   Figur 8 zeigt die Folienflüchtigkeit von PVC-Folien, die aus Plastisole, enthaltend 60 phr der erfindungsgemäß eingesetzten Weichmacher-Zusammensetzung sowie verschiedene Abmischungen von Eastman 168™ mit den kommerziell erhältlichen Schnellgelierern Vestinol® INB oder Jayflex® MB 10, hergestellt wurden. Dargestellt ist der Gewichtsverlust der PVC-Folien in %. Zusätzlich ist die Folienflüchtigkeit von PVC-Folien dargestellt, die aus Plastisole hergestellt wurden, die ausschließlich die kommerziell erhältlichen Weichmacher Eastman 168™ oder Palatinol® N enthalten.
Figur 9

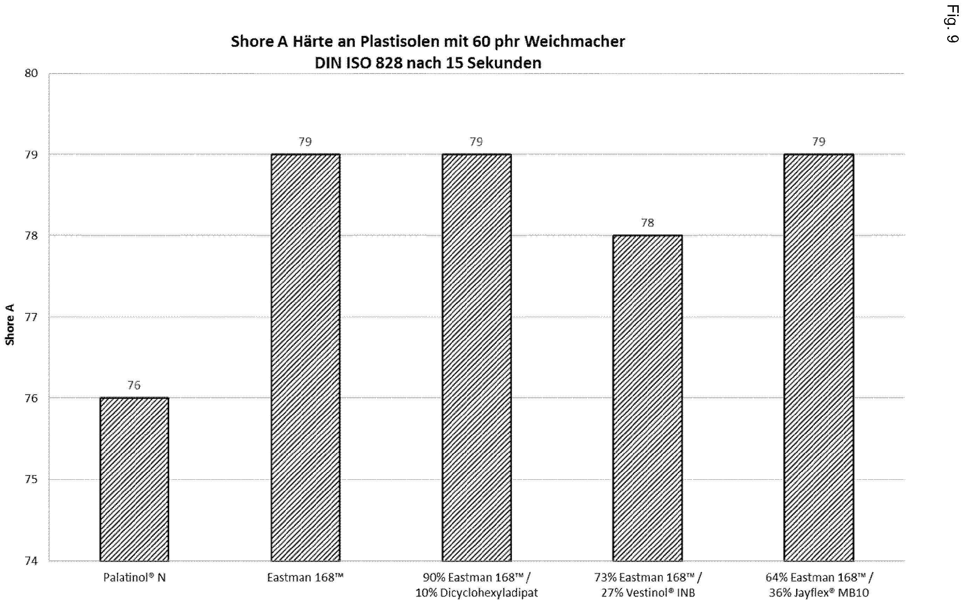

   Figur 9 zeigt die Shore A Härte von PVC-Folien, die aus PVC Plastisole, enthaltend 60 phr der erfindungsgemäß eingesetzten Weichmacher-Zusammensetzung und verschiedene Abmischungen von Eastman 168™ mit den kommerziell erhältlichen Schnellgelierern Vestinol® INB oder Jayflex® MB 10, hergestellt wurden. Zusätzlich ist die Shore A-Härte von Folien dargestellt, die aus PVC Plastisole, enthaltend ausschließlich die kommerziell erhältlichen Weichmacher Eastman 168™ oder Palatinol® N, hergestellt wurden.
Figur 10

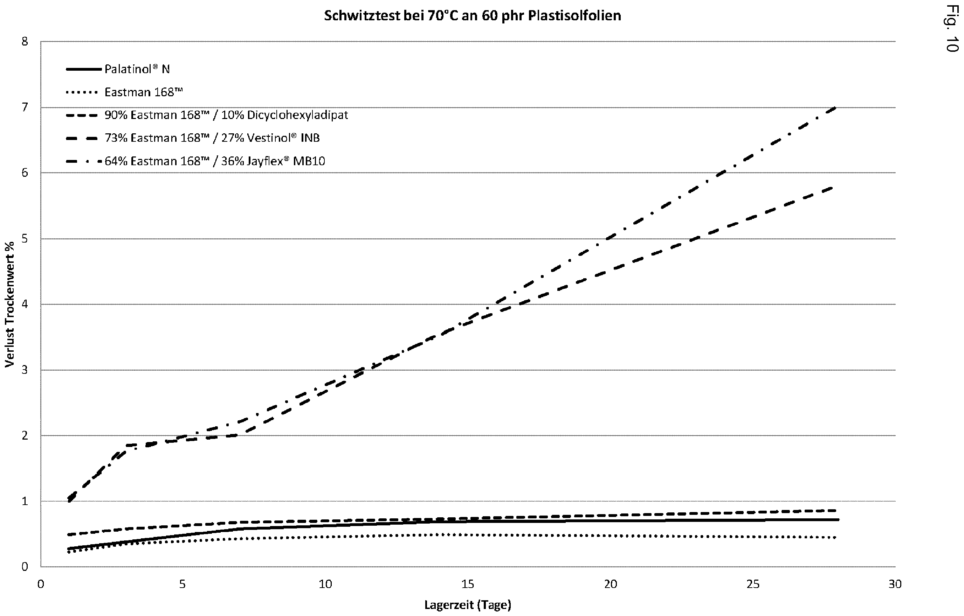

   Figur 10 zeigt die Verträglichkeit von PVC-Folien, die aus Plastisole, enthaltend 60 phr der erfindungsgemäß eingesetzten Weichmacher-Zusammensetzung und verschiedene Abmischungen von Eastman 168™ mit den kommerziell erhältlichen Schnellgelierern Vestinol® INB oder Jayflex® MB 10, hergestellt wurden. Zusätzlich ist die Verträglichkeit von Folien dargestellt, die aus PVC Plastisole, enthaltend ausschließlich die kommerziell erhältlichen Weichmacher Eastman 168™ oder Palatinol® N, hergestellt wurden. Dargestellt ist der Verlust an Trockengewicht [%] in Abhängigkeit der Lagerzeit [d].

### BEISPIELE

In den Beispielen werden folgende Einsatzstoffe verwendet:

| Einsatzstoff | Hersteller |
|---|---|
| Homopolymeres Emulsions-PVC, Markenname Solvin® 367 NC | INOVYN ChlorVinyls Limited, London, UK |
| Homopolymeres Emulsions-PVC, Markenname Vinnolit® P 70 | Vinnolit GmbH, Ismaning, Germany |
| Isononylbenzoat, Markenname Vestinol® INB | Evonik, Marl, Germany |
| Isodecylbenzoat, Markenname Jayflex® MB 10 | Exxonmobil Chemical Belgium, Antwerpen, Belgium |
| Diisononylcyclohexandicarboxylat, Markenname Hexamoll® DINCH® | BASF SE, Ludwigshafen, Deutschland |
| Diisononylphthalat, Markenname Palatinol® N | BASF SE, Ludwigshafen, Deutschland |
| Dibutylphthalat, Markenname Palatinol® C | BASF SE, Ludwigshafen, Deutschland |
| Di-(2-ethylhexyl)-terephthalat (DOTP), Markenname Eastman 168™ | Eastman Chemical B.V., Capelle aan den Ijssel, The Netherlands |
| Ba-Zn Stabilisator, Markenname Reagens® SLX/781 | Reagens S.p.A., Bologna, Italy |

### A) Herstellung einer erfindungsgemäß eingesetzten Verbindung (I)

### Beispiel A1: Synthese von Dicyclohexyladipat durch direkte Veresterung

In einem 2 L Rundhalskolben, ausgestattet mit einem Dean-Stark Wasserabscheider und einem Tropftrichter mit Druckausgleich, wurden 600 g (6,00 mol, 4,0 Äquivalente) Cyclohexanol in 500 g Toluol vorgelegt. Die Mischung wurde unter Rühren bis zum Rückfluss erhitzt und 219 g (1,50 mol, 1,0 Äquivalente) Adipinsäure gefolgt von 11,5 g (0,12 mol, 8 mol-%) 99,9%iger Schwefelsäure in 3 bis 4 Portionen zugegeben, wann immer sich die Umsetzung verlangsamte. Der Reaktionsverlauf wurde anhand der Menge an abgeschiedenem Wasser in der Dean-Stark-Apparatur verfolgt. Nach vollständigem Umsatz wurde dem Reaktionsgemisch eine Probe entnommen und mittels Gaschromatografie (GC) analysiert. Die Reaktionsmischung wurde auf Raumtemperatur abgekühlt, in einen Scheidetrichter überführt und zweimal mit gesättigter NaHCO₃-Lösung gewaschen. Die organische Phase wurde mit gesättigter Kochsalzlösung gewaschen, mit wasserfreiem Na₂SO₄ getrocknet und das Lösungsmittel unter reduziertem Druck entfernt.

Das so erhaltene Dicyclohexyladipat ist ein weißer Feststoff mit einem Schmelzpunkt von 34 °C und besitzt eine Säurezahl von 0,03 mg KOH/g, einen Wassergehalt von 0,02 % und eine Reinheit nach GC von 99,86 %.

### B) Bestimmung der Lösetemperatur nach DIN 53408

Zur Charakterisierung des Gelierverhaltens der erfindungsgemäß eingesetzten Verbindungen (I) in PVC wurde die Lösetemperatur nach DIN 53408 bestimmt. Je niedriger die Lösetemperatur desto besser ist das Gelierverhalten der betreffenden Substanz für PVC.

In der nachfolgenden Tabelle sind die Lösetemperaturen des erfindungsgemäß eingesetzten Weichmachers Dicyclohexyladipat und als Vergleich die Lösetemperaturen der kommerziell erhältlichen Schnellgelierer Vestinol® INB und Jayflex® MB 10, die kom-merziell erhältlichen Weichmacher Hexamoll® DINCH®, Eastman 168™ und Palatinol® N, aufgeführt.

| Beispiel | Substanz | Lösetemperatur nach DIN 53408 [°C] |
|---|---|---|
| B1 * | Dicyclohexyladipat | 93 |
| B2 | Vestinol® INB | 128 |
| B3 | Jayflex® MB 10 | 131 |
| B4 * | Hexamoll® DINCH® | 151 |
| B5 * | Eastman 168™ | 144 |
| B6 | Palatinol® N | 131 |

| | | |
|---|---|---|
| * Diese Verbindungen sind in den erfindungsgemäßen Weichmacher-Zusammensetzungen eingesetzt. | | |

Wie aus der Tabelle ersichtlich, zeigt der erfindungsgemäß eingesetzte Schnellgelierer Dicyclohexyladipat eine deutlich niedrigere Lösetemperatur als kommerziell erhältlichen Schnellgelierer Vestinol® INB, Jayflex® MB 10, Hexamoll® DINCH®, Eastman 168™ und Palatinol® N.

### C) Anwendungstechnische Prüfungen

### C1) Bestimmung des Gelierverhaltens von PVC-Plastisolen enthaltend die erfindungsgemäße Weichmacher-Zusammensetzung

Zur Untersuchung des Gelierverhaltens von PVC-Plastisolen auf Basis der erfindungsgemäßen Weichmacher-Zusammensetzungen, wurden PVC-Plastisole, welche Weichmacher-Zusammensetzungen in unterschiedliche Mengenverhältnissen enthalten, nach folgender Rezeptur hergestellt:

| Einsatzstoff | Anteil [phr] |
|---|---|
| PVC (Mischung aus 70 Gewichtsteilen Homopolymeres Emulsions-PVC, Markenname Solvin® 367 NC und 30 Gewichtsteilen Homopolymeres Emulsions-PVC, Markenname Vinnolit® P 70) | 100 |
| Erfindungsgemäße Weichmacher-Zusammensetzung | 100 |
| Ba-Zn Stabilisator, Typ Reagens® SLX/781 | 2 |

Als Vergleich wurden zudem Plastisole hergestellt, welche Vergleichs-Weichmacher als Einzelkomponenten enthalten.

Die Herstellung der Plastisole erfolgte in der Weise, dass die zwei PVC-Typen in einem PE(Polyethylen)-Becher zusammen eingewogen wurden. In einen zweiten PE-Becher wurden die flüssigen Komponenten eingewogen. Mit Hilfe eines Dissolvers (Fa. Jahnke & Kunkel, IKA-Werk, Typ RE-166 A, 60-6000 1/min, Durchmesser Dissolverscheibe = 40 mm) wurde bei 400 U/min das PVC in die flüssigen Komponenten eingerührt. Nachdem ein Plastisol entstanden war, wurde die Drehzahl auf 2500 1/min erhöht und 150 s homogenisiert. Das Plastisol wurde aus dem PE-Becher in eine Stahlschale überführt und diese in einem Exsikkator einem Druck von 10 mbar ausgesetzt. Dadurch wurde die in dem Plastisol enthaltene Luft entfernt. Je nach Luftgehalt blähte sich das Plastisol mehr oder weniger stark auf. In diesem Stadium wurde durch Schütteln des Exsickators die Oberfläche des Plastisols zerstört und zum Kollabieren gebracht. Ab diesem Zeitpunkt wurde das Plastisol noch weitere 15 min in dem Exsikkator bei einem Druck von 10 mbar belassen. Danach wurde die Vakuumpumpe abgeschaltet, der Exsikkator belüftet und das Plastisol wieder in den PE-Becher überführt. Das so erhaltene Plastisol wurde für die rheologischen Messungen verwendet. Messbeginn war bei allen Plastisolen 30 min nach der Homogenisierung.

Um ein flüssiges PVC-Plastisol zu gelieren und vom Zustand homogen in Weichmacher dispergierter PVC-Partikel in eine homogene, feste Weich-PVC-Matrix zu überführen, muss die dafür notwendige Energie in Form von Wärme zugeführt werden. In einem Verarbeitungsprozess stehen dafür die Parameter Temperatur und Verweilzeit zur Verfügung. Je schneller die Gelierung abläuft (Indiz ist hier die Lösetemperatur, d. h. je niedriger diese ist, desto schneller geliert das Material), umso geringer kann die Temperatur (bei gleicher Verweilzeit) oder die Verweilzeit (bei gleicher Temperatur) gewählt werden.

Die Untersuchung des Gelierverhaltens eines Plastisols erfolgte nach interner Methode mit einem Rheometer MCR302 der Firma Anton Paar. Gemessen wurde hierbei die Viskosität der Paste unter Aufheizen bei konstanter, geringer Scherung (Oszillation).

Für die Oszillationsversuche wurden folgende Parameter verwendet:
- Messsystem: Parallele Platten, 50 mm Durchmesser
- Amplitude: 1%
- Frequenz: 1 Hz
- Spaltbreite: 1 mm
- Ausgangstemperatur: 20 °C
- Temperaturprofil: 20 °C bis 200 °C
- Heizrate: 10 K/min
- Anzahl der Messpunkte: 201
- Messdauer der einzelnen Messpunkte: 0,09 min

Die Messung erfolgte in zwei Schritten. Der erste Schritt diente der Temperierung der Probe. Bei 20 °C wurde das Plastisol für 2 min bei konstanter Amplitude (gamma) mit γ = 1 % leicht geschert. Im zweiten Schritt wurde das Temperaturprogramm verwendet. Bei der Messung wurden der Speichermodul und der Verlustmodul aufgezeichnet. Aus diesen beiden Größen wurde die komplexe Viskosität η*errechnet. Die Temperatur, bei der das Maximum der komplexen Viskosität erreicht wurde, wurde als die Geliertemperatur des Plastisols bezeichnet.

### C2) Bestimmung des Gelierverhaltens von PVC-Plastisolen auf Basis der erfindungsgemäßen Weichmacher-Zusammensetzung im Vergleich zu PVC-Plastisolen, die Vergleichs-Weichmacher-Zusammensetzungen oder Vergleichs-Weichmacher enthalten

Um das Gelierverhalten von PVC-Plastisolen, die die erfindungsgemäßen Weichmacher-Zusammensetzungen enthalten, mit PVC-Plastisolen, die Vergleichs-Weichmacher-Zusammensetzungen oder Vergleichs-Weichmachern enthalten, zu vergleichen, wurde wie unter C1) beschrieben vorgegangen.

### C3) Bestimmung der Prozessflüchtigkeit der erfindungsgemäßen Weichmacher-Zusammensetzungen im Vergleich zu Vergleichs-Weichmacher-Zusammensetzungen und Vergleichs-Weichmachern

Unter der Prozessflüchtigkeit versteht man den Gewichtsverlust an Weichmacher während der Verarbeitung von Plastisolen. Wie unter C2) beschrieben wurden Plastisole mit einer erfindungsgemäßen Weichmacher-Zusammensetzung und Plastisole mit Vergleichs-Weichmacher-Zusammensetzungen hergestellt.

Es wurde folgende Rezeptur verwendet:

| Einsatzstoff | Anteil [phr] |
|---|---|
| PVC (Mischung aus 70 Gewichtsteilen Homopolymeres Emulsions-PVC, Markenname Solvin® 367 NC und 30 Gewichtsteilen Homopolymeres Emulsions-PVC, Markenname Vinnolit® P 70) | 100 |
| Weichmacher-Zusammensetzung | 60 |
| Ba-Zn Stabilisator, Typ Reagens® SLX/781 | 2 |

Als Vergleich wurden zudem Plastisole hergestellt, die ausschließlich Vergleichs-Weichmacher als Einzelkomponente enthalten.

### Herstellung einer Vorfolie

Um an den Plastisolen anwendungstechnische Eigenschaften bestimmen zu können, muss das flüssige Plastisol in eine verarbeitbare feste Folie überführt werden. Dazu wurde das Plastisol bei niedriger Temperatur vorgeliert. Die Gelierung der Plastisole erfolgte in einem Mathisofen.

Dabei wurden folgende Einstellungen am Mathisofen verwendet:
- Abluft: Klappe ganz offen
- Frischluft: offen
- Umluft: maximale Position
- Oberluft/Unterluft: Oberluft Stellung 1

Es wurde ein neues Relaispapier in die Einspannvorrichtung am Mathisofen eingespannt. Der Ofen wurde auf 140 °C vorgeheizt und die Gelierzeit auf 25 s eingestellt. Für die Spalteinstellung wurde der Spalt zwischen Papier und Rakel mit der Dickenschablone auf 0,1 mm eingestellt. Die Dickenmessuhr wurde auf 0,1 mm gestellt. Dann wurde der Spalt auf einen Wert von 0,7 mm auf der Messuhr eingestellt.

Das Plastisol wurde auf das Papier aufgetragen und mit dem Rakel glatt gestrichen. Anschließend wurde über den Startknopf die Einspannvorrichtung in den Ofen gefahren. Nach 25 s wurde die Einspannvorrichtung wieder aus dem Ofen gefahren. Das Plastisol war geliert, und die entstandene Folie wurde anschließend in einem Stück von dem Papier abgezogen. Die Dicke dieser Folie betrug ca. 0,5 mm.

### Bestimmung der Prozessflüchtigkeit

Zur Bestimmung der Prozessflüchtigkeit wurde mit einem Shore-Härte-Stanzeisen aus der Vorfolie je 3 quadratische Probekörper (49 x 49 mm) ausgestanzt, gewogen und anschließend 2 Minuten bei 190 °C im Mathisofen geliert. Nach dem Abkühlen wurden diese Probekörper zurückgewogen und der Gewichtsverlust in % errechnet. Die Probekörper wurden dazu immer exakt auf der gleichen Stelle des Relaispapiers positioniert.

### C4) Bestimmung der Folienflüchtigkeit von Folien von Plastisolen, enthaltend die erfindungsgemäßen Weichmacher-Zusammensetzungen, im Vergleich zu Folien hergestellt aus Plastisolen, enthaltend Vergleichs-Weichmacher-Zusammensetzungen oder Vergleichs-Weichmacher

Die Folienflüchtigkeit ist ein Maß für die Flüchtigkeit eines Weichmachers im fertigen weichgemachten PVC-Artikel. Für die Prüfung der Folienflüchtigkeit wurden Plastisole, enthaltend die erfindungsgemäßen Weichmacher-Zusammensetzung und Plastisole mit enthaltend Vergleichs- Weichmacher-Zusammensetzungen wie unter C3) beschrieben hergestellt. Zudem wurden Plastisole hergestellt, die ausschließlich die Vergleichs-Weichmacher als Einzelkomponente enthalten.

Für die Prüfungen wurde hier aber nicht erst eine Vorfolie hergestellt, sondern das Plastisol wurde direkt 2 min bei 190 °C im Mathisofen geliert. An den so erhaltenen ca. 0,5 mm dicken Folien wurde die Prüfung der Folienflüchtigkeit durchgeführt.

### Prüfung der Folienflüchtigkeit über 24 h bei 130 °C

Für die Bestimmung der Folienflüchtigkeit wurden aus den 2 min bei 190 °C gelierten Plastisolen vier Einzelfolien (150 x 100 mm) ausgeschnitten, gelocht und gewogen. Die Folien wurden an einen rotierenden Stern in einen auf 130 °C eingestellten Heraeus Trockenschrank Typ 5042 E gehängt. In dem Schrank wurde 18 mal pro Stunde die Luft gewechselt. Dies entspricht 800 l/h Frischluft. Nach 24 Stunden in dem Schrank wurden die Folien entnommen und zurückgewogen. Der Gewichtsverlust in Prozent gibt die Folienflüchtigkeit der Weichmacher-Zusammensetzungen an.

### C5) Bestimmung der Shore A-Härte von Folien, hergestellt aus Plastisolen, enthaltend die erfindungsgemäße Weichmacher-Zusammensetzung, im Vergleich zu Folien, hergestellt aus Plastisolen, enthaltend Vergleichs-Weichmacher-Zusammensetzungen oder Vergleichs-Weichmacher

Die Shore A-Härte ist ein Maß für die Elastizität von weichgemachten PVC-Artikeln. Je niedriger die Shore-Härte, desto höher die Elastizität der PVC-Artikel. Für die Bestimmung der Shore A Härte wurden wie unter C3) beschrieben 49 x 49 mm große Folienstücke aus den Vorfolien ausgestanzt und analog der Flüchtigkeitsprüfung jeweils im Dreierpack 2 min bei 190 °C geliert. Insgesamt wurden so 27 Stück Folien geliert. Diese 27 Stücke wurden im Pressrahmen übereinander gelegt und bei 195 °C zu einem 10 mm dicken Shore-Klotz gepresst.

### Beschreibung der Shore-Härte Messung:

- Methode: DIN EN ISO 868, Okt. 2003
- Titel: Bestimmung der Eindruckhärte mit einem Durometer (Shore-Härte)
- Gerät: Fa. Hildebrand- Digital Durometer Modell DD-3
- Probekörper:
   Maße: 49 mm x 49 mm x 10 mm (Länge x Breite x Dicke) Herstellung: gepresst aus ca. 27, 0,5mm dicken Gelierfolien Presstemperatur: 195 °C = 5 °C über der Herstellung der Gelierfolien
- Lagerzeit vor Messung: 7d im Klimaraum bei 23 °C und 50 % rel. Feuchte
- Messzeit: 15 s (Dauer der Nadel auf dem Probekörper bis zum Ablesen des Wertes)
- Es werden 10 Einzelwerte gemessen und daraus der Mittelwert berechnet.

Der Messwert der Shore A Härte-Messung wurde nach jeweils 15 Sekunden abgelesen.

### C6) Bestimmung der mechanischen Werte von Folien von Plastisolen, enthaltend erfindungsgemäß eingesetzte Weichmacher-Zusammensetzungen, im Vergleich zu Folien von Plastisolen, enthaltend Vergleichs-Weichmacher-Zusammensetzungen oder Vergleichs-Weichmacher

Die mechanischen Eigenschaften von weichgemachten PVC-Artikeln werden beispielsweise mit Hilfe der Parameter Bruchdehnung, Bruchspannung und das 100 % Modul charakterisiert. Je höher dieser Wert der Bruchdehnung, desto besser die mechanischen Eigenschaften des weichgemachten PVC-Artikels. Niedrigere Werte für Bruchspannung und 100 % Modul weisen auf eine effizientere Wirkung des Weichmachers hin.

Für die Prüfung der mechanischen Werte wurden Plastisole mit einer erfindungsgemäßen Weichmacher-Zusammensetzung und Plastisole mit Vergleichs-Weichmacher-Zusammensetzungen wie unter C3) beschrieben hergestellt. Als weiterer Vergleich wurden zudem Plastisole hergestellt, die ausschließlich Vergleichs-Weichmacher als Einzelkomponente enthalten.

Für die Prüfungen wurde hier aber nicht erst eine Vorfolie hergestellt, sondern das Plastisol wurde direkt 2 min bei 190 °C im Mathisofen geliert. An den so erhaltenen ca. 0,5 mm dicken Folien wurde die Prüfung der mechanischen Eigenschaften durchgeführt.

Die Parameter Bruchdehnung, Bruchspannung und 100 % Modul werden nach DIN EN ISO 527, Teil 1 und 3, bestimmt.

Im Einzelnen wird wie folgt vorgegangen:
- Maschine: Zwicki Typ TMZ 2.5/TH1S,
- Methode: Prüfung nach DIN EN ISO 527 Teil 1 und Teil 3,
- Probekörper: Folienstreifen Typ 2 nach DIN EN ISO 527 Teil 3, 150 mm lang, 15 mm breit, ausgestanzt,
- Anzahl Probekörper pro Prüfung werden 10 Proben gerissen,
- Klima: Normklima 23 °C (+-1°C), 50 % relative Luftfeuchtigkeit,
- Lagerzeit der Probekörper vor der Messung: 7 Tage im Normklima,
- Klemmen: Glatt-Konvex mit 6 bar Klemmendruck,
- Einspannlänge: 100 mm,
- Messlänge (= Einspannlänge): 100 mm,
- Prüfgeschwindigkeit: 100 mm/min.

### C7) Bestimmung der Verträglichkeit von Folien, hergestellt aus Plastisolen, enthaltend die erfindungsgemäße Weichmacher-Zusammensetzung, im Vergleich zu Folien, hergestellt aus Plastisolen, enthaltend Vergleichs-Weichmacher-Zusammensetzungen oder Vergleichs-Weichmacher

Die Verträglichkeit von Weichmachern in weichgemachten PVC-Artikeln charakterisiert, in welchem Ausmaß Weichmacher während des Gebrauchs der weichgemachten PVC-Artikel zum Ausschwitzen neigen und dadurch die Gebrauchseigenschaften des PVC-Artikels beeinträchtigen.

Für die Prüfung der Verträglichkeit wurden Plastisole mit einer erfindungsgemäßen Weichmacher-Zusammensetzung und Plastisole mit Vergleichs-Weichmacher-Zusammensetzungen wie unter C3) beschrieben hergestellt. Als weiterer Vergleich wurden zudem Plastisole hergestellt, die Vergleichs-Weichmacher als Einzelkomponente enthalten.

Für die Prüfungen wurde hier aber nicht erst eine Vorfolie hergestellt, sondern das Plastisol wurde direkt 2 min bei 190 °C im Mathisofen geliert. An den so erhaltenen ca. 0,5 mm dicken Folien wurde die Prüfung der Verträglichkeit durchgeführt.

### Prüfmethode

Zweck des Prüfverfahrens: Die Prüfung dient zur qualitativen und quantitativen Messung der Verträglichkeit von Weich-PVC-Rezepturen. Die Prüfung wurde bei erhöhter Temperatur (70 °C) und erhöhter Luftfeuchte (100 % relative Luftfeuchtigkeit) durchgeführt. Die erhaltenen Daten wurden gegen die Lagerzeit ausgewertet.

Probekörper: Zur Standardprüfung werden je Rezeptur 10 Prüfkörper (Folien) mit einer Größe von 75 x 110 x 0,5 mm verwendet. Die Folien werden an der Breitseite gelocht, beschriftet und gewogen. Die Beschriftung muss wischfest sein und kann z. B. mit dem Lötkolben erfolgen.

Prüfgeräte: Wärmeschrank, Analysenwaage, Temperaturmessgerät mit Fühler zur Messung der Innenraumtemperatur des Wärmeschrankes, Becken aus Glas, Metallgestelle aus nichtrostendem Material.

### Prüftemperatur: 70 °C

### Prüfmedium: entstehender Wasserdampf bei 70 °C aus vollentsalztem Wasser

Durchführung: Es wurde die Temperatur im Innenraum des Wärmeschrankes auf die geforderten 70 °C eingestellt. Die Prüffolien wurden auf ein Drahtgestell aufgehängt und in eine Glaswanne, die etwa 5 cm hoch mit Wasser (VE-Wasser) gefüllt war, hineingestellt. Es wurden nur Folien gleicher Zusammensetzung in einem gekennzeichneten und nummerierten Becken gelagert, um Beeinflussung zu vermeiden und die Entnahme nach den jeweiligen Lagerzeiten zu erleichtern. Die Glaswanne wurde mit einer Polyethylen-Folie wasserdampfdicht verschlossen, damit der später in der Glaswanne entstehende Wasserdampf nicht entweicht.

Lagerzeit und Bestimmung: Nach jeweils 1, 3, 7, 14 und 28 Tagen Lagerzeit wurden jeweils 2 Folien (Doppelbestimmung) aus der Glaswanne entnommen und für 1 Stunde frei hängend an der Luft klimatisiert. Danach wurde die Folie im Abzug mit Methanol gereinigt (mit Methanol angefeuchtetes Handtuch) und gewogen (Nasswert). Anschließend wurde die Folie für 16 Stunden bei 70 °C in einem Trockenschrank (natürliche Konvektion) frei hängend getrocknet. Nach Entnahme aus dem Trockenschrank wurde die Folie für 1 Stunde im Labor frei hängend konditioniert und anschließend erneut gewogen (Trockenwert). Als Prüfergebnis angegeben wird jeweils der arithmetische Mittelwert der Gewichtsänderungen aus der Bestimmung des Trockenwertes.

### D) Anwendungstechnische Prüfungen von erfindungsgemäßen Weichmacher-Zusammensetzungen enthaltend Verbindungen der Formel (II.a)

### D1) Bestimmung des Gelierverhaltens von PVC-Plastisolen enthaltend die erfindungsgemäße Weichmacher-Zusammensetzung enthaltend Verbindungen der Formel (II.a)

Nach der unter C1 beschriebenen Rezeptur wurden zur Untersuchung des Gelierverhaltens von PVC-Plastisolen auf Basis der erfindungsgemäßen Weichmacher-Zusammensetzungen PVC-Plastisole, die Mischungen des kommerziell erhältlichen Weichmachers Hexamoll® DINCH® mit dem Gelierhilfsmittel Dicyclohexyladipat in unterschiedliche Mengenverhältnissen enthalten hergestellt.

Als Vergleich wurden zudem Plastisole hergestellt, die ausschließlich die kommerziell erhältlichen Weichmacher Hexamoll® DINCH® oder Palatinol® N enthalten.

Die Herstellung der Plastisole und die Untersuchung des Gelierverhaltens erfolgte wie unter C1) beschrieben.

PVC-Plastisole mit der zuvor genannten erfindungsgemäßen Weichmacher-Zusammensetzung gelieren im Vergleich zu dem PVC-Plastisol, welches ausschließlich den kommerziell erhältlichen Weichmacher Hexamoll® DINCH® enthält, bei signifikant niedrigeren Temperaturen. Bereits bei einer Zusammensetzung von 73 % Hexamoll® DINCH® und 27 % Dicyclohexyladipat wird eine Geliertemperatur von 150 °C erreicht, die der Geliertemperatur des kommerziell erhältlichen Weichmachers Palatinol® N entspricht und die für viele Plastisolanwendungen ausreichend ist. Durch weitere Erhöhung des Anteils des Gelierhilfsmittels Dicyclohexyladipat in den erfindungsgemäß eingesetzten Weichmacher-Zusammensetzungen lässt sich die Geliertemperatur der Plastisole weiter deutlich absenken.

### D2) Bestimmung des Gelierverhaltens von PVC-Plastisolen auf Basis der erfindungsgemäßen Weichmacher-Zusammensetzung enthaltend Verbindungen der Formel (II.a) im Vergleich zu Vergleichs-PVC-Plastisolen

Um das Gelierverhalten von PVC-Plastisolen, die die erfindungsgemäßen Weichmacher-Zusammensetzungen enthalten, mit PVC-Plastisolen, die Weichmacher-Zusammensetzungen aus herkömmlichen Schnellgelierern enthalten, zu vergleichen, wurde analog der in D1) beschriebenen Methode vorgegangen. Dabei wurde zunächst für die herkömmlichen Schnellgelierer Vestinol® INB und Jayflex® MB 10 das Mischungsverhältnis mit dem kommerziell erhältlichen Weichmacher Hexamoll® DINCH® ermittelt, welches eine Geliertemperatur von 150 °C bewirkt, der Geliertemperatur des kommerziell erhältlichen Weichmachers Palatinol® N entspricht und die für viele Plastisolanwendungen ausreichend ist.

Für Vestinol® INB liegt dieses Mischungsverhältnis bei 55 % Vestinol® INB und 45 % Hexamoll® DINCH® und für Jayflex® MB 10 bei 67 % Jayflex® MB 10 und 33 % Hexamoll® DINCH®.

In Figur 1 sind die Gelierkurven der PVC-Plastisole mit Weichmacher-Zusammensetzungen aus den kommerziell erhältlichen Schnellgelierern Vestinol® INB und Jayflex® MB im Vergleich zu den Gelierkurven der PVC-Plastisole, enthaltend die erfindungsgemäßen Weichmacher-Zusammensetzungen, zusammengestellt. Als Vergleich sind zudem die Gelierkurven der PVC-Plastisole enthalten, die ausschließlich die kommerziell erhältlichen Weichmacher Hexamoll® DINCH® oder Palatinol® N enthalten. Aus der Figur 1 ist sehr gut ersichtlich, dass in den erfindungsgemäßen Weichmacher-Zusammensetzungen bereits ein Anteil des erfindungsgemäßen Schnellgelierers Dicyclohexyladipat von nur 27 % ausreicht, um eine Geliertemperatur von 150 °C zu erzielen, die der Geliertemperatur des kommerziell erhältlichen Weichmachers Palatinol® N entspricht und die für viele Plastisolanwendungen ausreichend ist. Hingegen werden bei den Weichmacher-Zusammensetzungen enthaltend die herkömmlichen Schnellgelierer Vestinol® INB oder Jayflex® MB 10, wesentlich höhere Anteile von 55 % Vestinol® INB bzw. 67 % Jayflex® MB 10 benötigt, um eine Geliertemperatur der Plastisole von 150 °C zu erzielen. Der erfindungsgemäß eingesetzte Schnellgelierer Dicyclohexyladipat besitzt demnach eine deutlich bessere Gelierwirkung als die herkömmlichen Schnellgelierer Vestinol® INB und Jayflex® MB 10.

### D3) Bestimmung der Prozessflüchtigkeit der erfindungsgemäßen Weichmacher-Zusammensetzungen enthaltend Verbindungen der Formel (II.a) im Vergleich zu Vergleichs-Weichmacher-Zusammensetzungen und Vergleichs-Weichmachern

Wie unter D2) beschrieben wurden Plastisole hergestellt mit einer Weichmacher-Zusammensetzung aus 27 % des Schnellgelierers Dicyclohexyladipat und 73 % des kommerziell erhältlichen Weichmachers Hexamoll® DINCH® und mit den Weichmacher-Zusammensetzungen aus 55 % des kommerziell erhältlichen Gelierhilfsmittels Vestinol® INB und 45 % des kommerziell erhältlichen Weichmachers Hexamoll® DINCH® sowie 67 % des kommerziell erhältlichen Schnellgelierers Jayflex® MB 10 und 33 % des kommerziell erhältlichen Weichmachers Hexamoll® DINCH®. Dabei wurde die unter C3) beschriebene Rezeptur verwendet.

Als Vergleich wurden zudem Plastisole hergestellt, die ausschließlich die kommerziell erhältlichen Weichmacher Hexamoll® DINCH® oder Palatinol® N enthalten.

Die Herstellung einer Vorfolie und die Bestimmung der Prozessflüchtigkeit erfolgte wie unter C3) beschrieben.

Wie aus Figur 2 sehr gut ersichtlich, ist die Prozessflüchtigkeit der erfindungsgemäßen Weichmacher-Zusammensetzung aus 27 % Dicyclohexyladipat und 73 % Hexamoll® DINCH® deutlich niedriger als die Prozessflüchtigkeit der Weichmacher-Zusammensetzungen aus 55 % Vestinol® INB und 45 % Hexamoll® DINCH® sowie 67 % Jayflex® MB 10 und 33 % Hexamoll® DINCH®. Die Prozessflüchtigkeit der erfindungsgemäßen Zusammensetzung ist ebenfalls geringer als die Flüchtigkeit einer Mischung aus 20 % Di-n-Butylphthalat und 80 % Hexamoll® DINCH® und als die Flüchtigkeit einer Mischung aus 27 % Di-n-Butyladipat und 73 % Hexamoll® DINCH®. Bei der Verarbeitung der Plastisole auf Basis der erfindungsgemäß eingesetzten Weichmacher-Zusammensetzungen geht also deutlich weniger Weichmacher verloren.

Die Prozessflüchtigkeit der erfindungsgemäßen Weichmacher-Zusammensetzung aus 27 % Dicyclohexyladipat und 73 % Hexamoll® DINCH® ist allerdings höher als die der reinen Weichmacher Hexamoll® DINCH® bzw. Palatinol® N.

### D4) Bestimmung der Folienflüchtigkeit von Folien von Plastisolen, enthaltend die erfindungsgemäßen Weichmacher-Zusammensetzungen enthaltend Verbindungen der Formel (II.a), im Vergleich zu Vergleichs-Folien

Für die Prüfung der Folienflüchtigkeit wurden Plastisole, enthaltend die erfindungsgemäßen Weichmacher-Zusammensetzung aus 27 % des Schnellgelierers Dicyclohexyladipat und 73 % Hexamoll® DINCH® und Plastisole mit Weichmacher-Zusammensetzungen aus 55 % des kommerziell erhältlichen Vestinol® INB und 45 % Hexamoll® DINCH®, 67 % Jayflex® MB 10 und 33 % Hexamoll® DINCH®, 20 % Di-n-Butylphthalat und 80 % Hexamoll® DINCH® sowie eine Mischung aus 27 % Di-n-Butyladipat und 73 % Hexamoll® DINCH® hergestellt wie unter D3) beschrieben. Als Vergleich wurden zudem Plastisole hergestellt, die ausschließlich die kommerziell erhältlichen Weichmacher Hexamoll® DINCH® oder Palatinol® N enthalten.

Prüfung der Folienflüchtigkeit erfolgte wie unter C4) beschrieben.

Wie aus Figur 3 sehr gut ersichtlich, ist die Folienflüchtigkeit der erfindungsgemäßen Weichmacher-Zusammensetzung aus 27 % Dicyclohexyladipat und 73 % Hexamoll® DINCH® deutlich niedriger als die Folienflüchtigkeit der Weichmacher-Zusammensetzungen aus 55 % Vestinol® INB und 45 % Hexamoll® DINCH® sowie 67 % Jayflex® MB 10 und 33 % Hexamoll® DINCH®. Die Folienflüchtigkeit der erfindungsgemäßen Zusammensetzung ist ebenfalls geringer als die Flüchtigkeit einer Mischung aus 20 % Di-n-Butylphthalat und 80 % Hexamoll® DINCH® und als die Flüchtigkeit einer Mischung aus 27 % Di-n-Butyladipat und 73 % Hexamoll® DINCH®. Bei PVC-Folien, die die erfindungsgemäßen Weichmacher-Zusammensetzungen enthalten, entweicht also im fertigen weichgemachten PVC-Artikel weniger Weichmacher.

Die Folienflüchtigkeit der erfindungsgemäßen Weichmacher-Zusammensetzung aus 27 % Dicyclohexyladipat und 73 % Hexamoll® DINCH® ist allerdings höher als die der reinen Weichmacher Hexamoll® DINCH® bzw. Palatinol® N.

### D5) Bestimmung der Shore A-Härte von Folien, hergestellt aus Plastisolen, enthaltend die erfindungsgemäße Weichmacher-Zusammensetzung, im Vergleich zu Vergleichs-Folien

Für die Bestimmung der Shore A Härte wurden wie unter D3) beschrieben 49 x 49 mm große Folienstücke aus den Vorfolien ausgestanzt und analog der Flüchtigkeitsprüfung jeweils im Dreierpack 2 min bei 190 °C geliert.

Die Bestimmung der Shore A Härte erfolgte wie unter C5) beschrieben.

Wie aus Figur 4 sehr gut ersichtlich, ist die Shore A-Härte der Folie aus dem Plastisol mit der Weichmacher-Zusammensetzung aus 27 % Dicyclohexyladipat und 73 % Hexamoll® DINCH® deutlich niedriger als die Shore A-Härte der Folien aus den Plastisolen mit den Weichmacher-Zusammensetzungen aus 55 % Vestinol® INB und 45 % Hexamoll® DINCH® sowie 67 % Jayflex® MB und 33 % Hexamoll® DINCH®. Die erfindungsgemäße Verwendung von Weichmacher-Zusammensetzungen, enthaltend Dicyclohexyladipat und Hexamoll® DINCH®, führt also zu einer höheren Elastizität der PVC-Artikel.

Die Shore A-Härte der Folie aus dem Plastisol mit der Weichmacher-Zusammensetzung aus 27 % Dicyclohexyladipat und 73 % Hexamoll® DINCH® ist darüber hinaus auch deutlich niedriger als die Shore A-Härte der Folie aus dem Plastisol mit dem reinen Weichmacher Hexamoll® DINCH® und in etwa vergleichbar wie die Shore A-Härte der Folie aus dem Plastisol mit dem reinen Weichmacher Palatinol® N.

### D6) Bestimmung der mechanischen Werte von Folien von Plastisolen, enthaltend erfindungsgemäß eingesetzte Weichmacher-Zusammensetzungen enthaltend Verbindungen der Formel (II.a), im Vergleich zu Vergleichs-Folien

Für die Prüfung der mechanischen Werte wurden Plastisole mit einer Weichmacher-Zusammensetzung aus 27 % Dicyclohexyladipat und 73 % Hexamoll® DINCH® und Plastisole mit den Weichmacher-Zusammensetzungen aus 55 % Vestinol® INB und 45 % Hexamoll® DINCH®, 67 % Jayflex® MB und 33 % Hexamoll® DINCH®, 20 % Di-n-Butylphthalat und 80 % Hexamoll® DINCH® sowie eine Mischung aus 27 % Di-n-Butyladipat und 73 % Hexamoll® DINCH® hergestellt, wie unter D3) beschrieben. Als Vergleich wurden zudem Plastisole hergestellt, die ausschließlich die kommerziell erhältlichen Weichmacher Hexamoll® DINCH® oder Palatinol® N (DINP) enthalten. Für die Prüfungen wurde hier aber nicht erst eine Vorfolie hergestellt, sondern das Plastisol wurde direkt 2 min bei 190 °C im Mathisofen geliert. An den so erhaltenen ca. 0,5 mm dicken Folien wurde die Prüfung der mechanischen Eigenschaften durchgeführt.

Die Bestimmung der mechanischen Werte erfolgte wie unter C6) beschrieben.

Das Plastisol mit der Weichmacher-Zusammensetzung aus 27 % Dicyclohexyladipat und 73 % Hexamoll® DINCH® zeigte folgende Eigenschaften:
- Bruchspannung: 17 MPa
- 100 % Modul: 7,3 MPa
- Bruchdehnung 330 %

Es hat sich gezeigt, dass der Wert der Bruchdehnung für die Folie, welche aus dem Plastisol mit der Weichmacher-Zusammensetzung aus 27 % Dicyclohexyladipat und 73 % Hexamoll® DINCH® hergestellt wurde, deutlich höher ist als die Werte für die Folien, welche aus den Plastisolen mit den Weichmacher-Zusammensetzungen aus 55 % Vestinol® INB und 45 % Hexamoll® DINCH® sowie 67 % Jayflex® MB 10 und 33 % Hexamoll® DINCH® hergestellt wurden, und nur etwas niedriger ist als die Werte für die Folien, welche aus den Plastisolen, die ausschließlich die reinen Weichmacher Hexamoll® DINCH® und Palatinol® N enthalten, hergestellt wurden.

Die Werte der Bruchspannung und des 100% Moduls für die Folie, welche aus dem Plastisol mit der Weichmacher-Zusammensetzung aus 27 % Dicyclohexyladipat und 73 % Hexamoll® DINCH® hergestellt wurde, liegen jeweils in einem ähnlichen Bereich als die der Folien, welche aus den Plastisolen mit den Weichmacher-Zusammensetzungen aus 55 % Vestinol® INB und 45 % Hexamoll® DINCH® sowie aus 67 % Jayflex® MB 10 und 33 % Hexamoll® DINCH® enthalten, oder den Plastisolen, die ausschließlich die reinen Weichmachern Hexamoll® DINCH® oder Palatinol® N enthalten, hergestellt wurden.

### D7) Bestimmung der Verträglichkeit von Folien, hergestellt aus Plastisolen, enthaltend die erfindungsgemäße Weichmacher-Zusammensetzung enthaltend Verbindungen der Formel (II.a), im Vergleich zu Vergleichs-Folien

Die Verträglichkeit von Weichmachern in weichgemachten PVC-Artikeln charakterisiert, in welchem Ausmaß Weichmacher während des Gebrauchs der weichgemachten PVC-Artikel zum Ausschwitzen neigen und dadurch die Gebrauchseigenschaften des PVC-Artikels beeinträchtigen.

Für die Prüfung der Verträglichkeit wurden, wie unter D3) beschrieben, Plastisole mit der erfindungsgemäßen Weichmacher-Zusammensetzung aus 27 % des Schnellgelierers Dicyclohexyladipat und 73 % Hexamoll® DINCH® und Plastisole mit den Weichmacher-Zusammensetzungen aus 55 % Vestinol® INB und 45 % Hexamoll® DINCH®, 67 % Jayflex® MB und 33 % Hexamoll® DINCH®, 20 % Di-n-Butylphthalat und 80 % Hexamoll® DINCH® sowie eine Weichmacher-Zusammensetzung aus 27 % Di-n-Butyladipat und 73 % Hexamoll® DINCH® hergestellt. Als Vergleich wurden zudem Plastisole hergestellt, die ausschließlich die kommerziell erhältlichen Weichmacher Hexamoll® DINCH® oder Palatinol® N enthalten.

Die Prüfung erfolgte wie unter C7) beschrieben.

Wie aus Figur 5 sehr gut ersichtlich, ist das Ausschwitzverhalten der erfindungsgemäßen Weichmacher-Zusammensetzung aus 27 % Dicyclohexyladipat und 73 % Hexamoll® DINCH® deutlich besser als das Ausschwitzverhalten der Weichmacher-Zusammensetzungen aus 55 % Vestinol® INB und 45 % Hexamoll® DINCH®, 67 % Jayflex® MB und 33 % Hexamoll® DINCH®, 20 % Di-n-Butylphthalat und 80 % Hexamoll® DINCH® sowie einer Mischung aus 27 % Di-n-Butyladipat und 73 % Hexamoll® DINCH® , allerdings etwas schlechter als das Ausschwitzverhalten der reinen Weichmacher Hexamoll® DINCH® und Palatinol® N.

### E) Anwendungstechnische Prüfungen von Weichmacher-Zusammensetzungen enthaltend Verbindungen der Formel (II.b)

### E1) Bestimmung des Gelierverhaltens von PVC-Plastisolen enthaltend die erfindungsgemäße Weichmacher-Zusammensetzung enthaltend Verbindungen der Formel (II.b)

Nach der unter C1) beschriebenen Rezeptur wurden zur Untersuchung des Gelierverhaltens von PVC-Plastisolen auf Basis der erfindungsgemäßen Weichmacher-Zusammensetzungen PVC-Plastisole, die Mischungen des kommerziell erhältlichen Weichmacher Eastman 168™ mit dem Schnellgelierer Dicyclohexyladipat in unterschiedliche Mengenverhältnissen enthalten hergestellt.

Als Vergleich wurden zudem Plastisole hergestellt, die ausschließlich die kommerziell erhältlichen Weichmacher Eastman 168™ oder Palatinol® N enthalten.

Die Herstellung der Plastisole und die Untersuchung des Gelierverhaltens erfolgte wie unter C1) beschrieben.

PVC-Plastisole mit der zuvor genannten erfindungsgemäßen Weichmacher-Zusammensetzung gelieren im Vergleich zu dem PVC-Plastisol, welches ausschließlich den kommerziell erhältlichen Weichmacher Eastman 168™ enthält, bei signifikant niedrigeren Temperaturen. Bereits bei einer Zusammensetzung von 90 % Eastman 168™ und 10 % Dicyclohexyladipat wird eine Geliertemperatur von 150 °C erreicht, die der Geliertemperatur des kommerziell erhältlichen Weichmachers Palatinol® N entspricht und die für viele Plastisolanwendungen ausreichend ist. Durch weitere Erhöhung des Anteils des Schnellgelierers Dicyclohexyladipat in den erfindungsgemäß eingesetzten Weichmacher-Zusammensetzungen lässt sich die Geliertemperatur der Plastisole weiter deutlich absenken.

### E2) Bestimmung des Gelierverhaltens von PVC-Plastisolen auf Basis der erfindungsgemäßen Weichmacher-Zusammensetzung enthaltend Verbindungen der Formel (II.b) im Vergleich zu Vergleichs-PVC-Plastisolen

Um das Gelierverhalten von PVC-Plastisolen, die die erfindungsgemäßen Weichmacher-Zusammensetzungen enthalten, mit PVC-Plastisolen, die Weichmacher-Zusammensetzungen aus herkömmlichen Schnellgelierern enthalten, zu vergleichen, wurde analog der in E1) beschriebenen Methode vorgegangen. Dabei wurde zunächst für die herkömmlichen Schnellgelierer Vestinol® INB und Jayflex® MB 10 das Mischungsverhältnis mit dem kommerziell erhältlichen Weichmacher Eastman 168™ ermittelt, welches eine Geliertemperatur von 150 °C bewirkt, der Geliertemperatur des kommerziell erhältlichen Weichmachers Palatinol® N entspricht und die für viele Plastisolanwendungen ausreichend ist.

Für Vestinol® INB liegt dieses Mischungsverhältnis bei 27 % Vestinol® INB und 73 % Eastman 168™ und für Jayflex® MB 10 bei 36 % Jayflex® MB 10 und 64 % Eastman 168™.

In Figur 6 sind die Gelierkurven der PVC-Plastisole mit Weichmacher-Zusammensetzungen aus den kommerziell erhältlichen Schnellgelierern Vestinol® INB und Jayflex® MB im Vergleich zu den Gelierkurven der PVC-Plastisole, enthaltend die erfindungsgemäßen Weichmacher-Zusammensetzungen, zusammengestellt. Als Vergleich sind zudem die Gelierkurven der PVC-Plastisole enthalten, die ausschließlich die kommerziell erhältlichen Weichmacher Eastman 168™ oder Palatinol® N enthalten. Aus der Figur 6 ist sehr gut ersichtlich, dass in den erfindungsgemäßen Weichmacher-Zusammensetzungen bereits ein Anteil des erfindungsgemäßen Schnellgelierers Dicyclohexyladipat von nur 10 % ausreicht, um eine Geliertemperatur von 150 °C zu erzielen, die der Geliertemperatur des kommerziell erhältlichen Weichmachers Palatinol® N entspricht und die für viele Plastisolanwendungen ausreichend ist. Hingegen werden bei den Weichmacher-Zusammensetzungen enthaltend die herkömmlichen Schnellgelierer Vestinol® INB oder Jayflex® MB 10, wesentlich höhere Anteile von 27 % Vestinol® INB bzw. 36 % Jayflex® MB 10 benötigt, um eine Geliertemperatur der Plastisole von 150 °C zu erzielen. Der erfindungsgemäß eingesetzte Schnellgelierer Dicyclohexyladipat besitzt demnach eine deutlich bessere Gelierwirkung als die herkömmlichen Schnellgelierer Vestinol® INB und Jayflex® MB 10.

### E3) Bestimmung der Prozessflüchtigkeit der erfindungsgemäßen Weichmacher-Zusammensetzungen enthaltend Verbindungen der Formel (II.b) im Vergleich zu Vergleichs-Weichmacher-Zusammensetzungen und Vergleichs-Weichmachern

Unter der Prozessflüchtigkeit versteht man den Gewichtsverlust an Weichmacher während der Verarbeitung von Plastisolen. Wie unter E2) beschrieben wurden Plastisole hergestellt mit einer Weichmacher-Zusammensetzung aus 10 % des Schnellgelierers Dicyclohexyladipat und 90 % des kommerziell erhältlichen Weichmachers Eastman 168™ sowie 27 % kommerziell erhältlichen Schnellgelierers Vestinol® INB und 73 % des kommerziell erhältlichen Weichmachers Eastman 168™, sowie 36 % des kommerziell erhältlichen Schnellgelierers Jayflex® MB 10 und 64 % des kommerziell erhältlichen Weichmachers Eastman 168™. Dabei wurde die unter C3) beschriebene Rezeptur verwendet.

Als Vergleich wurden zudem Plastisole hergestellt, die ausschließlich die kommerziell erhältlichen Weichmacher Eastman 168™ oder Palatinol® N enthalten.

Die Herstellung einer Vorfolie und die Bestimmung der Prozessflüchtigkeit erfolgte wie unter C3) beschrieben.

Wie aus Figur 7 sehr gut ersichtlich, ist die Prozessflüchtigkeit der erfindungsgemäßen Weichmacher-Zusammensetzung aus 10 % Dicyclohexyladipat und 90 % Eastman 168™ deutlich niedriger als die Prozessflüchtigkeit der Weichmacher-Zusammensetzungen aus 27 % Vestinol® INB und 73 % Eastman 168™ sowie 36 % Jayflex® MB 10 und 64 % Eastman 168™. Bei der Verarbeitung der Plastisole auf Basis der erfindungsgemäß eingesetzten Weichmacher-Zusammensetzungen geht also deutlich weniger Weichmacher verloren.

Die Prozessflüchtigkeit der erfindungsgemäßen Weichmacher-Zusammensetzung aus 10 % Dicyclohexyladipat und 90 % Eastman 168™ ist allerdings höher als die der reinen Weichmacher Eastman 168™ bzw. Palatinol® N.

### E4) Bestimmung der Folienflüchtigkeit von Folien von Plastisolen, enthaltend die erfindungsgemäßen Weichmacher-Zusammensetzungen enthaltend Verbindungen der Formel (II.b), im Vergleich zu Vergleichs-Folien

Für die Prüfung der Folienflüchtigkeit wurden Plastisole, enthaltend die erfindungsgemäßen Weichmacher-Zusammensetzung aus 10 % des Schnellgelierers Dicyclohexyladipat und 90 % Eastman 168™ und Plastisole mit Weichmacher-Zusammensetzungen aus 27 % des kommerziell erhältlichen Vestinol® INB) und 73 % des kommerziell erhältlichen Weichmachers Eastman 168™ sowie eine Weichmacher-Zusammensetzungen aus 36 % des kommerziell erhältlichen Schnellgelierers Jayflex® MB 10 und 64 % des kommerziell erhältlichen Weichmachers Eastman 168™, hergestellt wie unter E3) beschrieben. Als Vergleich wurden zudem Plastisole hergestellt, die ausschließlich die kommerziell erhältlichen Weichmacher Eastman 168™ oder Palatinol® N enthalten. Für die Prüfungen wurde hier aber nicht erst eine Vorfolie hergestellt, sondern das Plastisol wurde direkt 2 min bei 190 °C im Mathisofen geliert. An den so erhaltenen ca. 0,5 mm dicken Folien wurde die Prüfung der Folienflüchtigkeit durchgeführt.

Prüfung der Folienflüchtigkeit erfolgte wie unter C4) beschrieben.

Wie aus Figur 8 sehr gut ersichtlich, ist die Folienflüchtigkeit der erfindungsgemäßen Weichmacher-Zusammensetzung aus 10 % Dicyclohexyladipat und 90 % Eastman 168™ deutlich niedriger als die Folienflüchtigkeit der Weichmacher-Zusammensetzungen aus 27 % Vestinol® INB und 73 % Eastman 168™ sowie 36 % Jayflex® MB 10 und 64 % Eastman 168™. Bei PVC-Folien, die die erfindungsgemäßen Weichmacher-Zusammensetzungen enthalten, entweicht also im fertigen weichgemachten PVC-Artikel weniger Weichmacher.

Die Folienflüchtigkeit der erfindungsgemäßen Weichmacher-Zusammensetzung aus 10 % Dicyclohexyladipat und 90 % Eastman 168™ ist allerdings höher als die der reinen Weichmacher Eastman 168™ bzw. Palatinol® N.

### E5) Bestimmung der Shore A-Härte von Folien, hergestellt aus Plastisolen, enthaltend die erfindungsgemäße Weichmacher-Zusammensetzung enthaltend Verbindungen der Formel (II.b), im Vergleich zu Vergleichs-Folien

Die Shore A-Härte ist ein Maß für die Elastizität von weichgemachten PVC-Artikeln. Je niedriger die Shore-Härte, desto höher die Elastizität der PVC-Artikel. Für die Bestimmung der Shore A Härte wurden wie unter E3) beschrieben 49 x 49 mm große Folienstücke aus den Vorfolien ausgestanzt und analog der Flüchtigkeitsprüfung jeweils im Dreierpack 2 min bei 190 °C geliert.

Die Bestimmung der Shore A-Härte erfolgte wie unter C5) beschrieben.

Wie aus Figur 9 sehr gut ersichtlich, ist die Shore A-Härte der Folie aus dem Plastisol mit der Weichmacher-Zusammensetzung aus 10 % Dicyclohexyladipat und 90 % Eastman 168™ vergleichbar mit der Shore A-Härte der Folien aus den Plastisolen mit den Weichmacher-Zusammensetzungen aus 27 % Vestinol® INB und 73 % Eastman 168™ sowie 36 % Jayflex® MB und 64 % Eastman 168™. Die erfindungsgemäße Verwendung von Weichmacher-Zusammensetzungen, enthaltend Dicyclohexyladipat und Hexamoll® DINCH®, führt also zu einer vergleichbaren Elastizität der PVC-Artikel.

### E6) Bestimmung der mechanischen Werte von Folien von Plastisolen, enthaltend erfindungsgemäß eingesetzte Weichmacher-Zusammensetzungen enthaltend Verbindungen der Formel (II.b), im Vergleich zu Vergleichs-Folien

Für die Prüfung der mechanischen Werte wurden Plastisole mit einer Weichmacher-Zusammensetzung aus 10 % Dicyclohexyladipat und 90 % Eastman 168™ und Plastisole mit den Weichmacher-Zusammensetzungen aus 27 % Vestinol® INB und 73 % Eastman 168™, sowie 36 % Jayflex® MB und 64 % Eastman 168™ hergestellt, wie unter IIb) beschrieben. Als Vergleich wurden zudem Plastisole hergestellt, die ausschließlich die kommerziell erhältlichen Weichmacher Eastman 168™ oder Palatinol® N enthalten.

Bestimmung der mechanischen Werte erfolgte wir unter C6) beschrieben.

Das Plastisol mit der Weichmacher-Zusammensetzung aus 10 % Dicyclohexyladipat und 90 % Eastman 168™ zeigte folgende Eigenschaften:
- Bruchspannung: 17,5 MPa
- 100 % Modul: 7,6 MPa
- Bruchdehnung 330 %

Es hat sich gezeigt, dass der Wert der Bruchdehnung für die Folie, welche aus dem Plastisol mit der erfindungsgemäßen Weichmacher-Zusammensetzung aus 10 % Dicyclohexyladipat und 90 % Eastman 168™ hergestellt wurde, etwa gleich ist zu den Werten für die Folien, welche aus den Plastisolen mit den Weichmacher-Zusammensetzungen aus 27 % Vestinol® INB und 73 % Eastman 168™ hergestellt wurden, und nur etwas niedriger ist als die Werte für die Folien, welche aus dem Plastisol mit der Weichmacher-Zusammensetzung aus 36 % Jayflex® MB 10 und 64 % Eastman 168™ sowie aus den Plastisolen, die ausschließlich die reinen Weichmachern Eastman 168™ und Palatinol® N enthalten, hergestellt wurden.

Die Werte der Bruchspannung und des 100% Moduls für die Folie, welche aus dem Plastisol mit der erfindungsgemäßen Weichmacher-Zusammensetzung aus 10 % Dicyclohexyladipat und 90 % Eastman 168™ hergestellt wurde, liegen jeweils in einem ähnlichen Bereich als die der Folien, welche aus den Plastisolen hergestellt wurden, die eine Weichmacher-Zusammensetzungen aus 27 % Vestinol® INB und 73 % Eastman 168™ sowie aus 36 % Jayflex® MB 10 und 64 % Eastman 168™ enthalten, oder den Plastisolen, die ausschließlich die reinen Weichmacher Eastman 168™ oder Palatinol® N enthalten, hergestellt wurden.

### E7) Bestimmung der Verträglichkeit von Folien, hergestellt aus Plastisolen, enthaltend die erfindungsgemäße Weichmacher-Zusammensetzung enthaltend Verbindungen der Formel (II.b), im Vergleich zu Vergleichs-Folien

Für die Prüfung der Verträglichkeit wurden, wie unter E3) beschrieben, Plastisole mit der erfindungsgemäßen Weichmacher-Zusammensetzung aus 10 % des Schnellgelierers Dicyclohexyladipat und 90 % Eastman 168™ und Plastisole mit den Weichmacher-Zusammensetzungen aus 27 % Vestinol® INB und 73 % Eastman 168™, sowie 36 % Jayflex® MB und 64 % Eastman 168™ hergestellt. Als Vergleich wurden zudem Plastisole hergestellt, die ausschließlich die kommerziell erhältlichen Weichmacher Eastman 168™ oder Palatinol® N enthalten.

Die Prüfung erfolgte wie unter C7) beschrieben.

Wie aus Figur 10 sehr gut ersichtlich, ist das Ausschwitzverhalten der erfindungsgemäßen Weichmacher-Zusammensetzung aus 10 % Dicyclohexyladipat und 90 % Eastman 168™ deutlich besser als das Ausschwitzverhalten der Weichmacher-Zusammensetzungen aus 27 % Vestinol® INB und 73 % Eastman 168™, sowie 36 % Jayflex® MB und 64 % Eastman 168™, allerdings etwas schlechter als das Ausschwitzverhalten der reinen Weichmacher Eastman 168™ und Palatinol® N.

## Patentansprüche

1. Weichmacher-Zusammensetzung, enthaltend
a) eine oder mehrere Verbindung(en) der allgemeinen Formel (I), 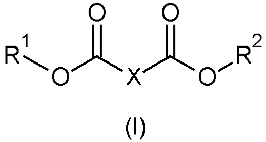 worin
X für eine unverzweigte C₂-C₈-Alkylengruppe oder eine verzweigte C₆-C₈-Alkylengruppe oder eine unverzweigte oder verzweigte C₂-C₈-Alkenylengruppe, enthaltend wenigstens eine Doppelbindung, steht und
R¹ und R² unabhängig voneinander ausgewählt sind unter C₅-C₇-Cycloalkyl, wobei die Cycloalkyl-Reste unabhängig voneinander entweder unsubstituiert sind oder mit mindestens einem C₁-C₁₀-Alkyl Rest substituiert sind,
und
b) eine oder mehrere Verbindung(en) der allgemeinen Formel (II), 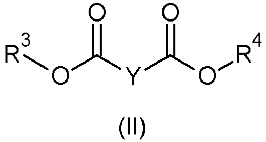 worin
R³ und R⁴ unabhängig voneinander ausgewählt sind unter verzweigten und unverzweigten C₄-C₁₂-Alkylresten,
Y ausgewählt ist unter den Gruppen der Formeln (Y.a) und (Y.b) 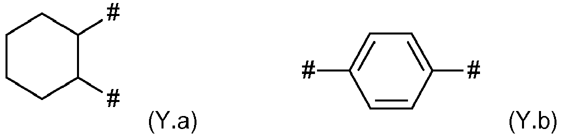 wobei # für die jeweiligen Anknüpfungspunkte zu den Estergruppen steht,
mit der Maßgabe, dass die Weichmacherzusammensetzung keine Verbindung der Formel (I.a) 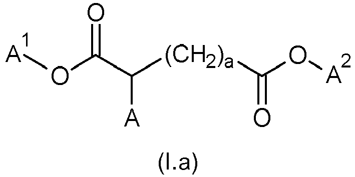 enthält, worin
A für Methyl oder Ethyl steht,
A¹ und A² unabhängig voneinander ausgewählt sind unter verzweigten und unverzweigten C₅-C₇-Cycloalkylresten, welche unsubstituiert sind oder mit wenigstens einem C₁-C₁₀-Alkylrest substituiert sind,
a 1 oder 2 ist.

2. Weichmacher-Zusammensetzung nach Anspruch 1, wobei als Verbindung der allgemeinen Formel (II) eine Verbindung der allgemeinen Formel (II.a) eingesetzt wird, 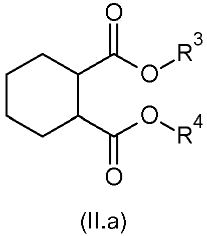 wobei
R³ und R⁴ unabhängig voneinander ausgewählt sind unter verzweigten und unverzweigten C₄-C₁₂-Alkylresten
und wobei bevorzugt
R³ und R⁴ unabhängig voneinander ausgewählt sind unter verzweigten und unverzweigten C₇-C₁₂-Alkylresten.

3. Weichmacher-Zusammensetzung nach Anspruch 1, wobei als Verbindung der allgemeinen Formel (II) eine Verbindung der allgemeinen Formel (II.b) eingesetzt wird, 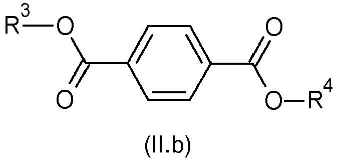 wobei
R³ und R⁴ unabhängig voneinander ausgewählt sind unter verzweigten und unverzweigten C₄-C₁₂-Alkylresten.

4. Weichmacher-Zusammensetzung nach einem der vorherigen Ansprüche, wobei in den Verbindungen der allgemeinen Formel (I) X für eine unverzweigte C₂-C₅-Alkylengruppe steht.

5. Weichmacher-Zusammensetzung nach einem der vorherigen Ansprüche, wobei in den Verbindungen der allgemeinen Formel (I) R¹ und R² unabhängig voneinander für Cyclopentyl, Cyclohexyl oder Cycloheptyl stehen.

6. Weichmacher-Zusammensetzung nach einem der vorangehenden Ansprüche, wobei in den Verbindungen der allgemeinen Formel (I) R¹ und R² beide für Cyclohexyl stehen.

7. Weichmacher-Zusammensetzung nach einem der vorangehenden Ansprüche, wobei in den Verbindungen der allgemeinen Formel (II) R³ und R⁴ beide für 2-Ethylhexyl, beide für Isononyl oder beide für 2-Propylheptyl stehen.

8. Weichmacher-Zusammensetzung nach einem der vorangehenden Ansprüche, wobei die Weichmacher-Zusammensetzung einen weiteren von den Verbindungen (I), (I.a), und (II) verschiedenen Weichmacher enthält, der ausgewählt ist unter Phthalsäuredialkylestern, Phthalsäurealkylaralkylestern, Trimellitsäuretrialkylestern, von Verbindungen (II) verschiedenen Estern von 1,2-Cyclohexandicarbonsäuren, von Verbindungen (II) verschiedene Terephthalsäuredialkylestern, 1,3- und 1,4-Cyclohexandicarbonsäurealkylester, Benzoesäurealkylester, Dibenzoesäureestern von Glycolen, Hydroxybenzoesäureestern, Estern von gesättigten Monocarbonsäuren, von Verbindungen (I) und (I.a) verschiedene Ester gesättigter und ungesättigter Dicarbonsäuren, Amiden und Estern von aromatischen Sulfonsäuren, Alkylsulfonsäureestern, Glycerinestern, Isosorbidestern, Phosphorsäureestern, Citronensäuretriestern, Alkylpyrrolidonderivaten, 2,5-Furandicarbonsäureestern, 2,5-Tetrahydrofurandicarbonsäureestern, epoxidierten Pflanzenölen, epoxidierten Fettsäuremonoalkylestern, Polyestern aus aliphatischen und/oder aromatischen Polycarbonsäuren mit wenigstens zweiwertigen Alkoholen.

9. Weichmacher-Zusammensetzung nach einem der vorangehenden Ansprüche, wobei der Gehalt an Verbindungen der allgemeinen Formel (I) in der Weichmacher-Zusammensetzung 1 bis 70 Gew.-% beträgt.

10. Weichmacher-Zusammensetzung nach einem der vorangehenden Ansprüche, wobei der Gehalt an Verbindungen der allgemeinen Formel (II) in der Weichmacher-Zusammensetzung 30 bis 99 Gew.-% beträgt.

11. Weichmacher-Zusammensetzung nach einem der vorangehenden Ansprüche, wobei das Gewichtsverhältnis zwischen Verbindungen der allgemeinen Formel (I) und Verbindungen der allgemeinen Formel (II) im Bereich von 1 : 100 bis 2 : 1 liegt.

12. Formmasse, enthaltend wenigstens ein Polymer und eine Weichmacher-Zusammensetzung wie in einem der Ansprüche 1 bis 11 definiert.

13. Formmasse nach Anspruch 12, wobei es sich bei dem Polymer um ein thermoplastisches Polymer handelt, das ausgewählt ist unter
- Homo- oder Copolymeren, die wenigstens ein Monomer einpolymerisiert enthalten, das ausgewählt ist unter C₂-C₁₀-Monoolefinen, 1,3-Butadien, 2-Chlor-1,3-butadien, Vinylalkohol und dessen C₂-C₁₀-Alkylestern, Vinylchlorid, Vinylidenchlorid, Vinylidenfluorid, Tetrafluorethylen, Glycidylacrylat, Glycidylmethacrylat, Acrylaten und Methacrylaten von C₁-C₁₀-Alkoholen, Vinylaromaten, Acrylnitril, Methacrylnitril, Maleinsäureanhydrid und α,β-ethyienisch ungesättigten Mono- und Dicarbonsäuren,
- Homo- und Copolymeren von Vinylacetalen,
- Polyvinylestern,
- Polycarbonaten,
- Polyestern,
- Polyethern,
- Polyetherketonen,
- thermoplastischen Polyurethanen,
- Polysulfiden,
- Polysulfonen,
- Polyethersulfonen,
- Cellulosealkylestern,
und Mischungen davon.

14. Formmasse nach Anspruch 13, wobei das thermoplastische Polymer ausgewählt ist unter Polyvinylchlorid (PVC), Polyvinylbutyral (PVB), Homo- und Copolymeren von Vinylacetat, Homo- und Copolymeren von Styrol, Polyacrylate, thermoplastischen Polyurethanen (TPU) oder Polysulfiden.

15. Formmasse nach einem der Ansprüche 13 oder 14, wobei es sich bei dem thermoplastischen Polymer um Polyvinylchlorid (PVC) handelt.

16. Formmasse nach Anspruch 15, wobei der Gehalt der Weichmacher-Zusammensetzung in der Formmasse 5,0 bis 300 phr beträgt.

17. Formmasse nach einem der Ansprüche 12 bis 14, enthaltend wenigstens ein von Polyvinylchlorid verschiedenes thermoplastisches Polymer, wobei der Gehalt der Weichmacher-Zusammensetzung in der Formmasse 0,5 bis 300 phr beträgt.

18. Formmasse nach Anspruch 12, wobei es sich bei dem Polymer um ein Elastomer handelt, bevorzugt ausgewählt unter natürlichen Kautschuken, synthetischen Kautschuken und Mischungen davon.

19. Formmasse nach Anspruch 18, wobei der Gehalt der Weichmacher-Zusammensetzung in der Formmasse 1,0 bis 60 phr beträgt.

20. Plastisol-Zusammensetzung enthaltend eine Weichmacher-Zusammensetzung wie in einem der Ansprüche 1 bis 11 definiert.

21. Verwendung einer Weichmacher-Zusammensetzung, wie in einem der Ansprüche 1 bis 11 definiert, als Weichmacher für thermoplastische Polymere und Elastomere.

22. Verwendung einer Weichmacher-Zusammensetzung, wie in einem der Ansprüche 1 bis 11 definiert, als Weichmacher in einem Plastisol.

23. Verwendung einer Formmasse, wie in einem der Ansprüche 12 bis 19 definiert, zur Herstellung von Formkörpern und Folien, wie beispielsweise Gehäusen von Elektrogeräten, Computergehäusen, Werkzeugen, Rohrleitungen, Kabeln, Schläuchen, Draht-Ummantelungen, Fensterprofilen, Kunststoffprofile für Förderbänder, Komponenten für den Fahrzeugbau, Reifen, Möbeln, Schaumstoff für Polster und Matratzen, Planen, Dichtungen, Verbundfolien, Selbstklebefolien, Kaschierfolien, Zeltplanen, Dachbahnen, Schallplatten, Kunstleder, Verpackungsbehältern, Klebebandfolien oder Beschichtungen.

24. Verwendung einer Formmasse, wie in einem der Ansprüche 12 bis 19 definiert, zur Herstellung von Formkörpern und Folien, die direkt mit Menschen oder Nahrungsmitteln in Kontakt kommen.

25. Verwendung wie in Anspruch 24 definiert, wobei es sich bei den Formkörpern und Folien, die direkt mit Menschen oder Nahrungsmitteln in Kontakt kommen, um Medizinprodukte, Hygieneprodukte, Lebensmittelverpackungen, Produkte für den Innenraumbereich, Spielzeuge und Kinderpflegeartikel, Sport- und Freizeitprodukte, Bekleidung oder Fasern für Gewebe handelt.

## Claims

1. A plasticizer composition comprising
a) one or two or more compound (s) of the general formula (I), 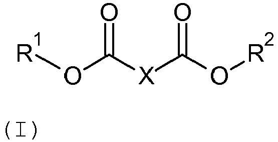 in which
X is an unbranched C₂-C₈ alkylene group or a branched C₆-C₈ alkylene group or an unbranched or branched C₂-C₈ alkenylene group, comprising at least one double bond, and
R¹ and R² independently of one another are selected from C₅-C₇ cycloalkyl, wherein the cycloalkyl radicals independently of one another either are unsubstituted or are substituted by at least one C₁-C₁₀ alkyl radical,
and
b) one or two or more compound (s) of the general formula (II), 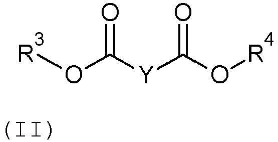 in which
R³ and R⁴ independently of one another are selected from branched and unbranched C₄-C₁₂ alkyl radicals,
Y is selected from the groups of the formulae (Y.a) and (Y.b) 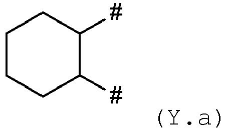 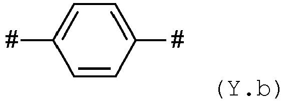 where # represents the respective points of attachment to the ester groups,
with the proviso that the plasticizer composition contains no compound of the formula (I.a) 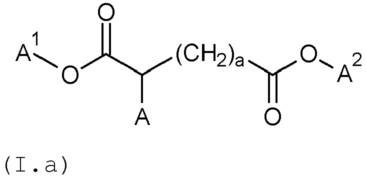 in which
A is methyl or ethyl,
A¹ and A² independently of one another are selected from branched and unbranched C₅-C₇ cycloalkyl radicals which are unsubstituted or are substituted by at least one C₁-C₁₀ alkyl radical, and
a is 1 or 2.

2. The plasticizer composition according to claim 1, the compound of the general formula (II) used being a compound of the general formula (II.a), 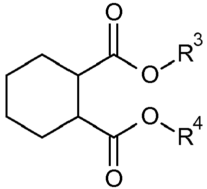 (II.a)
where
R³ and R⁴ independently of one another are selected from branched and unbranched C₄-C₁₂ alkyl radicals
and where preferably
R³ and R⁴ independently of one another are selected from branched and unbranched C₇-C₁₂ alkyl radicals.

3. The plasticizer composition according to claim 1, the compound of the general formula (II) used being a compound of the general formula (II.b), 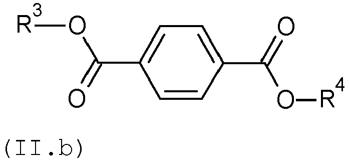 where
R³ and R⁴ independently of one another are selected from branched and unbranched C₄-C₁₂ alkyl radicals.

4. The plasticizer composition according to any of the preceding claims, X in the compounds of the general formula (I) being an unbranched C₂-C₅ alkylene group.

5. The plasticizer composition according to any of the preceding claims, R¹ and R² in the compounds of the general formula (I) independently of one another being cyclopentyl, cyclohexyl or cycloheptyl.

6. The plasticizer composition according to any of the preceding claims, R¹ and R² in the compounds of the general formula (I) both being cyclohexyl.

7. The plasticizer composition according to any of the preceding claims, R³ and R⁴ in the compounds of the general formula (II) both being 2-ethylhexyl, both being isononyl or both being 2-propylheptyl.

8. The plasticizer composition according to any of the preceding claims, the plasticizer composition comprising a further plasticizer which is different from the compounds (I), (I.a), and (II) and which is selected from phthalic dialkyl esters, phthalic alkyl aralkyl esters, trimellitic trialkyl esters, esters of 1,2-cyclohexanedicarboxylic acids, different from compounds (II), terephthalic dialkyl esters different from compounds (II), 1,3- and 1,4-cyclohexanedicarboxylic alkyl esters, benzoic alkyl esters, dibenzoic esters of glycols, hydroxybenzoic esters, esters of saturated monocarboxylic acids, esters of saturated and unsaturated dicarboxylic acids other than compounds (I) and (I.a), amides and esters of aromatic sulfonic acids, alkylsulfonic esters, glycerol esters, isosorbide esters, phosphoric esters, citric triesters, alkylpyrrolidone derivatives, 2,5-furandicarboxylic esters, 2,5-tetrahydrofurandicarboxylic esters, epoxidized vegetable oils, epoxidized fatty acid monoalkyl esters, and polyesters of aliphatic and/or aromatic polycarboxylic acids with at least dihydric alcohols.

9. The plasticizer composition according to any of the preceding claims, the amount of compounds of the general formula (I) in the plasticizer composition being 1 to 70 wt%.

10. The plasticizer composition according to any of the preceding claims, the amount of compounds of the general formula (II) in the plasticizer composition being 30 to 99 wt%.

11. The plasticizer composition according to any of the preceding claims, the weight ratio between compounds of the general formula (I) and compounds of the general formula (II) being in the range from 1:100 to 2:1.

12. A molding composition comprising at least one polymer and a plasticizer composition as defined in any of claims 1 to 11.

13. The molding composition according to claim 12, the polymer being a thermoplastic polymer selected from
- homopolymers or copolymers comprising in copolymerized form at least one monomer selected from C₂-C₁₀ monoolefins, 1,3-butadiene, 2-chloro-1,3-butadiene, vinyl alcohol and its C₂-C₁₀ alkyl esters, vinyl chloride, vinylidene chloride, vinylidene fluoride, tetrafluoroethylene, glycidyl acrylate, glycidyl methacrylate, acrylates and methacrylates of C₁-C₁₀ alcohols, vinylaromatics, acrylonitrile, methacrylonitrile, maleic anhydride, and α,β-ethylenically unsaturated monocarboxylic and dicarboxylic acids,
- homopolymers and copolymers of vinyl acetals,
- polyvinyl esters,
- polycarbonates,
- polyesters,
- polyethers,
- polyetherketones,
- thermoplastic polyurethanes,
- polysulfides,
- polysulfones,
- polyethersulfones,
- cellulose alkyl esters,
and mixtures thereof.

14. The molding composition according to claim 13, the thermoplastic polymer being selected from polyvinyl chloride (PVC), polyvinyl butyral (PVB), homopolymers and copolymers of vinyl acetate, homopolymers and copolymers of styrene, polyacrylates, thermoplastic polyurethanes (TPU), or polysulfides.

15. The molding composition according to either of claims 13 and 14, the thermoplastic polymer being polyvinyl chloride (PVC).

16. The molding composition according to claim 15, the amount of the plasticizer composition in the molding composition being 5.0 to 300 phr.

17. The molding composition according to any of claims 12 to 14, comprising at least one thermoplastic polymer other than polyvinyl chloride, the amount of the plasticizer composition in the molding composition being 0.5 to 300 phr.

18. The molding composition according to claim 12, the polymer being an elastomer, preferably selected from natural rubbers, synthetic rubbers, and mixtures thereof.

19. The molding composition according to claim 18, the amount of the plasticizer composition in the molding composition being 1.0 to 60 phr.

20. A plastisol composition comprising a plasticizer composition as defined in any of claims 1 to 11.

21. The use of a plasticizer composition as defined in any of claims 1 to 11 as plasticizer for thermoplastic polymers and elastomers.

22. The use of a plasticizer composition as defined in any of claims 1 to 11 as plasticizer in a plastisol.

23. The use of a molding composition as defined in any of claims 12 to 19 for producing moldings and foils, as for example housings of electrical devices, computer housings, tooling, piping, cables, hoses, wire sheathing, window profiles, plastics profiles for conveyor belts, vehicle-construction components, tires, furniture, cushion foam and mattress foam, tarpaulins, gaskets, composite foils, self-adhesive foils, laminating foils, flysheets, roofing sheets, records, synthetic leather, packaging containers, adhesive-tape foils, or coatings.

24. The use of a molding composition as defined in any of claims 12 to 19 for producing moldings and foils which come directly into contact with people or with foods.

25. The use as defined in claim 24, the moldings and foils which come directly into contact with humans or foods being medical products, hygiene products, packaging for food or drink, products for the interior sector, toys and childcare items, sports-and-leisure products, apparel, or fibers for textiles.

## Revendications

1. Composition de plastifiant, contenant :
a) un ou plusieurs composés de la formule générale (I) : 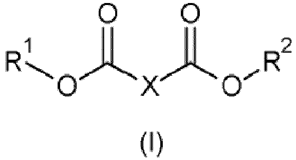 dans laquelle
X représente un groupe alkylène en C₂-C₈ non ramifié ou un groupe alkylène en C₆-C₈ ramifié ou un groupe alcénylène en C₂-C₈ non ramifié ou ramifié, contenant au moins une double liaison, et
R¹ et R² sont choisis indépendamment l'un de l'autre parmi cycloalkyle en C₅-C₇, les radicaux cycloalkyle étant indépendamment les uns des autres non substitués ou substitués avec au moins un radical alkyle en C₁-C₁₀, et
b) un ou plusieurs composés de la formule générale (II) : 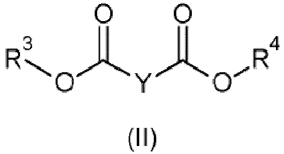 dans laquelle
R³ et R⁴ sont choisis indépendamment l'un de l'autre parmi les radicaux alkyle en C₄-C₁₂ ramifiés et non ramifiés,
Y est choisi parmi les groupes des formules (Y.a) et (Y.b) : 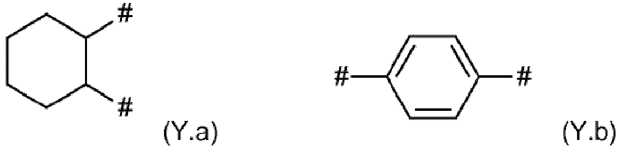
dans lesquelles # représente les points de liaison respectifs aux groupes ester,
à condition que la composition de plastifiant ne contienne pas de composé de la formule (I.a) : 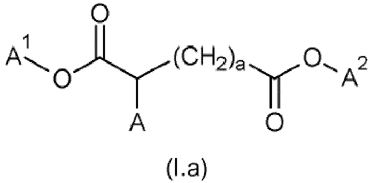 dans laquelle
A représente méthyle ou éthyle,
A¹ et A² sont choisis indépendamment l'un de l'autre parmi les radicaux cycloalkyle en C₅-C₇ ramifiés et non ramifiés, qui sont non substitués ou substitués avec au moins un radical alkyle en C₁-C₁₀,
a représente 1 ou 2.

2. Composition de plastifiant selon la revendication 1, dans laquelle un composé de la formule générale (II.a) est utilisé en tant que composé de la formule générale (II) : 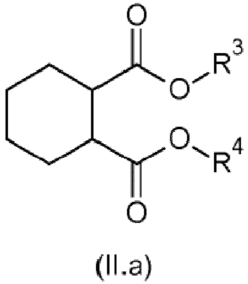 dans laquelle
R³ et R⁴ sont choisis indépendamment l'un de l'autre parmi les radicaux alkyle en C₄-C₁₂ ramifiés et non ramifiés,
et dans laquelle, de préférence,
R⁴ et R⁴ sont choisis indépendamment l'un de l'autre parmi les radicaux alkyle en C₇-C₁₂ ramifiés et non ramifiés.

3. Composition de plastifiant selon la revendication 1, dans laquelle un composé de la formule générale (II.b) est utilisé en tant que composé de la formule générale (II) : 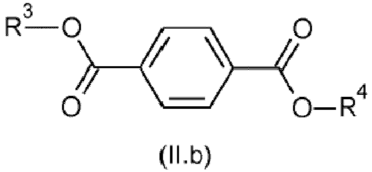 dans laquelle
R³ et R⁴ sont choisis indépendamment l'un de l'autre parmi les radicaux alkyle en C₄-C₁₂ ramifiés et non ramifiés.

4. Composition de plastifiant selon l'une quelconque des revendications précédentes, dans laquelle X représente un groupe alkylène en C₂-C₅ non ramifié dans les composés de la formule générale (I).

5. Composition de plastifiant selon l'une quelconque des revendications précédentes, dans laquelle R¹ et R² représentent indépendamment l'un de l'autre cyclopentyle, cyclohexyle ou cycloheptyle dans les composés de la formule générale (I).

6. Composition de plastifiant selon l'une quelconque des revendications précédentes, dans laquelle R¹ et R² représentent tous les deux cyclohexyle dans les composés de la formule générale (I).

7. Composition de plastifiant selon l'une quelconque des revendications précédentes, dans laquelle R³ et R⁴ représentent tous les deux 2-éthylhexyle, tous les deux isononyle ou tous les deux 2-propylheptyle dans les composés de la formule générale (II).

8. Composition de plastifiant selon l'une quelconque des revendications précédentes, dans laquelle la composition de plastifiant contient un plastifiant supplémentaire, différent des composés (I), (I.a) et (II), qui est choisi parmi les esters dialkyliques de l'acide phtalique, les esters alkylaralkyliques de l'acide phtalique, les esters trialkyliques de l'acide triméllitique, les esters d'acides 1,2-cyclohexanedicarboxyliques différents de composés (II), les esters dialkyliques de l'acide téréphtalique différents de composés (II), les esters alkyliques de l'acide 1,3- et 1,4-cyclohexanedicarboxylique, les esters alkyliques de l'acide benzoïque, les esters de l'acide dibenzoïque de glycols, les esters de l'acide hydroxybenzoïque, les esters d'acides monocarboxyliques saturés, les esters d'acides dicarboxyliques saturés et insaturés différents de composés (I) et (I.a), les amides et les esters d'acides sulfoniques aromatiques, les esters d'acides alkylsulfoniques, les esters de glycérine, les esters d'isosorbide, les esters de l'acide phosphorique, les triesters de l'acide citrique, les dérivés d'alkylpyrrolidone, les esters de l'acide 2,5-furane-dicarboxylique, les esters de l'acide 2,5-tétrahydrofuranedicarboxylique, les huiles végétales époxydées, les esters monoalkyliques d'acides gras époxydés, les polyesters d'acides polycarboxyliques aliphatiques et/ou aromatiques avec des alcools au moins bivalents.

9. Composition de plastifiant selon l'une quelconque des revendications précédentes, dans laquelle la teneur en composés de la formule générale (I) dans la composition de plastifiant est de 1 à 70 % en poids.

10. Composition de plastifiant selon l'une quelconque des revendications précédentes, dans laquelle la teneur en composés de la formule générale (II) dans la composition de plastifiant est de 30 à 99 % en poids.

11. Composition de plastifiant selon l'une quelconque des revendications précédentes, dans laquelle le rapport en poids entre les composés de la formule générale (I) et les composés de la formule générale (II) se situe dans la plage allant de 1:100 à 2:1.

12. Matériau de moulage, contenant au moins un polymère et une composition de plastifiant telle que définie dans l'une quelconque des revendications 1 à 11.

13. Matériau de moulage selon la revendication 12, dans lequel le polymère consiste en un polymère thermoplastique, qui est choisi parmi :
- les homo- ou copolymères qui contiennent au moins un monomère sous forme polymérisée, qui est choisi parmi les monooléfines en C₂-C₁₀, le 1,3-butadiène, le 2-chloro-1,3-butadiène, l'alcool vinylique et ses esters alkyliques en C₂-C₁₀, le chlorure de vinyle, le chlorure de vinylidène, le fluorure de vinylidène, le tétrafluoroéthylène, l'acrylate de glycidyle, le méthacrylate de glycidyle, les acrylates et les méthacrylates d'alcools en C₁-C₁₀, les composés aromatiques de vinyle, l'acrylonitrile, le méthacrylonitrile, l'anhydride de l'acide maléique et les acides mono- et dicarboxyliques α,β-éthyléniquement insaturés,
- les homo- et copolymères de vinylacétals,
- les polyesters de vinyle,
- les polycarbonates,
- les polyesters,
- les polyéthers,
- les polyéther-cétones,
- les polyuréthanes thermoplastiques,
- les polysulfures,
- les polysulfones,
- les polyéther-sulfones,
- les esters alkyliques de cellulose,
et les mélanges de ceux-ci.

14. Matériau de moulage selon la revendication 13, dans lequel le polymère thermoplastique est choisi parmi le polychlorure de vinyle (PVC), le polyvinylbutyral (PVB), les homo- et copolymères d'acétate de vinyle, les homo- et copolymères de styrène, les polyacrylates, les polyuréthanes thermoplastiques (TPU) ou les polysulfures.

15. Matériau de moulage selon l'une quelconque des revendications 13 ou 14, dans lequel le polymère thermoplastique consiste en le polychlorure de vinyle (PVC).

16. Matériau de moulage selon la revendication 15, dans lequel la teneur de la composition de plastifiant dans le matériau de moulage est de 5,0 à 300 pce.

17. Matériau de moulage selon l'une quelconque des revendications 12 à 14, contenant au moins un polymère thermoplastique différent du polychlorure de vinyle, la teneur de la composition de plastifiant dans le matériau de moulage étant de 0,5 à 300 pce.

18. Matériau de moulage selon la revendication 12, dans lequel le polymère consiste en un élastomère, de préférence choisi parmi les caoutchoucs naturels, les caoutchoucs synthétiques et les mélanges de ceux-ci.

19. Matériau de moulage selon la revendication 18, dans lequel la teneur de la composition de plastifiant dans le matériau de moulage est de 1,0 à 60 pce.

20. Composition de plastisol contenant une composition de plastifiant telle que définie dans l'une quelconque des revendications 1 à 11.

21. Utilisation d'une composition de plastifiant telle que définie dans l'une quelconque des revendications 1 à 11 en tant que plastifiant pour des polymères thermoplastiques et des élastomères.

22. Utilisation d'une composition de plastifiant telle que définie dans l'une quelconque des revendications 1 à 11 en tant que plastifiant dans un plastisol.

23. Utilisation d'un matériau de moulage, tel que défini dans l'une quelconque des revendications 12 à 19, pour la fabrication de corps moulés et de films, tels que par exemple des boîtiers d'appareils électriques, des boîtiers d'ordinateurs, des outils, des canalisations, des câbles, des tuyaux, des gainages de fils, des profilés de fenêtres, des profilés en matière plastique pour bandes de transport, des composants pour la construction de véhicules, des pneus, des meubles, des mousses pour rembourrages et matelas, des bâches, des joints d'étanchéité, des films composites, des films auto-adhésifs, des films de contre-collage, des toiles de tentes, des bandes de toiture, des disques, des cuirs artificiels, des contenants d'emballage, des films de bandes adhésives ou des revêtements.

24. Utilisation d'un matériau de moulage, tel que défini dans l'une quelconque des revendications 12 à 19, pour la fabrication de corps moulés et de films, qui rentrent directement en contact avec des hommes ou des produits alimentaires.

25. Utilisation telle que définie dans la revendication 24, dans laquelle les corps moulés et les films qui rentrent directement en contact avec des hommes ou des produits alimentaires consistent en des produits médicaux, des produits d'hygiène, des emballages de produits alimentaires, des produits pour l'espace intérieur, des jouets et des articles de puériculture, des produits pour le sport et les loisirs, des vêtements ou des fibres pour tissus.
